(19) Europäisches Patentamt
European Patent Office
Office européen des brevets

(11) EP 1 978 065 A1

(12) EUROPEAN PATENT APPLICATION
published in accordance with Art. 158(3) EPC

(43) Date of publication:
**08.10.2008 Bulletin 2008/41**

(21) Application number: **06834761.6**

(22) Date of filing: **15.12.2006**

(51) Int Cl.:
***C09D 133/02*** *(2006.01)* ***B32B 27/30*** *(2006.01)*
***C09D 5/16*** *(2006.01)* ***C09D 7/12*** *(2006.01)*
***C09D 135/00*** *(2006.01)*

(86) International application number:
**PCT/JP2006/325018**

(87) International publication number:
**WO 2007/074656 (05.07.2007 Gazette 2007/27)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.12.2005 JP 2005380182**

(71) Applicant: **CHUGOKU MARINE PAINTS, LTD.**
**Ohtake-shi,**
**Hiroshima 739-0652 (JP)**

(72) Inventors:
- **DOUMAE, Takaharu**
  **Hiroshima 739-0652 (JP)**
- **OYA, Masaaki**
  **Hiroshima 739-0652 (JP)**
- **NIIMOTO, Junji**
  **Hiroshima 739-0652 (JP)**
- **TSUBOI, Makoto**
  **Hiroshima 739-0652 (JP)**

(74) Representative: **HOFFMANN EITLE**
**Patent- und Rechtsanwälte**
**Arabellastrasse 4**
**81925 München (DE)**

# (54) HIGH SOLID ANTIFOULING COATING COMPOSITION, ANTIFOULING COATING FILM, BASE WITH COATING FILM, ANTIFOULING BASE, METHOD FOR FORMING COATING FILM ON BASE SURFACE, METHOD FOR PREVENTING FOULING OF BASE, AND HIGH SOLID MULTI-COMPONENT ANTIFOULING COATING COMPOSITION SET

(57) Disclosed is a high-solid antifouling paint composition **characterized by** including:
(A) a carboxyl group-containing copolymer that has a structural unit derived from an unsaturated carboxylic acid monomer (a1) and a structural unit derived from an other unsaturated compound monomer (a2) copolymerizable with the unsaturated carboxylic acid monomer (a1), and has a weight average molecular weight of 1,000 to 6,000 as measured with GPC,
(B) a polyvalent metal compound capable of reacting with the carboxyl group of the carboxyl group-containing copolymer (A), and
(C) an antifouling agent.

The high-solid antifouling paint composition of the present invention provides an antifouling coating film that imposes less environmental burden, affects human bodies less, and has excellent antifouling performance, excellent persistence thereof and excellent mechanical strength.

EP 1 978 065 A1

## Description

### TECHNICAL FIELD

The present invention relates to a high-solid antifouling paint composition, more particularly a high-solid antifouling paint composition used for forming an antifouling coating film that exhibits an excellent antifouling performance and the like on a surface of a base material such as an underwater structure, an outside board of a ship, a fishing net, and a fishing gear, with reduced environmental burden and reduced effect on human bodies, use thereof, and the like.

### BACKGROUND ART

The bottom of a ship, fishing nets, pipi5ngs for supplying/draining seawater, underwater structures and the like are sometimes damaged in their appearances and functions, upon exposure to water over a long period of time, due to attachment and proliferation of various aquatic organisms such as animals like oysters, mussels, barnacles and the like, plants such as lavers and the like, or bacteria and the like on their surfaces.

Particularly, when such aquatic organisms attach to the ship bottom and proliferate, the surface roughness of the ship bottom increases, possibly leading to decrease in ship speed and increase in fuel consumption. Moreover, a huge amount of labor and working hours are required for removing such aquatic organisms from the ship bottom. Furthermore, when aquatic organisms attach to fishing nets such as aquaculture nets, set nets and the like, and proliferate there, the mesh of the nets is clogged, possibly leading to a significant problem such as dying of living catches from lack of air and the like.

Furthermore, attachment and proliferation of aquatic organisms on pipings for supplying/draining seawater possibly causes troubles in distribution and circulation of cooling water in thermal and atomic power stations or the like.

In order to prevent these damages, ship bottoms and the like have conventionally been coated with, for example, a paint containing a copolymer of tributyltin methacrylate with methyl methacrylate or the like and cuprous oxide ($Cu_2O$) as an antifouling paint excellent in antifouling performance. The copolymer in this antifouling paint is a "hydrolyzable self-polishing paint", that is, the copolymer hydrolyzed in seawater, releasing organotin compounds such as bis(tributyltin) oxide (tributyltin ether, $Bu_3Sn$-O-$SnBu_3$; Bu represents a butyl group), a tributyltin halide ($Bu_3SnX$: X represents a halogen atom) or the like, to exhibit an antifouling effect, and the hydrolyzed copolymer itself, which has become water-soluble, is also dissolved into seawater. Accordingly, no resin remains on the coated surface of the ship bottom, and thus the surface can be always kept active.

A solvent-based paint, which has been generally used as a paint, is now under a worldwide restriction as a source of environmental pollution because such a paint releases a large amount of organic solvent in the air. As an environmentally friendly paint, a high-solid paint, a water-based paint, a powder paint and the like have been developed. However, there has been developed no antifouling paint having both a high antifouling performance and a high coating flim performance with a reduced content of organic solvent.

Examples 1 to 3 of Japanese Patent Laid-open Publication No. S52-32928 (Patent Document 1) discloses an antifouling paint composition containing a copolymer of (meth)acrylic acid with methyl methacrylate or the like, zinc acetate, and others. Examples 49 to 54 of Japanese Patent Laid-open Publication No. H2-196869 (Patent Document 2) disclose an antifouling paint composition containing a methacrylic acid/ ethyl methacrylate/methoxyethyl acrylate copolymer, and copper naphthenate or zinc rosinate. Neither of them provided coating films with a sufficient antifouling performance.

Japanese Patent No. 3040094 (Patent Document 3) discloses an antifouling paint composition containing a metal-containing resin formed from a carboxyl group-containing resin such as acrylic resin and the like, and a metal-containing antifouling agent. Japanese Patent Laid-open Publication No. S62-501293 (Patent Document 4) discloses an antifouling paint composition using a carboxyl group-containing polymer that contains, typically, about 10% to 35% by weight of acrylic acid or methacrylic acid monomer. Any of these antifouling paint compositions had a problem in storage stability over time and a difficulty in reducing the volatile organic compound content (VOC) to a low level.

Japanese Patent Laid-open Publication No. 2002-241676 (Patent Document 5) discloses, as an antifouling paint of high-solid type, an antifouling paint that contains a varnish of a metal-containing acrylic resin having, in the side chain of the acrylic resin, at least one group represented by formula (1) below:

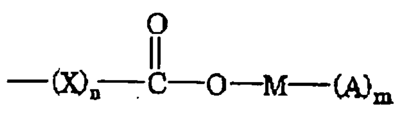

(1)

(in the formula, X is a group represented by the following formula:

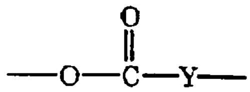

n is 0 or 1; Y is hydrocarbon; M is metal; m is an integer given by subtracting 1 from the valency of metal M; and A is an organic acid residue derived from a monobasic acid), wherein the antifouling paint has a non-volatile content of 40% by weight or more, a viscosity (25°C) of 18 poise or less, and an organic solvent content (VOC) of 400 g/L or less. However, this antifouling paint had extremely poor coating workability because of its too high viscosity. Therefore, a coating film was hard to form, and the formed coating film had difficulties such as a low stationary antifouling performance and a low wearing degree.

Patent Document 1: Japanese Patent Laid-open Publication No. S52-32928
Patent Document 2: Japanese Patent Laid-open Publication No. H2-196869
Patent Document 3: Japanese Patent No.3040094
Patent Document 4: Japanese Patent Laid-open Publication No. S62-501293
Patent Document 5: Japanese Patent Laid-open Publication No. 2002-241676

DISCLOSURE OF THE INVENTION

The present invention is directed to solving the above problems accompanied by the conventional arts. It is therefore an object of the present invention to provide an antifouling coating film that imposes reduced environmental burden, affects human bodies less, and exhibits excellent antifouling performance, excellent persistence thereof and excellent mechanical strength; and a high-solid antifouling paint composition capable of forming such an antifouling coating film.

The high-solid antifouling paint composition of the present invention is characterized by comprising:

(A) a carboxyl group-containing copolymer that has a structural unit derived from an unsaturated carboxylic acid monomer (a1) and a structural unit derived from an other unsaturated compound monomer (a2) copolymerizable with the unsaturated carboxylic acid monomer (a1) and has a weight average molecular weight of 1,000 to 6,000 as measured with GPC,
(B) a polyvalent metal compound capable of reacting with the carboxyl group of the carboxyl group-containing copolymer (A), and
(C) an antifouling agent.

The high-solid antifouling paint composition is preferably a high-solid multi-package antifouling paint composition obtained by mixing a first liquid containing the carboxyl group-containing copolymer (A), and a second liquid containing the polyvalent metal compound (B).

The high-solid antifouling paint composition is preferably a high-solid two-package antifouling paint composition obtained by mixing a first liquid and a second liquid, wherein the first liquid comprises the carboxyl group-containing copolymer (A), and the second liquid comprises the polyvalent metal compound (B).

The high-solid antifouling paint composition is preferably a high-solid two-package antifouling paint composition obtained by mixing a first liquid and a second liquid, wherein
the first liquid comprises the carboxyl group-containing copolymer (A),
the second liquid comprises the polyvalent metal compound (B), and
at least one of the first liquid and the second liquid contains the antifouling agent (C).

It is also preferred that the high-solid antifouling paint composition be a high-solid two-package antifouling paint composition obtained by mixing a first liquid and a second liquid, wherein
the first liquid comprises the carboxyl group-containing copolymer (A) and does not contain the polyvalent metal compound (B),
the second liquid comprises the carboxyl group-containing copolymer (A) and the polyvalent metal compound (B) and does not contain water in a substantial amount, and
at least one of the first liquid and the second liquid contains the antifouling agent (C); and in this case, the second liquid preferably contains the carboxyl group-containing copolymer (A) in an amount of 1 to 30% by weight of the total amount of the carboxyl group-containing copolymer (A).

The high-solid antifouling paint composition is preferably a high-solid three-package antifouling paint composition obtained by mixing a first liquid, a second liquid, and a third liquid, wherein
the first liquid comprises the carboxyl group-containing copolymer (A),
the second liquid comprises the polyvalent metal compound (B),
the third liquid comprises at least one ingredient selected from a defoaming agent, a viscosity modifier, a coating film curing rate modifier, and a coating film hardness modifier, and
at least one of the first liquid and the second liquid contains the antifouling agent (C).
It is also preferred that the high-solid antifouling paint composition be a high-solid three-package antifouling paint composition obtained by mixing a first liquid, a second liquid, and a third liquid, wherein
the first liquid comprises the carboxyl group-containing copolymer (A) and does not contain the polyvalent metal compound (B),
the second liquid comprises the carboxyl group-containing copolymer (A) and polyvalent metal compound (B), and does not contain water in a substantial amount,
the third liquid comprises at least one component selected from a defoaming agent, a viscosity modifier, a coating film curing rate modifier, and a coating film hardness modifier, and
at least one of the first liquid, the second liquid, and the third liquid contains the antifouling agent (C) ; and in this case, the second liquid preferably contains the carboxyl group-containing copolymer (A) in an amount of 1 to 30% by weight of the total amount of the carboxyl group-containing copolymer (A).
The volatile organic compound content (VOC) of the high-solid antifouling paint composition of the present invention is preferably 400 g/L or less, and particularly preferably 100 to 350 g/L.
The weight average molecular weight of the carboxyl group-containing copolymer (A) is preferably 1,300 to 5,500, and particularly preferably 1,500 to 5,000 as measured with GPC.
In the high-solid multi-package, two-package, or three-package antifouling paint composition of the present invention, it is preferred that
the first liquid comprise a solution of the carboxyl group-containing copolymer (A) whose viscosity at 25°C is 800 mPa·s or less measured for a solution with a non-volatile content of 50 wt% and 20,000 mPa·s or less measured for a solution with a non-volatile content of 70 wt%, and optionally another ingredient(s), and that
the carboxyl group-containing copolymer (A) contain 5 to 50% by weight of the structural unit derived from the unsaturated carboxylic acid monomer (a1) based on 100% by weight of the carboxyl group-containing copolymer (A).
The carboxyl group-containing copolymer (A) is preferably a copolymer produced by radical solution polymerization in a solvent using a radical polymerization initiator in an amount of 10 parts by weight or more based on 100 parts by weight of the total amount of raw monomers.
The unsaturated carboxylic acid monomer (a1) is preferably a monocarboxylic acid monomer, and particularly preferably (meth)acrylic acid.
It is preferred that
the unsaturated carboxylic acid monomer (a1) be (meth)acrylic acid, and
the other unsaturated compound monomer (a2) be at least one kind of monomer selected from the group consisting of an alkyl (meth) acrylate and a derivative thereof, styrene and a derivative thereof, vinyl acetate, vinyl propionate, (meth) acrylamide and a derivative thereof, and (meth)acrylonitrile.
The polyvalent metal compound (B) is preferably a compound of a divalent or trivalent metal, and particularly preferably at least one kind of compound selected from the group consisting of oxides, hydroxides, halides, and carboxylates of the divalent or trivalent metals.
The polyvalent metal is preferably at least one kind of metal selected from the group consisting of zinc, copper, germanium, magnesium, calcium, cobalt, and aluminum.
The polyvalent metal compound (B) is preferably an oxide of at least one kind of polyvalent metal selected from the group consisting of zinc, copper, germanium, magnesium, calcium, and cobalt, and particularly preferably zinc oxide, such as activated zinc white and the like, and/or cupric oxide.
The high-solid antifouling paint composition of the present invention preferably contains 1 to 500 parts by weight of the polyvalent metal compound (B) based on 100 parts by weight of the carboxyl group-containing copolymer (A).
The high-solid antifouling paint composition of the present invention preferably contains the polyvalent metal compound (B) in a ratio of 0.1 to 500 moles per mole of carboxyl group of the carboxyl group-containing copolymer (A).
The high-solid antifouling paint composition of the present invention preferably contains a copper compound (c1) as the antifouling agent (C). The copper compound (c1) includes cuprous oxide.
The high-solid antifouling paint composition of the present invention preferably contains zinc sulfide (c2) as the antifouling agent (C).
It is also preferred that the high-solid antifouling paint composition of the present invention contain an organic antifouling agent (c3) as the antifouling agent (C). In this case, cuprous oxide may not be contained in a substantial amount as the antifouling agent (C). Here, the "substantial amount" means "amount required for functioning as an

antifouling agent." Preferred examples of the organic antifouling agent (c3) include at least one kind of compound selected from the group consisting of a pyrithione compound, an amine-organoborane complex, and 4,5-dichloro-2-n-octyl-4-isothiazolin-3-one. It is particularly preferred to use zinc pyrithione, and pyridine-triphenylborane complex or 4-isopropylpyridine-diphenylmethylborane complex in combination, or to use zinc pyrithione and 4,5-dichloro-2-n-octyl-4-isothiazolin-3-one in combination.

The high-solid antifouling paint composition of the present invention preferably contains a copper compound (c1) and an organic antifouling agent (c3) as the antifouling agent (C). Examples of the organic antifouling agent (c3) include, preferably, at least one kind of compound selected from the group consisting of a pyrithione compound, an amine-organoborane complex, and 4,5-dichloro-2-n-octyl-4-isothiazolin-3-one, and, particularly preferably, at least one kind of compound selected from the group consisting of copper pyrithione, zinc pyrithione, pyridine-triphenylborane complex, 4-isopropylpyridine-diphenylmethylborane complex, and 4,5-dichloro-2-n-octyl-4-isothiazolin-3-one.

In the high-solid antifouling paint composition of the present invention, cuprous oxide, and copper pyrithione or zinc pyrithione are preferably used in combination as the antifouling agent (C). For example, cuprous oxide, copper pyrithione or zinc pyrithione, and 4,5-dichloro-2-n-octyl-4-isothiazolin-3-one are preferably used in combination.

In the high-solid antifouling paint composition of the present invention, zinc sulfide (c2) and an organic antifouling agent (c3) are preferably used in combination as the antifouling agent (C). Examples of the organic antifouling agent (c3) include at least one kind of compound selected from the group consisting of a pyrithione compound, an amine-organoborane complex, and 4,5-dichloro-2-n-octyl-4-isothiazolin-3-one; for example, at least one kind of compound selected from the group consisting of copper pyrithione, zinc pyrithione, pyridine-triphenylborane complex, 4-isopropylpyridine-diphenylmethylborane complex, and 4,5-dichloro-2-n-octyl-4-isothiazolin-3-one. In this case, the antifouling agent (C) may not contain copper or a copper compound in a substantial amount; and in such a case, the organic antifouling agent (c3) is preferably zinc pyrithione, it is preferred to use zinc pyrithione, and pyridine-triphenylborane complex or 4-isopropylpyridine-diphenylmethylborane complex in combination, and it is also preferred to use zinc pyrithione and 4,5-dichloro-2-n-octyl-4-isothiazolin-3-one in combination. Here, the "substantial amount" means "amount required for functioning as an antifouling agent".

The high-solid antifouling paint composition of the present invention may further contain at least one kind of additive (D) selected from the group consisting of water (d1), an acetoacetyl group-containing compound (d2), an alkoxysilane compound or a derivative thereof (d3), a dispersant (d4), an anti-sagging agent (d5), a plasticizer (d6), an extender pigment (d7) except the polyvalent metal compound (B), a color pigment (d8), and a dehydrating agent (d9).

Preferred examples of the dispersant (d4) includes at least one kind of dispersant selected from the group consisting of a coal-based resin, a petroleum resin, a terpene resin, a vinyl ether (co)polymer, a (meth)acrylate ester (co)polymer, and a monocarboxylic acid compound having a molecular weight of 3,000 or less.

Preferred examples of the plasticizer (d6) include a chlorinated paraffin and/or a phosphorous-based plasticizer.

Preferred examples of the extender pigment (d7) include talc.

Preferred examples of the color pigment (d8) include at least one kind of color pigment selected from the group consisting of iron oxide red, titan white, yellow iron oxide, and an organic pigment.

The high-solid antifouling paint composition of the present invention preferably contains at least one kind of solvent (E) selected from the group consisting of toluene, xylene, trimethylbenzene, ethanol, propanol, butanol, ethylene glycol monobutyl ether, methyl isobutyl ketone, and propylene glycol monomethyl ether.

The antifouling coating film of the present invention is characterized in that it is formed by curing the above high-solid antifouling paint composition.

The base material with a coating film of the present invention is characterized in that the surface of the base material is coated with a coating film formed by curing the above high-solid antifouling paint composition.

The antifouling base material of the present invention is characterized in that the surface of the base material contacting with seawater or freshwater is coated with a coating film formed by curing the above high-solid paint composition. Preferred examples of the base material include an underwater structure, an outside board of a ship, a fishing net, and a fishing gear.

The method for forming a coating film on a surface of a base material of the present invention is characterized by comprising:

> coating or impregnating the surface of the base material with the above high-solid antifouling paint composition, followed by curing the high-solid antifouling paint composition to form a coating film.

The antifouling method for a base material of the present invention is characterized by comprising:

> coating or impregnating the surface of the base material with the above high-solid antifouling paint composition, followed by curing the high-solid antifouling paint composition to form an antifouling coating film. Preferred examples of the base material include an underwater structure, an outside board of a ship, a fishing net, and a fishing gear.

The high-solid multi-package antifouling paint set of the present invention is characterized by comprising:

a first liquid comprising a carboxyl group-containing copolymer (A) that has a structural unit derived from an unsaturated carboxylic acid monomer (a1) and a structural unit derived from an other unsaturated compound monomer (a2) copolymerizable with the unsaturated carboxylic acid monomer (a1), and has a weight average molecular weight of 1,000 to 6,000 as measured with GPC,
a second liquid comprising a polyvalent metal compound (B) capable of reacting with the carboxyl group of the carboxyl group-containing copolymer (A), and
optionally an other component(s),
at least one of the said first liquid, the said second liquid, and the said other component(s) containing an antifouling agent (C). The "other component(s)" may be in a form of solution.

The high-solid two-package antifouling paint set of the present invention is characterized by comprising:

a first liquid comprising a carboxyl group-containing copolymer (A) that has a structural unit derived from an unsaturated carboxylic acid monomer (a1) and a structural unit derived from another unsaturated compound monomer (a2) copolymerizable with the unsaturated carboxylic acid monomer (a1), and has a weight average molecular weight of 1,000 to 6,000 as measured with GPC, and
a second liquid comprising a polyvalent metal compound (B) capable of reacting with the carboxyl group of the carboxyl group-containing copolymer (A),
the said first liquid and/or the said second liquid containing an antifouling agent (C).

The high-solid two-package antifouling paint may be the one wherein
the first liquid comprises the carboxyl group-containing copolymer (A) and does not contain the polyvalent metal compound (B), and
the second liquid comprises the carboxyl group-containing copolymer (A) and the polyvalent metal compound (B), and does not contain water in a substantial amount.

The high-solid three-package antifouling paint set of the present invention is characterized by comprising:

a first liquid comprising a carboxyl group-containing copolymer (A) that has a structural unit derived from an unsaturated carboxylic acid monomer (a1) and a structural unit derived from an other unsaturated compound monomer (a2) copolymerizable with the unsaturated carboxylic acid monomer (a1), and has a weight average molecular weight of 1,000 to 6,000 as measured with GPC,
a second liquid comprising a polyvalent metal compound (B) capable of reacting with the carboxyl group of the carboxyl group-containing copolymer (A), and
a third liquid comprising at least one kind of ingredient selected from a defoaming agent, a viscosity modifier, a coating film curing rate modifier, and a coating film hardness modifier,
at least one of the said first liquid, the said second liquid, and the said third liquid containing an antifouling agent (C).

The high-solid three-package antifouling paint may be the one wherein
the first liquid comprises the carboxyl group-containing copolymer (A) and does not contain the polyvalent metal compound (B), and
the second liquid comprises the carboxyl group-containing copolymer (A) and the polyvalent metal compound (B), and does not contain water in a substantial amount.

## EFFECTS OF THE INVENTION

The high-solid antifouling paint composition relating to the present invention can provide an antifouling coating film that exhibits excellent antifouling performance and excellent persistence thereof and has excellent mechanical strength as well as suppresses environmental burden and effects on human bodies.

In addition, the antifouling coating film of the present invention exhibits an excellent antifouling performance and excellent persistence thereof and has excellent mechanical strength.

By the method of the present invention for forming a coating film on a surface of a base material, an antifouling coating film with excellent antifouling performance, excellent persistence of antifouling performance and excellent mechanical strength can be formed.

The antifouling method for a base material of the present invention can prevent fouling of a surface of a base material, including, as preferred ones, an underwater structure, an outside board of a ship, a fishing net, a fishing gear and the like, over a long period of time.

By using the high-solid multi-package antifouling paint set (the high-solid two-package antifouling paint set or the high-solid three-package antifouling paint set) of the present invention, that is, by coating a desired base material with a mixture prepared by mixing the first liquid and the second liquid and optionally the other component(s), there can be formed an antifouling coating film that exhibits excellent antifouling performance and excellent persistence thereof and has excellent mechanical strength as well as suppresses environmental burden and effects on human bodies.

BRIEF DESCRIPTION OF THE DRAWINGS

FIG. 1 is the IR spectrum chart of copolymer S-1.
FIG. 2 is the IR spectrum chart of copolymer S-2.
FIG. 3 is the IR spectrum chart of copolymer S-3.
FIG. 4 is the IR spectrum chart of copolymer S-4.
FIG. 5 is the IR spectrum chart of copolymer S-5.
FIG. 6 is the IR spectrum chart of copolymer S-6.
FIG. 7 is the IR spectrum chart of copolymer S-7.
FIG. 8 is the IR spectrum chart of PEA in Reference Production Example 1.
FIG. 9 is the IR spectrum chart of copolymer H-1.
FIG. 10 is the IR spectrum chart of copolymer H-2.
FIG. 11 is the IR spectrum chart of copolymer H-3.
FIG. 12 is the GPC chromatogram of copolymer S-1.
FIG. 13 is the GPC chromatogram of copolymer S-2.
FIG. 14 is the GPC chromatogram of copolymer S-3.
FIG. 15 is the GPC chromatogram of copolymer S-4.
FIG. 16 is the GPC chromatogram of copolymer S-5.
FIG. 17 is the GPC chromatogram of copolymer S-6.
FIG. 18 is the GPC chromatogram of copolymer S-7.
FIG. 19 is the GPC chromatogram of PEA in Reference Production Example 1.
FIG. 20 is the GPC chromatogram of copolymer H-1.
FIG. 21 is the GPC chromatogram of copolymer H-2.
FIG. 22 is the GPC chromatogram of copolymer H-3.

BEST MODE FOR CARRYING OUT THE INVENTION

Hereinafter, more detailed explanation will be given on the high-solid antifouling paint composition, the antifouling coating film, the base material with a coating film, the antifouling base material, the method for forming an antifouling coating film, the antifouling method for a base material, and the high-solid multi-package (two-package or three-package) antifouling paint composition set, which are all related to the present invention.

[High-solid Antifouling Paint Composition]

The high-solid antifouling paint composition of the present invention contains a specific carboxyl group-containing copolymer (A) (hereinafter, also called "copolymer (A)"), a polyvalent metal compound (B) capable of reacting with the carboxyl group of the copolymer (A), and an antifouling agent (C), and may further contains another ingredient (s) such as a defoaming agent and the like as necessary.
Firstly, each ingredient will be explained.

<(A) Carboxyl group-containing copolymer>

The specific carboxyl group-containing copolymer (A) used in the present invention has a structural unit derived from an unsaturated carboxylic acid monomer (a1) and a structural unit derived from an other unsaturated compound monomer (a2) copolymerizable with the unsaturated carboxylic acid monomer (a1), and has a weight average molecular weight of 1,000 to 6,000 as measured with GPC.
As the unsaturated carboxylic acid monomer (a1), any publicly-known monomer may be used, provided it is a compound having a carboxyl group(s) and a polymerizable double bond, including a monobasic acid and a polybasic acid.
Specifically, examples of the monobasic acid (monocarboxylic acid) include
(meth)acrylic acid;

a reaction product of 2-hydroxyethyl(meth)acrylate and an acid anhydride, such as 2-(meth)acryloyloxyethyl succinate, 2-(meth)acryloyloxyethyl phthalate, 2-(meth)acryloyloxypropyl hydrogen tetrahydrophthalate, and 2-(meth)acryloyloxypropyl hydrogen hexahydrophthalate; and
a monoester derived from a dibasic acid anhydride, such as monomethyl itaconate, monoethyl citraconate, and monoisopropyl maleate;
and others.

In the present invention, a dimer, a trimer or an oligomer of (meth)acrylic acid, which is formed by Michael Addition of (meth)acrylic acids, may be used as the unsaturated carboxylic acid monomer (a1).

Examples of the polybasic acid include maleic acid, fumaric acid, itaconic acid, citratonic acid and the like.

Examples of the other unsaturated compound monomer (a2) copolymerizable with the unsaturated carboxylic acid monomer (a1) include an alkyl (meth) acrylate such as methyl (meth) acrylate and ethyl (meth)acrylate, and derivatives thereof (for example, a hydroxyalkyl (meth)acrylate, an alkoxyalkyl (meth)acrylate, an alkylpolyoxyalkylene (meth) acrylate, and a hydrogenpolyoxyalkylene (meth)acrylate); styrene and styrene derivatives; a vinyl ester such as vinyl acetate and vinyl propionate; (meth)acrylamide and derivatives thereof; and (meth)acrylonitrile; and others.

The weight average molecular weight of the carboxyl group-containing copolymer (A) is 1, 000 to 6, 000, preferably 1, 300 to 5,500, more preferably 1,500 to 5,000, and particularly preferably 1,500 to 2,500, as measured with GPC in terms of polystyrene. When the weight average molecular weight of the carboxyl group-containing copolymer (A) is within the above range, an environmentally friendly and excellent antifouling paint having a reduced amount of organic solvent can be obtained.

The conditions for GPC measurement are as follows:

Apparatus: HLC-8120GPC manufactured by Tosoh Corp.,
Column: Super H2000+H4000, 6 mm I. D., 15 cm, manufactured by Tosoh Corp.,
Eluent: THF,
Flow rate: 0.500 mL/min,
Detector: IR, and
Column oven temperature: 40°C.

Desirably, the viscosity at 25°C of a solution containing carboxyl group-containing copolymer (A) with a non-volatile content of 50% by weight is 800 mPa·s or less, and preferably 600 mPa·s or less; and the viscosity at 25°C of a solution containing carboxyl group-containing copolymer (A) with a non-volatile content of 70% by weight is 20,000 mPa·s or less, and preferably 10,000 mPa·s or less. If the viscosity of the solution with a non-volatile content of 50% by weight is 800 mPa·s or more, it tends to be difficult to prepare an antifouling paint composition that has a volatile organic compound content (VOC) of 400 g/L or less and is coatable, and the antifouling paint composition, even if prepared, tends to have a poor antifouling performance.

In order to make the viscosity of the solution of the carboxyl group-containing copolymer (A) with a non-volatile content of 70% by weight not more than 20, 000 mPa·s and to prepare an coatable antifouling paint composition with not more than 400 g/L of VOC, it is desirable that the carboxyl group-containing copolymer (A) is produced using a radical polymerization initiator in an amount of 10 parts by weight or more based on 100 parts by weight of the total amount of the monomers.

As the radical polymerization initiator, a conventional publicly-known initiator, such as an azo compound, a peroxide and the like, may be used. Examples of the azo compound include
2,2'-azobisisobutyronitrile,
2,2'-azobis(2-methylbutyronitrile),
2,2'-azobis(2,4-dimethylvaleronitrile) and the like. Examples of the peroxide include benzoylperoxide, tert-butylperoxy acetate, tert-butylperoxy octoate, cumene hydroperoxide,
tert-butyl peroxide, tert-butylperoxy benzoate,
tert-butylperoxy 2-ethylhexanoate, tert-butylperoxy isopropyl carbonate, tert-butyl hydroperoxide, persulfate (potassium salt or ammonium salt) and the like.

The radical polymerization initiator may be added to a reaction vessel either as a homogeneous dispersion in a monomer mixture or separately from the monomer mixture on production. If necessary, the radical polymerization initiator may be used as a solution or slurry.

Method for Producing Carboxyl group-containing Copolymer (A)

The carboxyl group-containing copolymer (A) can be produced by solution polymerization method. As a solvent for the solution polymerization, an appropriate solvent that can dissolve or disperse the carboxyl group-containing copolymer (A) may be used. Either water or an organic solvent may be used; however, it is desirable to use a versatile

organic solvent for paints, considering drying property of the paint composition.

Examples of the versatile solvent for paint include an aliphatic solvent such as turpene; an aromatic solvent such as toluene and xylene; an alcoholic solvent such as isopropyl alcohol, n-butyl alcohol, and isobutyl alcohol; an ester solvent such as ethyl acetate and butyl acetate; a ketone solvent such as methyl ethyl ketone, methyl isobutyl ketone, and methyl amyl ketone; an ether or ether-ester solvent such as ethylene glycol monomethyl ether, ethylene glycol monobutyl ether, propylene glycol monomethyl ether, and propylene glycol monomethyl ether acetate; and others.

These solvents may be used alone or in combination of two or more. These solvents may be used in an arbitrary ratio with respect to the monomer mixture, and may be added during or after reaction as appropriate. In order to obtain the carboxyl group-containing copolymer (A) having a lower molecular weight, polymerization is carried out in a large amount of solvent, and after that unnecessary solvent may be distilled off as necessary.

In terms of easiness in polymerization and simplicity in using for the paint composition, the carboxyl group-containing copolymer (A) is preferably produced by radical solution polymerization method in a solvent, and in production it is desirable that a radical polymerization initiator is used in an amount of 10 parts by weight or more, and preferably 20 to 40 parts by weight based on 100 parts by weight of the total amount of the raw monomers (not including the weight of the radical polymerization initiator itself).

For the reaction, one may use a publicly-known molecular weight modifier including a chain-transferring agent such as an alkylmercaptan, a polymerization modifier such as α-methylstyrene and α-methylstyrene dimmer (2,4-diphenyl-4-methyl-1-pentene) and the like, as necessary.

The reaction temperature is preferably 50°C to 250°C, and more preferably 80°C to 200°C.

The reaction may be carried out at a high temperature under positive pressure so as to obtain the carboxyl group-containing copolymer (A) with a lower molecular weight.

In view of water resistance and a long-term antifouling performance of a coating film formed from the paint composition of the present invention, in the carboxyl group-containing copolymer (A) (100% by weight), the content of the structural unit derived from the unsaturated carboxylic acid monomer (a1) is preferably 5 to 50% by weight, more preferably 10 to 40% by weight, and particularly preferably 15 to 35% by weight; while the content of the structural unit derived from an other unsaturated compound monomer (a2) is preferably 95 to 50% by weight, more preferably 90 to 60% by weight, and particularly preferably 85 to 65% by weight.

<(B) Polyvalent Metal Compound>

The polyvalent metal compound (B) reacts with the carboxyl group of the carboxyl group-containing copolymer (A), and functions as a curing agent.

In the reaction between the carboxyl group-containing copolymer (A) and the polyvalent metal compound (B), a metal salt crosslinking structure (for example, $-COO^{-}\cdot\cdot M^{2+}\cdot\cdot O^{-}CO-$) will be formed from $-COO^{-}$ group, which is a group generated by elimination of a hydrogen ion from the carboxyl group of the carboxyl group-containing copolymer (A), and the polyvalent metal ion $M^{x+}$ (x represents the valency of metal element M).

In some cases, the reaction between the polyvalent metal compound (B) and the carboxyl group-containing copolymer (A) (carboxyl group therein) can be recognized, for example, by the change in color of the solution before and after the polyvalent metal compound (B) is mixed with the solution of the copolymer (A). In some cases, the progress of reaction can be confirmed by comparing the IR spectra of the copolymer (A) before and after mixing, that is, by decrease in the absorption band assignable to O-H stretching of carboxyl group in 3,000 to 3,500 $cm^{-1}$ after mixing, by decrease in the absorption band assignable to C=O stretching of carboxyl group around 1700 $cm^{-1}$ after mixing, or by increase in the absorption band assignable to C=O stretching of metal carboxylate around 1600 $cm^{-1}$ after mixing. Further, in some cases, the progress of reaction can be confirmed by viscosity increase of the solution of the copolymer (A) with time after mixing.

Examples of the polyvalent metal include copper, zinc, magnesium, calcium, germanium, aluminum, cobalt, iron, titanium, and the like. Among them, zinc, copper, germanium, magnesium, calcium, cobalt, and aluminum are preferred. Copper and zinc are particularly preferred.

Examples of the polyvalent metal compound (B) include oxides, hydroxides, halides, inorganic acid salts such as carbonates and sulfates, and organic acid salts such as acetates and salicylates of the aforementioned metals. Oxides, hydroxides, carbonates, and organic acid salts are preferred, and oxides and hydroxides are more preferred.

The polyvalent metal compound (B) is preferably an oxide (s) of at least one kind of polyvalent metal selected from the group consisting of zinc, copper, germanium, magnesium, calcium, and cobalt, more preferably zinc oxide and/or cupric oxide, and particularly preferably zinc oxide.

Zinc oxide with a various particle size may be used. Fine particulate zinc oxide such as activated zinc white and the like is preferably used because of advantages including that the reaction between the carboxyl group of the carboxyl group-containing copolymer (A) and zinc oxide is more promoted than a case with coarse zinc oxide, whereby the hardness of coating film increases in a shorter time and the coating film develops damage resistance in an earlier stage.

In the antifouling paint composition of the present invention, the content of the polyvalent metal compound (B) is preferably 1 to 500 parts by weight, and more preferably 5 to 400 parts by weight based on 100 parts by weight of the carboxyl group-containing copolymer (A).

The content of the polyvalent metal compound (B) is 0.1 to 500 moles, and preferably 0.5 to 400 moles per mole of carboxyl group of the carboxyl group-containing copolymer (A).

<(C) Antifouling Agent>

The antifouling paint composition of the present invention contains an antifouling agent (C).

In the antifouling paint composition of the present invention, it is desirable that the antifouling agent (C) is used in an amount of 1 to 500 parts by weight, and preferably 5 to 400 parts by weight based on 100 parts by weight of the carboxyl group-containing copolymer (A).

The antifouling agent (C) is not particularly limited and may be either an organic or inorganic antifouling agent. There may be used
cuprous oxide, copper powder, cuprous thiocyanate (copper rhodanate);
zinc sulfide (c2); and
an organic antifouling agent (c3) including a metal pyrithione such as copper pyrithione, zinc pyrithione and the like; tetramethylthiuram disulfide; a carbamate antifouling agent such as zinc dimethyldithiocarbamate and the like; 2,4,5,6-tetrachloroisophthalonitrile, N,N-dimethyldichlorophenylurea, 4,5-dichloro-2-n-octyl-4-isothiazolin-3-one, 2,4,6-trichlorophenylmaleimide, and an amine-organoborane complex such as pyridine-triphenylborane and 4-isopropylpyridine-diphenylmethylborane and the like.

The antifouling agent (C) is preferably at least one kind of copper compound (c1) selected from the group consisting of cuprous oxide, copper thiocyanate, and copper pyrithione, in view of antifouling effect on a wide range of organisms. In order to reinforce the antifouling performance of the copper compound (c1), it is preferred to use at least one kind of organic antifouling agent (c3) selected from the group consisting of zinc pyrithione, pyridine-triphenylborane complex, 4-isopropylpyridine-diphenylmethylborane complex, and 4,5-dichloro-2-n-octyl-4-isothiazolin-3-one together with the copper compound (c1).

In view of being heavy metal-free antifouling agents containing no copper compounds, preferred is at least one kind of organic antifouling agent (c3) selected from the group consisting of zinc pyrithione, pyridine-triphenylborane complex, 4-isopropylpyridine-diphenylmethylborane, and 4,5-dichloro-2-n-octyl-4-isothiazolin-3-one.

In the high-solid antifouling paint composition of the present invention, one kind of antifouling agent may be used alone as the antifouling agent (C), but it is preferred that a plural kinds of antifouling agents be used in a specific combination. The preferred specific combinations include followings:

(i) a combination of zinc pyrithione, and pyridine-triphenylborane complex or 4-isopropylpyridine-diphenylmethylborane complex;
(ii) a combination of zinc pyrithione and 4,5-dichloro-2-n-octyl-4-isothiazolin-3-one;
(iii) a combination of a copper compound (c1) and at least one kind of organic antifouling agent (c3) selected from the group consisting of copper pyrithione, zinc pyrithione, pyridine-triphenylborane complex, 4-isopropylpyridine-diphenylmethylborane complex, and 4,5-dichloro-2-n-octyl-4-isothiazolin-3-one;
(iv) a combination of cuprous oxide, and copper pyrithione or zinc pyrithione;
(v) a combination of cuprous oxide, copper pyrithione or zinc pyrithione, and 4,5-dichloro-2-n-octyl-4-isothiazolin-3-one; and
(vi) a combination of zinc sulfide (c2) and at least one kind of organic antifouling agent (c3) selected from the group consisting of copper pyrithione, zinc pyrithione, pyridine-triphenylborane complex, 4-isopropylpyridine-diphenylmethylborane complex, and 4,5-dichloro-2-n-octyl-4-isothiazolin-3-one.

In combination (vi), zinc pyrithione is preferably used as the organic antifouling agent (c3), and it is also preferred to use zinc pyrithione in combination with pyridine-triphenylborane complex or 4-isopropylpyridine-diphenylmethylborane complex; and to use zinc pyrithione in combination with 4,5-dichloro-2-n-octyl-4-isothiazolin-3-one.

In these specific combinations, the combinations containing no cuprous oxide result in reduction of environmental burden and in good appearance of the antifouling coating film, which is coated on a ship and contacts with water surface, without discoloration caused by alternation of cuprous oxide into basic copper carbonate.

The combinations containing cuprous oxide result in good antifouling performance of the antifouling coating film in various sea areas because cuprous oxide is effective in stable antifouling performance.

<(D) Additive>

The high-solid antifouling paint composition of the present invention may further contain at least one kind of additive (D) selected from the group consisting of water (d1), an acetoacetyl ($CH_3COCH_2CO$-) group-containing compound (d2), an alkoxysilane compound or a derivative thereof (d3), a dispersant (d4), an anti-sagging agent (d5), a plasticizer (d6), an extender pigment (d7) (except the polyvalent metal compound (B)), a color pigment (d8), and a dehydrating agent (d9).
When the high-solid antifouling paint composition of the present invention is of multi-package type, the additive (D) may be blended in a first liquid, a second liquid, a third liquid, or two or more of these liquids unless otherwise noted.

(d1) Water

When the high-solid antifouling paint composition of the present invention contains water (d1), the reaction between the carboxyl group-containing copolymer (A) and the polyvalent metal compound (B) is promoted, whereby the hardness of coating film can increase in a short time and the coating film attains damage resistance in the early stage.
The reaction between the carboxyl group-containing copolymer (A) and the polyvalent metal compound (B) is also promoted by moisture in surroundings of the place where the coating film is applied (that is, moisture in the air or the like). Nevertheless, when water (d1) is intentionally blended in the high-solid antifouling paint composition of the present invention, it is desirable that water (d1) is blended in an amount of 0.01 to 10% by weight, and preferably 0.02 to 5% by weight, in 100% by weight of the high-solid antifouling paint composition of the present invention (excluding solvent (E) described later), considering promoting effect on the reaction, ease in mixing the ingredients, drying property and water resistance of the coating film, and the like.

(d2) Acetoacetyl Group-Containing Compound

Examples of the acetoacetyl group-containing compound (d2) include acetylacetone, acetoacetylethyl methacrylate and the like.
When the acetoacetyl group-containing compound (d2) is blended in the high-solid antifouling paint composition of the present invention, the acetoacetyl group-containing compound (d2) works as a chelating agent to the polyvalent metal compound (B). Consequently, viscosity of the antifouling paint composition is lowered and rapid progress of the reaction between the carboxyl group-containing copolymer (A) and the polyvalent metal compound (B), which is caused by blending of water (d1), is suppressed. As a result, the pot life of the paint composition of the present invention can be extended. Considering the effect of extending pot life and proper adjustment of the drying ability of the coating film, the acetoacetyl group containing compound (d2) is preferably blended in an amount of 0.01 to 10% by weight in 100% by weight of the high-solid antifouling paint composition of the present invention (excluding solvent (E) described later).

(d3) Alkoxysilane Compound

Examples of the alkoxysilane compound (d3) include methyl silicate, ethyl silicate, hydrolytic condensates thereof and the like.
When the alkoxysilane (d3) is blended in the high-solid antifouling paint composition of the present invention, the coating film can attain damage resistance in an early stage.
Considering the promotion effect on the reaction, preventive effect on ease in mixing the ingredients, and drying ability and water resistance of the coating film, it is desirable that the alkoxy silicate (d3) is blended in an amount of 0.01 to 10% by weight, and preferably 0.02 to 5% by weight, in 100% by weight of the high-solid antifouling paint composition of the present invention (excluding solvent (E) described later).

(d4) Dispersant

Examples of the dispersant (d4) to be used include a coal-based resin, a petroleum resin, a terpene resin, a vinyl ether (co)polymer, a (meth)acrylate ester (co)polymer, and a monocarboxylic acid compound having a molecular weight of 3,000 or less (except copolymer (A) described above). Specifically, one may use
as a coal-based resins, coumarone resin and the like;
as a petroleum resin, C5-, C9-, styrene-, and dicyclopentadiene- resins, and their hydrogenated products, ketone resin, polyester resin, acrylic resin, aldehyde resin, vinyl chloride resin, polyalkylvinyl ether resin, chlorinated polyolefin resin and the like;
as a terpene resin, polyterpene resin, terpene-phenol resin and the like;
as a polyvinyl ether copolymer, polyvinyl ethyl ether, a commercial product thereof such as "Lutonal" (manufactured by

BASF Japan Ltd.), and the like;
as a (meth) acrylate ester (co) polymer, poly (ethyl acrylate), octyl methacrylate/methyl acrylate copolymer, and the like; and
as a monocarboxylic acid compound having a molecular weight of 3,000 or less, rosin and derivatives thereof, publicly-known monocarboxylic acids such as naphthenic acid, versatic acid, isononanic acid and the like, the carboxylic acid compound described in Japanese Patent Laid-open Publication No. 2005-179345, and the like.

The monocarboxylic acid compound having a molecular weight of 3, 000 or less, such as rosin and derivatives thereof, possibly forms a salt with the polyvalent metal contained in the polyvalent metal compound (B) in the high-solid paint composition of the present invention or in the antifouling coating film.

When the dispersant (d4) is used, in the high-solid antifouling paint composition of the present invention or, when the composition is a multi-package type, in the first liquid, the second liquid, and the third liquid optionally used, and the like used for preparing the multi-package type composition, the solvent-insoluble ingredients are homogeneously dispersed to prepare a paste-form composition containing the solvent-insoluble components and the solvent. In addition, the dispersant (d4) can prevent coagulation of the solvent insoluble ingredients on storage of the first, second, and third liquids. Further, when the high-solid multi-package antifouling paint composition of the present invention is prepared by mixing the first, second, and optionally third liquids and others, the solvent-insoluble ingredients are easily dispersed homogeneously in the composition.

It is desirable that the dispersant (d4) is blended in an amount of 0.01 to 60% by weight, and preferably 0.1 to 40% by weight, in 100% by weight of the high-solid antifouling paint composition of the present invention (excluding solvent (E) described later).

<u>(d5) Anti-Sagging Agent</u>

Examples of the anti-sagging agent (d5) include a salt such as an amine salt of Al, Ca, or Zn derived from organic clay, a stearate salt, a lecitin salt, and an alkylsulfonate, polyethylene wax, amide wax, hydrogenated castor oil wax, polyamide wax, a mixture of hydrogenated castor oil wax and polyamide wax, synthetic silica fine powder, polyethylene oxide wax, and the like. Preferred are polyamide wax, polyethylene oxide wax, and an extender pigment such as synthetic silica fine powder. Examples of commercial products include "Disparlon 4200-20" and "Disparlon A630-20X" (manufactured by Kusumoto Chemicals Ltd.), "ASAT-250F" (manufactured by Itoh Oil Chemicals Co., Ltd.), and others.

The high-solid antifouling paint composition of the present invention preferably contains the anti-sagging agent (d5) from the viewpoint of that precipitation of solvent-insoluble ingredients can be prevented, and the strength of coating film and the anti-sagging property on coating can be adjusted.

It is desirable that the anti-sagging agent (d5) is contained in an amount of 0.01 to 30% by weight, and preferably 0.1 to 10% by weight, in 100% by weight of the high-solid antifouling paint composition of the present invention (excluding solvent (E) described later).

<u>(d6) Plasticizer</u>

The plasticizer (d6) includes TCP (tricresyl phosphate), a chlorinated paraffin, polyvinyl ethyl ether, a dialkyl phthalate, and the like. Among them, a chlorinated paraffin and a dialkyl phthalate are preferred. These plasticizers may be used alone or in combination of two or more.

The high-solid antifouling paint composition of the present invention preferably contains the plasticizer (d6) from the view point of the coating film (antifouling coating film) formed from the antifouling paint composition exibits improved crack resistance.

The chlorinated paraffin (chloroparaffin) may be either straight-chain or branched, and may be either liquid or solid (powder) at room temperature. Suitably used chlorinated paraffins each has, an average of, generally, 8 to 30, and preferably, 10 to 26 carbon atoms; a number average molecular weight of, generally, 200 to 1,200, preferably, 300 to 1,100; a viscosity of, generally, 1 poise or more, preferably, 1.2 poise or more at 25°C; and a specific gravity of 1.05 to 1.80, preferably, 1.10 to 1.70 at 25°C. By using the chlorinated paraffin having the above number of carbon atoms, the resulting antifouling paint composition can form a coating film less suffering from cracking and peeling off. When the number of carbon atoms in the chlorinated paraffin is less than 8, the preventive effect against cracking may be insufficient. When the number of carbon atoms exceeds 30, the resulting coating film surface may have poor wearing property (renewability) and hence a poor antifouling performance. The chlorination ratio (chlorine content) of the chlorinated paraffin is generally 35% to 75%, and preferably 35% to 65% from the viewpoint of that the resulting antifouling paint composition can form a coating film less suffering from cracking and peeling off. Examples of such a chlorinated paraffin include "Toyoparax 150" and "Toyoparax A-70" (manufactured by Tosoh Corp. ) and the like.

It is desirable that the plasticizer (d6) is contained in an amount of 0.01 to 30% by weight, and preferably 0.1 to 10% by weight, in 100% by weight of the high-solid antifouling paint composition of the present invention (excluding

solvent (E) described later).

(d7) Extender pigment

The extender pigment (d7) includes talc, calcium carbonate, barium sulfate, mica, and the like.
The high-solid antifouling paint composition of the present invention preferably contains the extender pigment (d7), in terms of the cost-reduction of the resulting paint, improvement in strength of the coating film, improvement in the anti-sagging property, and the like, and further the degree of wearing of the coating film can be adjusted by selecting the kind of extender pigment.
It is desirable that the extender pigment (d7) is contained in an amount of 0.01 to 80% by weight, and preferably 0.1 to 60% by weight, in 100% by weight of the high-solid antifouling paint composition of the present invention (excluding solvent (E) described later).

(d8) Color Pigment

The color pigment (d8) includes iron oxide red, titan white, an organic color pigment, and the like.
The high-solid antifouling paint composition of the present invention preferably contains the color pigment (d8) from the viewpoint of that the hue of antifouling coating film obtained from the composition can be modified arbitrarily.
It is desired that the color pigment (d8) is contained in an amount of 0.01 to 80% by weight, and preferably 0.1 to 60% by weight, in 100% by weight of the high-solid antifouling paint composition of the present invention (excluding solvent (E) described later).

(d9) Dehydrating Agent

The dehydrating agent (d9) includes anhydrous gypsum, burnt gypsum, synthetic zeolite, an orthoester such as methyl orthoformate, and the like.
The high-solid antifouling paint composition of the present invention preferably contains the dehydrating agent (d9) from the viewpoint of that the antifouling coating film of the present invention attains improved physical properties and adhesion to a base material.
Desirably, the dehydrating agent (d9) is contained in an amount of 0.01 to 10% by weight, and preferably 0.1 to 5% by weight, in 100% by weight of the high-solid antifouling paint composition of the present invention (excluding solvent (E) described later).

<(E) Solvent>

As the solvent (E) that can be contained in the high-solid antifouling paint composition of the present invention, conventional publicly-known solvents with a wide variety of boiling point may be used. Examples of the solvent (E) include an aliphatic solvent such as turpene and the like; an aromatic solvent such as toluene, xylene and the like; an alcoholic solvent such as isopropyl alcohol, n-butyl alcohol, isobutyl alcohol and the like; an ester solvent such as ethyl acetate, butyl acetate and the like; a ketone solvent such as methyl ethyl ketone, methyl isobutyl ketone, methyl amyl ketone and the like; an ether or ether-ester solvent such as ethylene glycol monomethyl ether, ethylene glycol monobutyl ether, propylene glycol monomethyl ether, and propylene glycol monomethyl ether acetate, and the like. Preferred solvents include xylene, 1-butanol, and propylene glycol monomethyl ether. These solvents may be used alone or in combination of two or more.
The high-solid antifouling paint composition of the present invention has a low viscosity even with a low solvent content. It is desirable that the high-solid antifouling paint composition of the present invention contains the solvent (E) in an amount of 1 to 45% by weight, and preferably 5 to 35% by weight (the weight of the high-solid antifouling paint composition being given as 100% by weight).
In the case where the high-solid antifouling paint composition of the present invention is of multi-package,
desirably, the amount of solvent (E) in the first liquid is 10 to 45% by weight and preferably 15 to 40% by weight (the weight of the first liquid being given as 100% by weight); and
desirably, the amount of solvent (E) in the second liquid is 1 to 45% by weight and preferably 5 to 35% by weight (the weight of the second liquid being given as 100% by weight).

[High-solid Antifouling Paint Composition]

The high-solid antifouling paint composition of the present invention has a small value of volatile organic compound content (VOC). The value is preferably 400 g/L or less, and more preferably 100 g/L to 350 g/L. These values

of VOC are the values measured under the conditions described in Examples.

Therefore, use of the high-solid antifouling paint composition of the present invention can reduce environmental burden and effect on human bodies.

The high-solid antifouling paint composition of the present invention contains the antifouling agent (C) and is preferably a high-solid multi-component antifouling paint composition that comprises a first liquid containing the copolymer (A) and a second liquid containing the polyvalent metal compound (B), and optionally further comprises another component(s).

As the high-solid multi-package antifouling paint composition, particularly preferred is a high-solid two-package antifouling paint composition, which contains a first liquid containing the copolymer (A) and a second liquid containing the polyvalent metal compound (B). Also, preferred is a high-solid three-package antifouling paint composition, which further comprises a third liquid containing at least one kind of ingredient selected from a defoaming agent, a viscosity modifier, a coating film curing rate modifier, and a coating film hardness modifier.

In the high-solid two-package antifouling paint composition, preferably, at least one of the first liquid and the second liquid contains the antifouling agent (C).

The high-solid multi-package antifouling paint composition, including the two-package and the three-package types as representatives, may be the one wherein the first liquid contains the carboxyl group-containing copolymer (A) and does not contain the polyvalent metal compound (B), the second liquid contains the carboxyl group-containing copolymer (A) and the polyvalent metal compound (B) and does not contain water in a substantial amount, and at least one of the first liquid and the second liquid contains the antifouling agent (C). In this case, it is preferred that the second liquid contain the carboxyl group-containing copolymer (A) in an amount of 1 to 30% by weight of the total amount (100% by weight) of the carboxyl group-containing copolymer (A) in the high-solid antifouling paint composition. Here, "water in a substantial amount" means sufficient amount of water for promoting the reaction between the carboxyl group-containing copolymer (A) and the polyvalent metal compound (B) (for example, an amount required for increasing the reaction rate by 5% or more). Even though the second liquid contains the carboxyl group-containing copolymer (A) and the polyvalent metal compound (B), when water is not contained therein in a substantial amount, the second liquid keeps a low viscosity over a long time (for example, three months) and does not impair coating workability.

As generally known, a "multi-package antifouling paint" is an antifouling paint that is used after a plurality of liquids are mixed just before coating. Similarly, a "two-compartment antifouling paint" is an antifouling paint that is used after two liquids are mixed just before coagting, and a "three-package antifouling paint" is an antifouling paint that is used after three liquids are mixed just before coating.

The high-solid antifouling paint composition of the present invention is preferably a high-solid multi-package, such as a two-package or three-package, antifouling paint composition which comprises the following first and second liquids, and optionally further comprises a third liquid and others. The high-solid multi-package antifouling paint composition of the present invention is excellent in storage stability, and the antifouling coating film obtained from this composition has an excellent and persistent antifouling performance and excellent mechanical strength.

<First Liquid>

The first liquid contains the carboxyl group-containing copolymer (A) and a solvent, and may further contain the antifouling agent (C), the additive (D), and others.

The first liquid can be prepared by mixing the carboxyl group-containing copolymer (A) and the other ingredients required, in a usual manner.

<Second Liquid>

The second liquid contains the polyvalent metal compound (B) and a solvent, and may further contain the antifouling agent (C), the additive (D), and others. In a high-solid two-package antifouling paint composition, at least one of the first liquid and the second liquid contains the antifouling agent (C).

The second liquid may further contain the carboxyl group-containing copolymer (A), preferably, in an amount of 1 to 30% by weight of the total amount (100% by weight) of the carboxyl group-containing copolymer (A) in the antifouling paint composition of the present invention.

The second liquid can be prepared by mixing the polyvalent metal compound (B) and the other ingredients required, in a usual manner.

<Third Liquid>

The third liquid contains the antifouling agent (C), the additive (D), a defoaming agent, a viscosity modifier, a coating film curing rate modifier, a coating film hardness modifier, and others. Similarly to the first liquid and the second

liquid, the third liquid contains a solvent.

Examples of the defoaming agent include a silicone-based, oxyalkylene-based, or mineral-based defoaming agent and the like. For example, "Flowlen AC-300"(Kyoeisha Chemical Co., Ltd.), "BYK-088, BYK-065, BYK-P104" (BYK-Chemie GmbH, Germany), "Disparlon OX-70" (Kusumoto Chemicals Ltd.), or the like may be used.

As the viscosity modifier, the acetoacetyl group-containing compound (d2), the anti-sagging agent (d5) or the like may be used.

As the coating film curing rate modifier, water (d1), the acetoacetyl-group containing compound (d2) or the like may be used.

As the coating film hardness modifier, the plasticizer (d6) or the like may be used.

[Method for Producing High-solid Antifouling Paint Composition]

In the case where the high-solid antifouling paint composition of the present invention is of one-package type, the composition can be produced by stirring and mixing (or other manipulations) the above ingredients. On coating, a component (s) in a form other than solution, such as powder and the like, may be further mixed with stirring (or doing other manipulations) with the composition.

In the case where the high-solid antifouling paint composition of the present invention is a high-solid multi-package antifouling paint composition, including a two-package or three-package type as representatives, the composition can be produced by mixing with stirring (or other manipulations) the first liquid and the second liquid, and further, as necessary, other liquids such as the third liquid, each of these liquids being prepared in advance. At this time, a component (s) in a form other than solution, such as powder and the like, may be further mixed with stirring (or doing other manipulations).

On the mixing with stirring or on the preparation, one may use, as appropriate, a conventional publicly-known mixing/stirring apparatus such as a high-speed disper, a sand grinding mill, a basket mill, a ball mill, a three-roll mixer, a Ross mixer, a planetary mixer, a Shinagawa mixer and the like.

[Antifouling Coating Film, Base Material with Coating Film, and Others]

The antifouling coating film relating to the present invention is formed by curing the above high-solid antifouling paint composition.

The base material with a coating film of the present invention is characterized in that the surface of the base material is coated with a coating film formed by curing the above high-solid antifouling paint composition.

The antifouling base material relating to the present invention is characterized in that the surface of the base material that contacts with seawater or freshwater is coated with a coating film formed by curing the above high-solid antifouling paint composition.

In the antifouling base material of the present invention, the base material, which works as a base, is preferably any of an underwater structure, an outside board of a ship, a fishing net, and a fishing gear.

The method for forming a coating film on a surface of a base material of the present invention is characterized by comprising coating or impregnating the surface of the base material with the high-solid antifouling paint composition, followed by curing the composition to form the coating film.

The antifouling method for a base material of the present invention is characterized by comprising coating or impregnating the surface of the base material with the high-solid antifouling paint composition, followed by curing the composition to form an antifouling coating film.

In the present invention, the base material to which the antifouling method is applied is preferably any of an underwater structure, an outside board of a ship, a fishing net, and a fishing gear.

Explaining in detail, when the high-solid antifouling paint composition of the present invention is applied on the surfaces of various formed bodies including underwater structures such as water inlet and outlet at thermal and atomic power stations, coastal roads, submarine tunnels, coastal facilities, sludge spread prevention films for various ocean civil engineering works such as canals and channels, ships, fishing materials (for example, ropes, fishing nets, fishing gears, floats, and buoys) and the like, in accordance with a usual method, once or a plurality of times, there can be provided ships, underwater structures or others coated with the antifouling coating film that has an excellent antifouling performance, can sustainably release the antifouling agent over a long period of time, has an appropriate flexibility even when thickly painted, and is excellent in crack resistance.

That is, the antifouling coating film, which is formed by application and curing of such a high-solid antifouling paint composition of the present invention on surfaces of various formed bodies, has an excellent antifouling performance, for example, persistently preventing attachment of aquatic organisms such as sea lettuce, barnacle, green string lettuce, serpula, oyster and cheilostomata for a long time.

In particular, even when ships and others are made of a material such as FRP, steel, wood, aluminum alloy

and the like, the high-solid antifouling paint composition adheres well on the surface of these materials. In the case of a steel vessel or an aluminum vessel, the high-solid antifouling paint composition of the present invention is applied to the base material surface precoated with a primer, an anticorrosion paint, and optionally a binder paint. In addition, the high-solid antifouling paint composition may be overpainted on the surface of an existing antifouling coating film.

Furthermore, for example, when the high-solid antifouling paint composition is applied to a surface of a submerged structure in the sea, attachment of marine organisms can be prevented, and therefore the function of the structure can be maintained over a long period of time. When the high-solid antifouling paint composition is applied to fishing nets, clogging of the mesh of the fishing nets can be prevented. Furthermore, the possibility of environmental pollution is low.

The high-solid antifouling paint composition of the present invention may be directly applied to fishing nets or may be applied to surfaces of ships, underwater structures or the like precoated with an undercoat such as an anticorrosive agent, a primer or the like. In addition, the high-solid antifouling paint composition of the present invention may be overpainted for repairs on surfaces of ships, particularly FRP vessels, underwater structures or the like that have been already coated with a conventional antifouling paint or with the high-solid antifouling paint composition of the present invention. The thickness of the antifouling coating film formed on the surface of the ship or the underwater structure in this manner is, not specifically limited to, for example, approximately 30 to 250 μm/time.

The antifouling coating film or the coating film on water-contacting surfaces of ships or underwater structures of the present invention obtained in the above-described manner is formed from the above-described high-solid antifouling paint composition and exhibits an excellent long-term antifouling performance against a wide variety of organisms that attach to ships and underwater structures with less possibility of environmental pollution.

According to the present invention, there can be provided a high-solid antifouling paint composition, with less environmental burden, exhibiting an excellent antifouling performance, capable of forming an antifouling coating film that is worn uniformly at a constant rate over a long period of time, maintaining the excellent antifouling performance over a long period of time, and is suitably used for ocean vessels. There can be also provided such an antifouling coating film; ships, submerged structures, fishing implements or fishing nets coated with said antifouling coating film.

[High-solid Multi-package Antifouling Paint Set]

The high-solid multi-package antifouling paint set of the present invention has a first container keeping the first liquid, which contains the carboxyl group-containing copolymer (A) as an essential ingredient, a second container keeping the second liquid, which contains the polyvalent metal compound (B) as an essential ingredient, and optionally a third container keeping the third liquid. The liquids each kept in each container, at least the first liquid and the second liquid, are separately stored or transported until just before use.

By using the high-solid multi-package antifouling paint set, high-solid two-package antifouling paint set, or high-solid three-package antifouling paint set of the present invention, that is, by mixing the first liquid, the second liquid, and optionally the other component (s) in an arbitrary sequence, and applying the mixture to a desired base material, there can be formed an antifouling coating film with excellent antifouling performance, excellent persistence thereof and excellent mechanical strength, with reduced environmental burden and reduced effects on human bodies.

## EXAMPLES

The present invention will be described in more detail with reference to Examples below, but it should be construed that the present invention is in no way limited to these Examples.

<Evaluation of Properties of Copolymer (A)>

The properties of a copolymer (A) and a copolymer (A) solution were evaluated as follows:

(1) GPC and IR

GPC and IR were measured under the following conditions.
(Conditions for GPC measurement)
Apparatus: HLC-8120GPC, manufactured by Tosoh Corp.,
Column: Super H2000+H4000, 6 mm I. D., 15 cm, manufactured by Tosoh Corp.,
Eluent: THF,
Flow rate: 0.500 mL/min,
Detector: IR, and
Column oven temperature: 40°C;
(Conditions for IR measurement)

Apparatus: Spectrum ONE(B) FT-IR Spectrometer, manufactured by Perkin Elmer Inc.,
Measurement method: KBr cell, coating method.

(2) Residue after heating (weight-NV)

1 gram of a copolymer solution was weighed in a flat-bottomed dish and spread uniformly with a wire whose weight was known. After dried at 125°C for 1 hr, whole of the residue and wire was weighed to calculate residue after heating (% by weight). Here, "residue after heating" has the same meaning as "non-volatile content" described above.

(3) Viscosity

The viscosity of a copolymer solution was measured with an EM-type viscometer (manufactured by Tokimec Inc.).

<Evaluation of Properties of Antifouling Paint Composition>

The properties of an antifouling paint composition and a coating film were evaluated as follows.

(1) Specific Gravity

The specific gravity (paint specific gravity in $g/cm^3$) was determined by weighing the antifouling paint composition filled in a specific gravity cup having an inside volume of 100 mL at 25°C immediately after the first liquid and the second liquid were mixed.

(2) Residue after heating (weight-NV)

1 gram of an antifouling paint composition was weighed in a flat-bottomed dish immediately after the first solution and the second solution were mixed, and the composition was spread uniformly with a wire whose weight was known. After dried at 125°C for 1 hr, whole of the residue and wire was weighed to calculate residue after heating (% by weight).

(3) Measurement of Volatile Organic Compound Weight (VOC)

The value of VOC was calculated from values of the paint specific gravity and weight-NV, using the following equation:

$$\text{VOC (g/L)} = (\text{specific gravity of the paint}) \times 1000 \times (100 - \text{weight-NV}) / 100$$

(4) Measurementof Viscosity of Antifouling Paint Composition (Ku)

Immediately after and at a given time after the first liquid and the second liquid were mixed, the viscosity of the antifouling paint composition (Ku value at 25°C) was measured with a stormer viscometer.

(5) Test for Stationary Antifouling Performance of Antifouling Coating Film

A sandblasted steel plate measuring 100 × 300 × 2 mm was coated with an epoxy-based zinc-rich primer (product name, Epicon Zinc-rich Primer B-2, manufactured by Chugoku Marine Paints, Ltd., having a zinc powder content of 80% by weight in the paint), an epoxy-based anticorrosive paint (product name, Bannoh 500, manufactured by Chugoku Marine Paint Ltd.), and another epoxy-based anticorrosive paint (product name, Bannoh 500N, manufactured by Chugoku Marine Paints, Ltd.) in 20 μm, 150 μm , and 100 μm as dry thickness, respectively, in this order in a manner of 1 coating every day (that is, 1st day: primer, 2nd day: anticorrosive paint, and 3rd day: another anticorrosive paint). After that, an antifouling paint composition was applied, in a dry thickness of 150 μm, to the surface of the coating film formed from these epoxy-based binder coats to prepare a test plate.

From a raft for testing floated off the coast of Miyajima island in Japan, the test plate was immersed into the

seawater at a depth of 1 m. After the test plate was allowed to stand for 12 months, an area of the test plate to which aquatic macro-organisms such as barnacle, serpula and the like were attached was evaluated. The evaluation was made on the following criteria:
5 points: macroorganisms-attached area is 0%;
4 points: macroorganisms-attached area is more than 0% and 5% or less;
3 points: macroorganisms-attached area is more than 5% and 15% or less;
2 points: macroorganisms-attached area is more than 13% and 40% or less;
1 point: macroorganisms-attached area is more than 40%.

(6) Wearing Test of Antifouling Coating Film

A surface of a polyvinyl chloride plate measuring 50 × 50 × 3 mm was roughened with sandpaper. This surface was coated with an antifouling paint composition using an applicator having a coating slit of 500 μm, and then dried indoor at room temperature (about 20°C) for 7 days to prepare a test plate.
The test plate was fixed on the side faces of a rotating drum placed in a thermostat bath filled with seawater at 25°C. After the drum was rotated at a circumferential velocity of 15 knots for 2 months, the wearing degree (decrease in thickness) of the antifouling coating film formed on the test plate was measured.

(7) Evaluation of Drying Properties of Coating Film (Wood Block Pressing Test)

A sandblasted steel plate measuring 150 × 70 × 3.2 mm manufactured by Taiyu Kizai Co., Ltd. was coated with an epoxy-based anticorrosive paint in 150 μm as dry thickness and dried at room temperature (about 20°C) for 1 day to form a coating film. The surface of the resultant coating film was further coated with an epoxy-based binder paint in 100 μm as dry thickness and dried at room temperature (about 20°C) for 1 day to form a coating film. The surface of the resultant coating film was coated with an antifouling paint composition in 150 μm as dry thickness and dried at room temperature (about 20°C) for 1 day to form a coating film. The process of coating with the antifouling paint composition was repeated twice to prepare a test plate having an antifouling coating film with a dry thickness of 300 μm.
After the above test plate was further dried for 1, 3, 5, and 7 days, a wood block measuring 30 × 30 × 10 mm was put on the coating film (in the central part thereof) and a pressure of 40 $kgf/cm^2$ (3.9 MPa) was perpendicularly applied on the top of the wood block for 20 min. Change in the surface of the coating film was observed (deformation degree of the coating film was evaluated). Evaluation criteria are shown in Table 1 below.

Table 1 Evaluation Criteria for Drying Properties of Coating Film

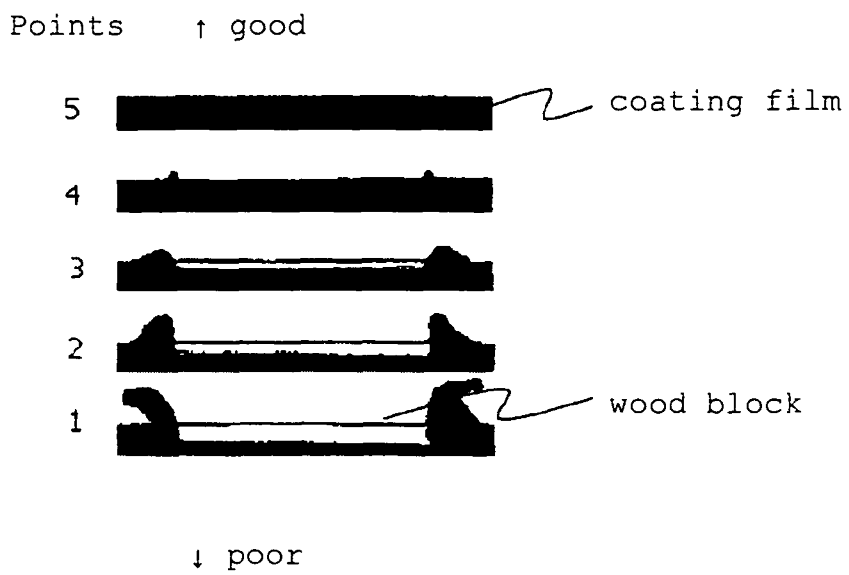


<Production of Copolymer (A)>

Production Example 1

(Production of Carboxyl group-containing Copolymer (S-1) Solution)

A reaction vessel equipped with a stirrer, a condenser, a thermometer, two dropping apparatuses, a nitrogen gas inlet tube, a heating jacket, and a cooling jacket was charged with 52.5 g of xylene and 52.5 g of propylene glycol monomethyl ether as solvent, and the solvent was stirred with heating to the refluxing temperature (around 120°C) under a nitrogen atmosphere. While the solvent was kept under reflux, here were simultaneously dropped, over 3 hr, a monomer solution containing 15 g of methyl methacrylate, 30 g of methacrylic acid, 55 g of ethyl acrylate, and 1 g of 2,4-diphenyl-4-methyl-1-pentene from one dropping apparatuses; and 30 g of t-butylperoxy 2-ethylhexanoate from the other dropping apparatus. After that, the mixture was stirred for additional 1 hr at this refluxing temperature, and then 0.1 g of t-butylperoxy 2-ethylhexanoate was added three times every 1 hr while stirring was continued. After the mixture was further stirred for 30 min, 66.8 g of the solvent was recovered by elevating the temperature, and the concentrate was cooled to obtain 160 g of a varnish (copolymer (S-1) solution).

The residue after heating (residual content after the solution was dried at 125°C for 1 hr in a thermostat) of the obtained copolymer (S-1) solution was 71.8% by weight. The viscosity at 25°C was 5,840 mPa·s. The weight average molecular weight (Mw) measured with GPC of copolymer (S-1) was 1,920. The raw materials and properties of copolymer (S-1) are shown in Table 2.

Production Example 2

(Production of Carboxyl group-containing Copolymer (S-2) Solution)

A reaction vessel equipped with a stirrer, a condenser, a thermometer, two dropping apparatuses, a nitrogen gas inlet tube, a heating jacket, and a cooling jacket was charged with 83.2 g of xylene and 83.2 g of ethylene glycol monobutyl ether as solvent, and the solvent was stirred with heating to the refluxing temperature (around 120°C) while nitrogen gas was supplied. While the solvent was kept at the refluxing temperature, here were simultaneously dropped, over 3 hr, a monomer solution containing 15 g of methyl methacrylate, 30 g of methacrylic acid, 55 g of ethyl acrylate,

and 1 g of 2,4-diphenyl-4-methyl-1-pentene from one dropping apparatuses; and 30 g of t-butylperoxy 2-ethylhexanoate from the other dropping apparatus. After that, the mixture was stirred for additional 1 hr at this refluxing temperature, and then 0.1 g of t-butylperoxy 2-ethylhexanoate was added three times every 1 hr while stirring was continued. After the mixture was further stirred for 30 min, the solvent was recovered under reduced pressure at 100 to 120°C, and the concentrate was cooled to obtain 147.8 g of a varnish (copolymer (S-2) solution).

The residue after heating (residual content after the solution was dried at 125°C for 1 hr in a thermostat) of the obtained copolymer (S-2) solution was 72.3% by weight. The viscosity at 25°C was 4, 970 mPa·s. The weight average molecular weight (Mw) measured with GPC of copolymer (S-2) was 1,670. The raw materials and properties of copolymer (S-2) are shown in Table 2.

Production Examples 3 to 7

(Production of Carboxyl group-containing Copolymers (S-3) to (S-7) Solutions)

Carboxyl group-containing copolymers (S-3) to (S-7) each were prepared in a similar manner to Production Example 1 except that the materials added by dropping and amounts thereof were changed as shown in Table 2. The raw materials and properties of copolymers (S-3) to (S-7) were shown in Table 2.

Reference Production Example 1

(Production of Dispersant (Polyethyl acrylate) Solution)

A reaction vessel equipped with a stirrer, a condenser, a thermometer, two dropping apparatuses, a nitrogen gas inlet tube, a heating jacket, and a cooling jacket was charged with 41.6 g of xylene as solvent, and the solvent was stirred with heating to the refluxing temperature (around 120°C) while nitrogen gas was supplied. While the solvent was kept at the refluxing temperature, here were simultaneously dropped, over 3 hr, a monomer solution containing 100 g of ethyl acrylate, and 1 g of 2,4-diphenyl-4-methyl-1-pentene from one dropping apparatuses; and 30 g of t-butylperoxy 2-ethylhexanoate from the other dropping apparatus. After that, the mixture was stirred for additional 1 hr at this refluxing temperature, and then 0.1 g of t-butylperoxy 2-ethylhexanoate was added three times every 1 hr while stirring was continued. The mixture was further stirred at the same temperature for 30 min and cooled to obtain 164.5 g of a varnish.

The residue after heating (residual content after the solution was dried at 125°C for 1 hr in a thermostat) of the obtained varnish (dispersant (polyethyl acrylate) solution; hereinafter polyethyl acrylate may be described as "PEA") was 70.3% by weight. The viscosity at 25°C was 51 mPa·s. The weight average molecular weight (Mw) measured with GPC of PEA was 2,160.

The raw materials and properties of PEA described above are shown in Table 2.

Comparative Production Example 1

(Production of Copolymer (H-1))

A reaction vessel equipped with a stirrer, a condenser, a thermometer, two dropping apparatuses, a nitrogen gas inlet tube, a heating jacket, and a cooling jacket was charged with 52.5 g of xylene and 52.5 g of propylene glycol monomethyl ether as solvent, and the solvent was stirred with heating to the refluxing temperature (around 120°C) while nitrogen gas was supplied. While the solvent was kept at the refluxing temperature, here were simultaneously dropped, over 3 hr, a monomer solution containing 15 g of methyl methacrylate, 30 g of methacrylic acid, 55 g of ethyl acrylate, and 1 g of 2,4-diphenyl-4-methyl-1-pentene from one dropping apparatuses; and 5 g of t-butylperoxy 2-ethylhexanoate from the other dropping apparatus. After that, the mixture was stirred for additional 1 hr at this refluxing temperature, and then 0.1 g of t-butylperoxy 2-ethylhexanoate was added three times every 1 hr while stirring was continued. The mixture was further stirred for 30 min and then cooled.

The residue after heating (residual content after the solution was dried at 125°C for 1 hr in a thermostat) of the obtained copolymer (H-1) solution was 50.0% by weight. The viscosity at 25°C was 810 mPa·s. The weight average molecular weight (Mw) measured with GPC of copolymer (H-1) was 6,760. The raw materials and properties of copolymer (H-1) are shown in Table 3.

Comparative Production Example 2

(Production of Copolymer (H-2))

A reaction vessel equipped with a stirrer, a condenser, a thermometer, two dropping apparatuses, a nitrogen gas inlet tube, a heating jacket, and a cooling jacket was charged with 52.5 g of xylene and 52.5 g of propylene glycol monomethyl ether as solvent, and the solvent was stirred with heating to the refluxing temperature (around 120°C) while nitrogen gas was supplied. While the solvent was kept at the refluxing temperature, here were simultaneously dropped, over 3 hr, a monomer solution containing 45 g of methyl methacrylate, 10 g of methacrylic acid, 10 g of acrylic acid, 35 g of ethyl acrylate, and 1 g of 2,4-diphenyl-4-methyl-1-pentene from one dropping apparatuses; and 5 g of t-butylperoxy 2-ethylhexanoate from the other dropping apparatus. After that, the mixture was stirred for additional 1 hr at this refluxing temperature, and then 0.1 g of t-butylperoxy 2-ethylhexanoate was added three times every 1 hr while stirring was continued. After the mixture was further stirred for 30 min, 60 g of the solvent was recovered under reduced pressure at 100 to 120°C, and the concentrate was cooled to obtain 149 g of a varnish (copolymer (H-2) solution).

The residue after heating (residual content after the solution was dried at 125°C for 1 hr in a thermostat) of the obtained copolymer (H-2) solution was 69.7% by weight. The viscosity at 25°C was 98, 300 mPa·s. The weight average molecular weight (Mw) measured with GPC of copolymer (H-2) was 6,720. The raw materials and properties of copolymer (H-2) are shown in Table 3.

Comparative Production Example 3

(Production of Copolymer (H-3))

810 g of the copolymer (S-7) solution was added drop by drop into 270 g of hexane, which had a low ability of dissolving polymers, and the resultant mixture was allowed to stand for 2 days. The precipitated resin component was removed by filtration, and the hexane-soluble part was concentrated to obtain 108 g of a varnish (copolymer (H-3) solution).

The residue after heating (residual content after the solution was dried at 125°C for 1 hr in a thermostat) of the obtained copolymer (H-3) solution was 70.3% by weight. The viscosity at 25°C was 2,200 mPa·s. The weight average molecular weight (Mw) measured with GPC of copolymer (H-3) was 716. The properties of copolymer (H-3) are shown in Table 3.

<Production of Antifouling Paint Composition and Evaluation of Coating Film>

Example 1

A second liquid was prepared by homogeneously mixing the above dispersant (PEA solution) (5.7 parts by weight), "Zinc Oxide JIS 3" (10 parts by weight), pyridine-triphenylborane (7 parts by weight), 2-pyridinethiol-1-oxide zinc salt (2 parts by weight), a chlorinated paraffin (Toyoparax 150) (2 parts by weight), an organic red pigment (3 parts by weight), iron oxide red (0.5 part by weight), titan white (2.3 parts by weight), talc (9 parts by weight), an anti-sagging agent (Disparlon 4200-20) (1 part by weight),an anti-sagging agent (Disparlon 630-20X) (1 part by weight), 1-butanol (3.5 parts by weight), propylene glycol monomethyl ether (PGM) (3.5 parts by weight), and xylene (7 parts by weight) using a disper.

An antifouling paint composition was prepared by homogeneously mixing 22.3 parts by weight of the copolymer (S-1) solution, which served as a first liquid, and the above second liquid using a disper.

The properties of the antifouling paint composition and the coating film formed from the composition were evaluated by the above methods. The raw materials and properties of the composition and coating film are shown in Table 5. The list of the raw materials used is shown in Table 4.

Examples 2 to 4, Example 7, and Examples 30 to 32

Each antifouling paint composition was prepared in a similar manner to Example 1 except that the ingredients and amounts blended in the second liquid were changed as shown in Tables 5 and 7 and that the first liquid and its amount to mix with the second liquid were changed as shown in Tables 5 and 7.

The properties of the antifouling paint compositions and the coating films formed from the compositions were evaluated by the above methods. The raw materials and properties of the compositions and coating films are shown in Tables 5 and 7.

Example 5

A first liquid was prepared by homogeneously mixing 22.3 parts by weight of the copolymer (S-1) solution and 2 parts by weight of acetylacetone with a disper.
A second liquid was prepared in a similar manner to Example 1 except that the ingredients and amounts in the blend were changed as shown in Table 5.
These first and second liquids were mixed homogeneously with a disper to obtain an antifouling paint composition.
The properties of the antifouling paint composition and the coating film formed from the composition were evaluated by the above methods. The raw materials and properties of the composition and coating film are shown in Table 5.

Example 6, Examples 8 to 29, and Examples 33 to 41

Antifouling paint compositions were prepared in a similar manner to Example 5 except that the ingredients and their amounts blended in each of the first liquid and the second liquid were changed as shown in Tables 5, 8, and 10.
The properties of the antifouling paint compositions and coating films formed from the compositions were evaluated by the above methods. The raw materials and properties of the compositions and coating films are shown in Tables 5, 8, and 10.

Comparative Examples 1 to 3

Each antifouling paint composition was prepared in a similar manner to Example 1 except that the ingredients and amounts blended in the second liquid were changed as shown in Tables 6 and 9 and that the first liquid and its amount to mix with the second liquid were changed as shown in Tables 6 and 9.
The properties of the antifouling paint compositions and coating films formed from the compositions were evaluated by the above methods. The raw materials and properties of the compositions and coating films are shown in Tables 6 and 9.

Comparative Example 4

An antifouling paint composition was prepared in a similar manner to Example 5 except that the ingredients and amounts blended in each of the first liquid and the second liquid were changed as shown in Table 10.
The properties of the antifouling paint composition and coating film formed from the composition were evaluated by the above methods. The raw materials and properties of the composition and coating film are shown in Table 10.

Table 2

| Polymer | | S-1 | S-2 | S-3 | S-4 | S-5 | S-6 | S-7 | PEA |
|---|---|---|---|---|---|---|---|---|---|
| Solvent | Xylene | 52.5 | 83.2 | 52.5 | 52.5 | 52.5 | 52.5 | 52.5 | 41.6 |
| | Ethylene glycol monobutyl ether | | 83.2 | | | | | | |
| | Propylene glycol monomethyl ether | 52.5 | | 52.5 | 52.5 | 52.5 | 52.5 | 52.5 | |
| Material added by dropping | Methyl methacrylate | 15 | 15 | 5 | 17 | 15 | 20 | 45 | |
| | Methacrylic acid | 30 | 30 | 30 | 28 | | 12.5 | 10 | |
| | Acrylic acid | | | | | 25 | 12.5 | 10 | |
| | Styrene | | | 10 | | | | | |
| | Ethyl acrylate | 55 | 55 | 55 | 55 | 60 | 55 | 35 | 100 |
| | 2,9-Diphenyl-4-methyl-1-pentene | 1 | 1 | 1 | 1 | 1 | 1 | 1 | 1 |
| | t-Butylperoxy 2-ethylhexanoate | 30 | 30 | 30 | 30 | 30 | 30 | 30 | 30 |

(continued)

| Polymer | | S-1 | S-2 | S-3 | S-4 | S-5 | S-6 | S-7 | PEA |
|---|---|---|---|---|---|---|---|---|---|
| Properties | Residue after heating (wt%) | 71.8 | 72.3 | 70.5 | 71.8 | 77.1 | 71.8 | 70.7 | 70.3 |
| | Viscosity (mPa·s/ 25°C) | 5,840 | 4,970 | 7,530 | 8,040 | 6,350 | 3,020 | 4,450 | 51 |
| | Value measured with GPC (Mw) | 1,920 | 1, 670 | 1,990 | 2,070 | 1,710 | 1,710 | 1,962 | 2,160 |
| Note: The unit of amounts of materials is "gram". | | | | | | | | | |

Table 3

| Polymer | | H-1 | H-2 | H-3 |
|---|---|---|---|---|
| Solvent | Xylene | 52.5 | 52.5 | Ultra-low molecular weight fraction extracted from copolymer (S-7) |
| | Propylene glycol monomethyl ether | 52.5 | 52.5 | |
| Material added by dropping | Methyl methacrylate | 15 | 45 | |
| | Methacrylic acid | 30 | 10 | |
| | Acrylic acid | | 10 | |
| | Ethyl acrylate | 55 | 35 | |
| | 2,4-Diphenyl-4-methyl-1-pentene | 1 | 1 | |
| | t-Butylperoxy 2-ethylhexanoate | 5 | 5 | |
| Properties | Residue after heating (wt%) | 50 | 69.7 | 70.3 |
| | Viscosity (mPa·s/25°C) | 810 | 98,300 | 2,200 |
| | Value measured with GPC (Mw) | 6,760 | 6,720 | 716 |
| Note: The unit of amounts of materials is "gram". | | | | |

Table 4. Summary of Raw Materials

| * Code in Table 5 | product Name | Ingredient | Manufacturer |
|---|---|---|---|
| 1 | Ethyl silicate 28 | Ethyl silicate | Colcoat Co., Ltd. |
| 2 | Disparlon 630-20X | Amide-based anti-sagging agent | Kusumoto Chemicals, Ltd. |
| 3 | Copper Pyrithione | 2-Pyridinethiol-1-oxide copper salt | Olin Corp. |
| 4 | Acetylacetone | 2,4-Pentanedione | Daicel Chemical Industries, Ltd. |
| 5 | Lutonal A-25 | Polyvinyl ethyl ether | BASF Japan, Ltd. |
| 6 | Rosin WW | Rosin | Otake Meishin Chemical Co., Ltd. |

(continued)

| * Code in Table 5 | product Name | Ingredient | Manufacturer |
|---|---|---|---|
| 7 | A3000X | Monocarboxylic acid (Compound AD-5 in JP-A-2005-179345) (monocarboxylic acid obtained from alloocimene and methacrylic acid) | Yasuhara Chemical Co. Ltd. |
| 8 | YP-90L | Terpene phenol (solid) | Yasuhara Chemical Co. Ltd. |
| 9 | YP-90LL | Terpene phenol (low softening point; semi-solid) | Yasuhara Chemical Co. Ltd. |
| 10 | Versatic 10 | Versatic acid | Shell Chemicals |
| 11 | Toyoparax 150 | Chlorinated paraffin (chlorination degree:50%) | Tosoh Corp. |
| 12 | PK Boron | Pyridine-triphenylborane | Hokko Chemical Ind. Co., Ltd. |
| 13 | KM-2 | 4-Isopropylpyridine-diphenylmethylborane | KI Chemical Industry Co., Ltd. |
| 14 | Zinc Omadine | 2-Pyridinethiol-1-oxide zinc salt | Olin Corp. |
| 15 | SeaNine 211 | 4,5-Dichloro-2-n-octyl-4-isothiazolin-3-one | Rohm and Haas Company |
| 16 | Cuprous Oxide GG | Cuprous oxide ($Cu_2O$) | Furukawa Co., Ltd. |
| 17 | Sachtolith HD | Zinc sulfide | Sachtleben Chemie GbmH (Germany) |
| 18 | Naphthol Red | Organic red pigment | Fuji Pigment Co., Ltd. |
| 19 | Gekko BB | Iron oxide red | Nippon Bengara Kogyo Co., Ltd. |
| 20 | R-5N | Titanium oxide | Sakai Chemical Industries Co., Ltd. |
| 21 | Zinc Oxide JIS 3 | Zinc oxide (medium particle size) | Hakusui Tech Co., Ltd. |
| 22 | Burnt Zinc White | Zinc oxide (large particle size) | Hakusui Tech Co., Ltd. |
| 23 | Activated Zinc White No.1 | Zinc oxide (small particle size, containing small amounts of zinc carbonate and zinc hydroxide) | The Honjo Chemical Corp. |
| 24 | Talc TTK | Talc (hydrated magnesium silicate) | Takehara Kagaku Kogyo Co. Ltd. |
| 25 | Disparlon 4200-20 | Polyethylene oxide-based anti-sagging agent | Kusumoto Chemicals, Ltd. |
| 26 | Benton 38 | Organic bentonite | Elementis plc |
| 27 | Aerosil #200 | Anhydrous synthetic silica fine powder | Nippon Aerosil Co., Ltd. |
| 28 | FT-2 | Burnt gypsum | Noritake Co., Ltd. |

Table 5

| Note: The unit of amounts of ingredients is "part by weight". | | | Example | | | | |
|---|---|---|---|---|---|---|---|
| | | | 1 | 2 | 3 | 4 | 5 |
| First liquid | Copolymer (A) solution | Copolymer (S-1) solution | 22.3 | 14.8 | 14.8 | 22.3 | 22.3 |
| | | Copolymer (S-2) solution | | | | | |
| | | Copolymer (S-3) solution | | | | | |
| | | Copolymer (S-4) solution | | | | | |
| | | Copolymer (S-5) solution | | | | | |
| | | Copolymer (S-6) solution | | | | | |
| | | Copolymer (S-7) solution | | | | | |
| | Additive | Ethyl silicate 28 *1 | | | | | |
| | | Disparlon 630-20X *2 | | | | | |
| | | 2-Pyridinethiol-1-oxide copper salt *3 | | | | | |
| | | Acethylacetone *4 | | | | | 2 |
| | | Xylene | | | | | |
| | | Water | | | | | |
| Second liquid | Copolymer (A) solution | Copolymer (S-7) solution | | | | | |
| | | | | | | | |
| | Polyvalent metal compound (B) | Zinc oxide JIS 3 *21 | 10 | 4.5 | 15 | 10 | |
| | | Burnt Zinc White *22 | | | 14.5 | | 10 |
| | | Activated Zinc White *23 | | | | | |
| | Dispersant | PEA solution | 5.7 | 3.7 | 3.7 | | |
| | | Lutonal A-25 *5 | | | | 4 | 4 |
| | | Rosin *6 | | | | | |
| | | A3000X *7 | | | | | |
| | | YP-90L *8 | | | | | |
| | | YP-90LL *9 | | | | | |
| | | Versatic 10 *10 | | | | | |
| | Plasticizer | Toyoparax 150 *11 | 2 | 1 | 1 | 2 | 2 |
| | | | | | | | |
| | Antifouling agent(C) | Pyridine-triphenylborane *12 | 7 | | | 7 | 7 |
| | | 4-Isopropylpyridine-diphenylmethylborane *13 | | | | | |
| | | 2-Pyridinethiol-1-oxide zinc salt *14 | 2 | | 3 | 2 | 2 |
| | | 2-Pyridinethiol-1-oxide copper salt *3 | | 3 | | | |
| | | 4,5-Dichloro-2-n-octyl-4-isothiazolin-3-one *15 | | | | | |
| | | Cuprous oxide *16 | | 45 | | | |
| | | Zinc sulfide *17 | | | 20 | | |
| | Pigment | Organic red pigment *18 | 3 | 0.5 | 0.5 | 3 | 3 |
| | | Iron oxide red *19 | 0.5 | | | 0.5 | 0.5 |
| | | Titan white *20 | 2.3 | 1.5 | 1.5 | 2.3 | 2.3 |
| | | Talc *24 | 9 | 2.5 | 2.5 | 9 | 9 |
| | Anti-sagging agent | Disparlon 4200-20 *25 | 1 | 1 | 1 | 1 | 1 |
| | | Disparlon 630-20X *2 | 1 | 1 | 1 | 1 | 1 |
| | | Benton 38 *26 | | | | | |
| | | Aerosil #200 *27 | | | | | |
| | Dehydrating agent | FT-2 *28 | | | | | |
| | Solvent | 1-Butanol | 3.5 | 4 | 4 | 3.5 | 3.5 |
| | | Propylene glycol monomethyl ether | 3.5 | | | 3.5 | 3.5 |
| | | Xylene | 7 | 5 | 5 | 9 | 9 |
| | | Methyl isobutyl ketone | | | | | |
| Properties | Paint specific gravity ($g/cm^3$) | | 1.27 | 2.00 | 1.95 | 1.25 | 1.26 |
| | Residue after heating (wt%) | | 70.4 | 81.9 | 81.9 | 70.2 | 72.7 |
| | Volatile organic compound weight (g/L) | | 375.9 | 362.0 | 353.0 | 372.5 | 344.0 |
| Evaluation results | Viscosity (KU value after mixing) | | 85 | 85 | 90 | 86 | 80 |
| | Stationary antifouling performance | | 5 | 5 | 5 | 5 | 5 |
| | Wearing degree (μm/2 months) | | 19 | 16 | 17 | 39 | 44 |

(continue to next page)

Table 5 (continue from previous page)

| Note: The unit of amounts of ingredients is "part by weight". | | | Example | | | | |
|---|---|---|---|---|---|---|---|
| | | | 6 | 7 | 8 | 9 | 10 |
| First | Copolymer | Copolymer (S-1) solution | 22.3 | 14.8 | 20 | 20 | 20 |

| | | | | | | | |
|---|---|---|---|---|---|---|---|
| liquid | (A) solution | Copolymer (S-2) solution | | | | | |
| | | Copolymer (S-3) solution | | | | | |
| | | Copolymer (S-4) solution | | | | | |
| | | Copolymer (S-5) solution | | | | | |
| | | Copolymer (S-6) solution | | | | | |
| | | Copolymer (S-7) solution | | | | | |
| | Additive | Ethyl silicate 28 *1 | | | 1 | 1 | 1 |
| | | Disparlon 630-20X *2 | | | 0.4 | 0.4 | 0.4 |
| | | 2-Pyridinethiol-1-oxide copper salt *3 | | | | | |
| | | Acethylacetone *4 | 2 | | | | |
| | | Xylene | | | 1.6 | 1.6 | 1.6 |
| | | Water | | | | | |
| Second liquid | Copolymer (A) solution | Copolymer (S-7) solution | | | | | |
| | | | | | | | |
| | Polyvalent metal compound (B) | Zinc oxide JIS 3 *21 | | 4.5 | 15 | 15 | 15 |
| | | Burnt Zinc White *22 | 10 | | 20 | 20 | 20 |
| | | Activated Zinc White *23 | | | 5 | 5 | 5 |
| | Dispersant | PEA solution | | | | | |
| | | Lutonal A-25 *5 | 4 | 2.6 | | | |
| | | Rosin *6 | | | 4 | | |
| | | A3000X *7 | | | | | |
| | | YP-90L *8 | | | | 4 | |
| | | YP-90LL *9 | | | | | 4 |
| | | Versatic 10 *10 | | | | | |
| | Plasticizer | Toyoparax 150 *11 | 2 | 1 | 3 | 3 | 3 |
| | | | | | | | |
| | Antifouling agent(C) | Pyridine-triphenylborane *12 | | | 6 | 6 | 6 |
| | | 4-Isopropylpyridine-diphenylmethylborane *13 | 7 | | | | |
| | | 2-Pyridinethiol-1-oxide zinc salt *14 | 2 | | 2 | 2 | 2 |
| | | 2-Pyridinethiol-1-oxide copper salt *3 | | 3 | | | |
| | | 4,5-Dichloro-2-n-octyl-4-isothiazolin-3-one *15 | | | | | |
| | | Cuprous oxide *16 | | 45 | | | |
| | | Zinc sulfide *17 | | | | | |
| | Pigment | Organic red pigment *18 | 3 | 0.5 | | | |
| | | Iron oxide red *19 | 0.5 | | 2 | 2 | 2 |
| | | Titan white *20 | 2.3 | 1.5 | 2 | 2 | 2 |
| | | Talc *24 | 9 | 2.5 | 4 | 4 | 4 |
| | Anti-sagging agent | Disparlon 4200-20 *25 | 1 | 1 | | | |
| | | Disparlon 630-20X *2 | 1 | 1 | | | |
| | | Benton 38 *26 | | | 2 | 2 | 2 |
| | | Aerosil #200 *27 | | | 0.2 | 0.2 | 0.2 |
| | Dehydrating agent | FT-2 *28 | | | 1 | 1 | 1 |
| | Solvent | 1-Butanol | 3.5 | 4 | | | |
| | | Propylene glycol monomethyl ether | 3.5 | | | | |
| | | Xylene | 9 | 5 | 10.8 | 8.8 | 10.8 |
| | | Methyl isobutyl ketone | | | | 2 | |
| Properties | Paint specific gravity (g/cm$^3$) | | 1.26 | 2.02 | 1.65 | 1.65 | 1.65 |
| | Residue after heating (wt%) | | 72.7 | 82.9 | 79.7 | 79.7 | 79.7 |
| | Volatile organic compound weight (g/L) | | 344.0 | 345.4 | 335.0 | 335.0 | 335.0 |
| Evaluation results | Viscosity (KU value after mixing) | | 81 | 87 | 95 | 91 | 88 |
| | Stationary antifouling performance | | 5 | 5 | 5 | 5 | 5 |
| | Wearing degree (um/2 months) | | 41 | 23 | 44 | 35 | 33 |

(continue to next page)

Table 5 (continue from previous page)

| Note: The unit of amounts of ingredients is "part by weight". | | | Example | | | | |
|---|---|---|---|---|---|---|---|
| | | | 11 | 12 | 13 | 14 | 15 |
| First liquid | Copolymer (A) solution | Copolymer (S-1) solution | 20 | 20 | 14 | 14 | 14 |
| | | Copolymer (S-2) solution | | | | | |
| | | Copolymer (S-3) solution | | | | | |
| | | Copolymer (S-4) solution | | | | | |
| | | Copolymer (S-5) solution | | | | | |
| | | Copolymer (S-6) solution | | | | | |
| | | Copolymer (S-7) solution | | | | | |
| | Additive | Ethyl silicate 28 *11 | 1 | 1 | 1 | 1 | 1 |
| | | Disparlon 630-20X *2 | 0.4 | 0.4 | 0.3 | 0.3 | 0.3 |
| | | 2-Pyridinethiol-1-oxide copper salt *3 | | | 3 | 3 | 3 |
| | | Acethylacetone *4 | | | | | |
| | | Xylene | 1.6 | 1.6 | 1.7 | 1.7 | 1.7 |
| | | Water | | | | | |
| Second liquid | Copolymer (A) solution | Copolymer (S-7) solution | | | | | |
| | | | | | | | |
| | Polyvalent metal compound (B) | Zinc oxide JIS 3 *21 | 15 | 10 | 17 | 17 | 17 |
| | | Burnt Zinc White *22 | 20 | 20 | 6 | 6 | 6 |
| | | Activated Zinc White *23 | 5 | 5 | 5.5 | 5.5 | 5.5 |
| | Dispersant | PEA solution | | | | | |
| | | Lutonal A-25 *5 | | | | | |
| | | Rosin *6 | | | 2.5 | | |
| | | A3000X *7 | | | | 2.5 | |
| | | YP-90L *8 | | | | | |
| | | YP-90LL *9 | 4 | 4 | | | 2.5 |
| | | Versatic 10 *10 | | | | | |
| | Plasticizer | Toyoparax 150 *11 | 3 | 3 | 2.5 | 2.5 | 2.5 |
| | | | | | | | |
| | Antifouling agent (C) | Pyridine-triphenylborane *12 | | | | | |
| | | 4-Isopropylpyridine-diphenylmethylborane *13 | | | | | |
| | | 2-Pyridinethiol-1-oxide zinc salt *14 | 2 | 2 | | | |
| | | 2-Pyridinethiol-1-oxide copper salt *3 | | | | | |
| | | 4,5-Dichloro-2-n-octyl-4-isothiazolin-3-one *15 | 10 | 10 | | | |
| | | Cuprous oxide *16 | | | 30 | 30 | 30 |
| | | Zinc sulfide *17 | | 5 | | | |
| | Pigment | Organic red pigment *18 | | | | | |
| | | Iron oxide red *19 | 2 | 2 | 1 | 1 | 1 |
| | | Titan white *20 | 2 | 2 | 3 | 3 | 3 |
| | | Talc *24 | 4 | 4 | 4 | 4 | 4 |
| | Anti-sagging agent | Disparlon 4200-20 *25 | | | | | |
| | | Disparlon 630-20X *2 | | | | | |
| | | Benton 38 *26 | 2 | 2 | 2 | 2 | 2 |
| | | Aerosil #200 *27 | 0.2 | 0.2 | 0.2 | 0.2 | 0.2 |
| | Dehydrating agent | FT-2 *28 | 1 | 1 | 0.5 | 0.5 | 0.5 |
| | Solvent | 1-Butanol | | | | | |
| | | Propylene glycol monomethyl ether | | | | | |
| | | Xylene | 3.8 | 3.8 | 8.3 | 8.3 | 8.3 |
| | | Methyl isobutyl ketone | | | | | |
| Properties | Paint specific gravity ($g/cm^3$) | | 1.69 | 1.69 | 2.14 | 2.14 | 2.14 |
| | Residue after heating (wt%) | | 79.4 | 79.4 | 84.3 | 84.3 | 84.3 |
| | Volatile organic compound weight (g/L) | | 348.1 | 348.1 | 336.0 | 336.0 | 336.0 |
| Evaluation results | Viscosity (KU value after mixing) | | 85 | 86 | 95 | 95 | 91 |
| | Stationary antifouling performance | | 5 | 5 | 5 | 5 | 5 |
| | Wearing degree (um/2 months) | | 31 | 30 | 25 | 25 | 27 |

(continue to next page)

Table 5 (continue from previous page)

| Note: The unit of amounts of ingredients is "part by weight". | | | Example | | | | |
|---|---|---|---|---|---|---|---|
| | | | 16 | 17 | 18 | 19 | 20 |
| First liquid | Copolymer (A) solution | Copolymer (S-1) solution | | | | | |
| | | Copolymer (S-2) solution | 22.1 | | | | |
| | | Copolymer (S-3) solution | | 22.7 | | | |
| | | Copolymer (S-4) solution | | | 22.3 | | |
| | | Copolymer (S-5) solution | | | | 20.8 | 20.8 |
| | | Copolymer (S-6) solution | | | | | |
| | | Copolymer (S-7) solution | | | | | |
| | Additive | Ethyl silicate 28 *1 | | | | | |
| | | Disparlon 630-20X *2 | | | | | |
| | | 2-Pyridinethiol-1-oxide copper salt *3 | | | | | |
| | | Acethylacetone *4 | 1 | 1 | 1 | 1 | 1 |
| | | Xylene | | | | | |
| | | Water | | | | | |
| Second liquid | Copolymer (A) solution | Copolymer (S-7) solution | | | | | |
| | | | | | | | |
| | Polyvalent metal compound (B) | Zinc oxide JIS 3 *21 | 10 | 10 | 10 | 10 | 10 |
| | | Burnt Zinc White *22 | | | | | |
| | | Activated Zinc White *23 | | | | | |
| | Dispersant | PEA solution | 5.7 | 5.7 | 5.7 | 5.7 | |
| | | Lutonal A-25 *5 | | | | | 4 |
| | | Rosin *6 | | | | | |
| | | A3000X *7 | | | | | |
| | | YP-90L *8 | | | | | |
| | | YP-90LL *9 | | | | | |
| | | Versatic 10 *10 | | | | | |
| | Plasticizer | Toyoparax 150 *11 | 2 | 2 | 2 | 2 | 2 |
| | | | | | | | |
| | Antifouling agent (C) | Pyridine-triphenylborane *12 | 7 | 7 | 7 | 7 | 7 |
| | | 4-Isopropylpyridine-diphenylmethylborane *13 | | | | | |
| | | 2-Pyridinethiol-1-oxide zinc salt *14 | 2 | 2 | 2 | 2 | 2 |
| | | 2-Pyridinethiol-1-oxide copper salt *3 | | | | | |
| | | 4,5-Dichloro-2-n-octyl-4-isothiazolin-3-one *15 | | | | | |
| | | Cuprous oxide *16 | | | | | |
| | | Zinc sulfide *17 | | | | | |
| | Pigment | Organic red pigment *18 | 3 | 3 | 3 | 3 | 3 |
| | | Iron oxide red *19 | 0.5 | 0.5 | 0.5 | 0.5 | 0.5 |
| | | Titan white *20 | 2.3 | 2.3 | 2.3 | 2.3 | 2.3 |
| | | Talc *24 | 9 | 9 | 9 | 9 | 9 |
| | Anti-sagging agent | Disparlon 4200-20 *25 | 1 | 1 | 1 | 1 | 1 |
| | | Disparlon 630-20X *2 | 1 | 1 | 1 | 1 | 1 |
| | | Benton 38 *26 | | | | | |
| | | Aerosil #200 *27 | | | | | |
| | Dehydrating agent | FT-2 *28 | | | | | |
| | Solvent | 1-Butanol | 3.5 | 3.5 | 3.5 | 3.5 | 3.5 |
| | | Propylene glycol monomethyl ether | 3.5 | 3.5 | 3.5 | 3.5 | 3.5 |
| | | Xylene | 7 | 7 | 7 | 7 | 9 |
| | | Methyl isobutyl ketone | | | | | |
| Properties | Paint specific gravity (g/cm$^3$) | | 1.27 | 1.27 | 1.27 | 1.28 | 1.26 |
| | Residue after heating (wt%) | | 70.9 | 70.5 | 70.8 | 72.2 | 71.9 |
| | Volatile organic compound weight (g/L) | | 369.6 | 374.7 | 370.8 | 355.8 | 354.1 |
| Evaluation results | Viscosity (KU value after mixing) | | 86 | 87 | 88 | 84 | 86 |
| | Stationary antifouling performance | | 5 | 5 | 5 | 5 | 5 |
| | Wearing degree (um/2 months) | | 19 | 17 | 16 | 50 | 96 |

(continue to next page)

Table 5 (continue from previous page)

| Note: The unit of amounts of ingredients is "part by weight". | | | Example | | | | |
|---|---|---|---|---|---|---|---|
| | | | 21 | 22 | 23 | 24 | 25 |
| First liquid | Copolymer (A) solution | Copolymer (S-1) solution | | | | | |
| | | Copolymer (S-2) solution | | | | | |
| | | Copolymer (S-3) solution | | | | | |
| | | Copolymer (S-4) solution | | | | | |
| | | Copolymer (S-5) solution | | | | | |
| | | Copolymer (S-6) solution | 24.8 | | | | |
| | | Copolymer (S-7) solution | | 25.1 | 25.1 | 22.6 | 20 |
| | Additive | Ethyl silicate 28 *1 | | | | | 1 |
| | | Disparlon 630-20X *2 | | | | | 0.4 |
| | | 2-Pyridinethiol-1-oxide copper salt *3 | | | | | |
| | | Acethylacetone *4 | 1 | 1 | 1 | | |
| | | Xylene | | | | | 1.6 |
| | | Water | 0.5 | 0.5 | 0.5 | 0.5 | |
| Second liquid | Copolymer (A) solution | Copolymer (S-7) solution | | | 3 | | |
| | | | | | | | |
| | Polyvalent metal compound (B) | Zinc oxide JIS 3 *21 | 10 | 10 | 10 | 10 | 15 |
| | | Burnt Zinc White *22 | | | | | 20 |
| | | Activated Zinc White *23 | | | | | 5 |
| | Dispersant | PEA solution | 3.1 | 3.1 | | | |
| | | Lutonal A-25 *5 | | | | | |
| | | Rosin *6 | | | | | |
| | | A3000X *7 | | | | | 4 |
| | | YP-90L *8 | | | | | |
| | | YP-90LL *9 | | | | | |
| | | Versatic 10 *10 | | | | 4 | |
| | Plasticizer | Toyoparax 150 *11 | 2 | 2 | 2 | 2 | 3 |
| | | | | | | | |
| | Antifouling agent(C) | Pyridine-triphenylborane *12 | 7 | 7 | 7 | 7 | 6 |
| | | 4-Isopropylpyridine-diphenylmethylborane *13 | | | | | |
| | | 2-Pyridinethiol-1-oxide zinc salt *14 | 2 | 2 | 2 | 2 | 2 |
| | | 2-Pyridinethiol-1-oxide copper salt *3 | | | | | |
| | | 4,5-Dichloro-2-n-octyl-4-isothiazolin-3-one *15 | | | | | |
| | | Cuprous oxide *16 | | | | | |
| | | Zinc sulfide *17 | | | | | |
| | Pigment | Organic red pigment *18 | 3 | 3 | 3 | 3 | |
| | | Iron oxide red *19 | 0.5 | 0.5 | 0.5 | 0.5 | 2 |
| | | Titan white *20 | 2.3 | 2.3 | 2.3 | 2.3 | 2 |
| | | Talc *24 | 9 | 9 | 9 | 9 | 4 |
| | Anti-sagging agent | Disparlon 4200-20 *25 | 1 | 1 | 1 | 1 | |
| | | Disparlon 630-20X *2 | 1 | 1 | 1 | 1 | 2 |
| | | Benton 38 *26 | | | | | |
| | | Aerosil #200 *27 | | | | | 0.2 |
| | Dehydrating agent | FT-2 *28 | | | | | 1 |
| | Solvent | 1-Butanol | 3.5 | 3.5 | 3.5 | 3.5 | |
| | | Propylene glycol monomethyl ether | 3.5 | 3.5 | 3.5 | 3.5 | |
| | | Xylene | 6 | 6 | 6 | 6 | 10.8 |
| | | Methyl isobutyl ketone | | | | | |
| Properties | Paint specific gravity ($g/cm^3$) | | 1.28 | 1.28 | 1.28 | 1.28 | 1.65 |
| | Residue after heating (wt%) | | 70.5 | 70.2 | 70.8 | 72.6 | 79.7 |
| | Volatile organic compound weight (g/L) | | 377.6 | 380.8 | 373.2 | 350.2 | 335.0 |
| Evaluation results | Viscosity (KU value after mixing) | | 86 | 86 | 87 | 86 | 94 |
| | Stationary antifouling performance | | 5 | 5 | 5 | 5 | 5 |
| | Wearing degree (um/2 months) | | 31 | 25 | 31 | 26 | 24 |

(continue to next page)

Table 5 (continue from previous page)

| Note: The unit of amounts of ingredients is "part by weight". | | | Example | | | |
|---|---|---|---|---|---|---|
| | | | 26 | 27 | 28 | 29 |
| First liquid | Copolymer (A) solution | Copolymer (S-1) solution | | | | |
| | | Copolymer (S-2) solution | | | | |
| | | Copolymer (S-3) solution | | | | |
| | | Copolymer (S-4) solution | | | | |
| | | Copolymer (S-5) solution | | | | |
| | | Copolymer (S-6) solution | | | | |
| | | Copolymer (S-7) solution | 20 | 18 | 18 | 20 |
| | Additive | Ethyl silicate 28 *1 | 1 | 1 | 1 | 1 |
| | | Disparlon 630-20X *2 | 0.4 | 0.4 | 0.4 | 0.4 |
| | | 2-Pyridinethiol-1-oxide copper salt *3 | | | | |
| | | Acethylacetone *4 | | | | |
| | | Xylene | 1.6 | 1.6 | 1.6 | 1.6 |
| | | Water | | | | |
| Second liquid | Copolymer (A) solution | Copolymer (S-7) solution | | 2 | 2 | |
| | | | | | | |
| | Polyvalent metal compound(B) | Zinc oxide JIS 3 *21 | 15 | 15 | 15 | 18 |
| | | Burnt Zinc White *22 | 20 | 10 | | |
| | | Activated Zinc White *23 | 5 | 5 | 5 | 5 |
| | Dispersant | PEA solution | | | | |
| | | Lutonal A-25 *5 | | | | |
| | | Rosin *6 | | | | |
| | | A3000X *7 | | 4 | | |
| | | YP-90L *8 | | | | |
| | | YP-90LL *9 | 4 | | 4 | 4 |
| | | Versatic 10 *10 | | | | |
| | Plasticizer | Toyoparax 150 *11 | 3 | 3 | 3 | 3 |
| | | | | | | |
| | Antifouling agent(C) | Pyridine-triphenylborane *12 | 6 | 6 | 6 | |
| | | 4-Isopropylpyridine-diphenylmethylborane *13 | | | | |
| | | 2-Pyridinethiol-1-oxide zinc salt *14 | 2 | 2 | 2 | 3 |
| | | 2-Pyridinethiol-1-oxide copper salt *3 | | | | |
| | | 4,5-Dichloro-2-n-octyl-4-isothiazolin-3-one *15 | | | | |
| | | Cuprous oxide *16 | | | | |
| | | Zinc sulfide *17 | | 10 | 20 | 22 |
| | Pigment | Organic red pigment *18 | | | | |
| | | Iron oxide red *19 | 2 | 2 | 2 | 2 |
| | | Titan white *20 | 2 | 2 | 2 | 2 |
| | | Talc *24 | 4 | 4 | 4 | 4 |
| | Anti-sagging agent | Disparlon 4200-20 *25 | | | | |
| | | Disparlon 630-20X *2 | 2 | 2 | 2 | 2 |
| | | Benton 38 *26 | | | | |
| | | Aerosil #200 *27 | 0.2 | 0.2 | 0.2 | 0.2 |
| | Dehydrating agent | FT-2 *28 | 1 | 1 | 1 | 1 |
| | Solvent | 1-Butanol | | | | |
| | | Propylene glycol monomethyl ether | | | | |
| | | Xylene | 10.8 | 10.8 | 10.8 | 10.8 |
| | | Methyl isobutyl ketone | | | | |
| Properties | Paint specific gravity (g/cm$^3$) | | 1.65 | 1.64 | 1.62 | 1.70 |
| | Residue after heating (wt%) | | 79.7 | 79.7 | 79.7 | 81.5 |
| | Volatile organic compound weight (g/L) | | 335.0 | 332.9 | 328.9 | 314.5 |
| Evaluation results | Viscosity (KU value after mixing) | | 87 | 93 | 86 | 88 |
| | Stationary antifouling performance | | 5 | 5 | 5 | 5 |
| | Wearing degree (um/2 months) | | 21 | 25 | 29 | 24 |

Table 6

| | | | Comparative Example (two-package type) | | |
|---|---|---|---|---|---|
| | | | 1 | 2 | 3 |
| First liquid | Copolymer (A) solution | Copolymer (H-1) solution | 31.4 | | |
| | | Copolymer (H-2) solution | | 22.5 | |
| | | Copolymer (H-3) solution | | | 22.5 |
| Second liquid | Polyvalent metal compound (B) | Zinc oxide JIS 3 | 10 | 10 | 10 |
| | Dispersant | PEA solution (NV:70.3 wt%) | 5.7 | 5.7 | 5.7 |
| | Plasticizer | Toyoparax 150 | 2 | 2 | 2 |
| | Antifouling agent(C) | Copper rhodanate | | | |
| | | Cuprous oxide | | | |
| | | Pyridine-triohenylborane | 7 | 7 | 7 |
| | | 4-Isopropylpyridine-diphenylmethylborane | | | |
| | | 2-Pyridinethiol-1-oxide zinc salt | 2 | 2 | 2 |
| | | 2-Pyridinethiol-1-oxide copper salt | | | |
| | | 4,5-Dichloro-2-n-octyl-4-isothiazolin-3-one | | | |
| | | N,N-dimethyldichlorophenyl-urea | | | |
| | Pigment | Organic red pigment | 3 | 3 | 3 |
| | | Iron oxide red | 0.5 | 0.5 | 0.5 |
| | | Titan white | 2.3 | 2.3 | 2.3 |
| | | Talc | 9 | 9 | 9 |
| | Anti-sagging agent | Disparlon 4200-20 | 1 | 1 | 1 |
| | | Disparlon 630-20X | 1 | 1 | 1 |
| | Solvent | 1-Butanol | 3.5 | 3.5 | 3.5 |
| | | Propylene glycol monomethyl ether | 3.5 | 3.5 | 3.5 |
| | | Xylene | 7 | 7 | 7 |
| Properties | Paint specific gravity ($g/cm^3$) | | 1.21 | 1.27 | 1.27 |
| | Residue after heating (wt%) | | 63.0 | 69.8 | 69.8 |
| | Volatile organic compound weight (g/L) | | 447.7 | 382.6 | 382.6 |

(continued)

| | | Comparative Example (two-package type) | | |
|---|---|---|---|---|
| | | 1 | 2 | 3 |
| Evaluation results | Viscosity (immediately after mixing) | 80 | 104 | 85 |
| | Antifouling performance | 4 | 4 | 3 |
| | Wearing degree (μm/2 months) | 21 | 21 | -(*) |
| * Measurement was disabled, because the coating film was warped. Note: The unit of amounts of ingredients is "part by weight". | | | | |

Table 7

| | | | Example | | |
|---|---|---|---|---|---|
| | | | 30 | 31 | 32 |
| First liquid | Copolymer (A) solution | Copolymer (S-1) solution | 22.3 | 22.3 | 22.3 |
| Second liquid | Dispersant | PEA solution | 5.6 | 5.6 | 5.6 |
| | Additive | Zinc oxide JIS 3 | 10.0 | 10.0 | |
| | | Activated zinc white | | | 10.0 |
| | | Water | | 2.0 | |
| | Solvent | Xylene | 10.0 | 10.0 | 10.0 |
| IR analysis | Absorption at 1600 $cm^{-1}$ | after 1 hr | None | Large | Medium |
| | | after 24 hr | None | Large | Large |
| | | after 120 hr | Small | - | - |
| Note: The unit of amounts of ingredients is "part by weight". | | | | | |

Table 8

| | | | Example 33 | Example 34 | Example 35 | Example 36 |
|---|---|---|---|---|---|---|
| First liquid | Copolymer (A) solution | Copolymer (S-1) solution | | | | |
| | | Copolymer (S-2) solution | | | | |
| | | Copolymer (S-3) solution | | | | |
| | | Copolymer (S-4) solution | | | | |
| | | Copolymer (S-5) solution | | | | |
| | | Copolymer (S-6) solution | | | | |
| | | Copolymer (S-7) solution | 25.1 | 25.1 | 25.1 | 25.1 |
| | Additive | Acethylacetone | 1 | 1 | 1 | 1 |
| | | Water | 0 | 0.25 | 0.5 | 1 |
| | | Disparlon 630-20X | | | | |
| | | Xylene | | | | |
| | | Ethyl silicate 28 | | | | |
| Second liquid | Polyvalent metal compound (B) | Zinc oxide JIS 3 | 10 | 10 | 10 | 10 |
| | | Burnt Zinc White | | | | |
| | | Activated Zinc White | | | | |
| | Dispersant | PEA solution | 3.1 | 3.1 | 3.1 | 3.1 |
| | | Terpenephenol YP-90L | | | | |
| | Plasticizer | Toyoparax 150 | 2 | 2 | 2 | 2 |
| | Antifouling agent (C) | Pyridine-triphenylborane | 7 | 7 | 7 | 7 |
| | | 4-Isopropylpyridine-diphenylmethylborane | | | | |
| | | 2-Pyridinethiol-1-oxide zinc salt | 2 | 2 | 2 | 2 |
| | | 2-Pyridinethiol-1-oxide copper salt | | | | |
| | | 4,5-Dichloro-2-n-octyl-4-iso thiazolin-3-one | | | | |
| | | Cuprous oxide | | | | |
| | Pigment | Organic red pigment | 3 | 3 | 3 | 3 |
| | | Iron oxide red | 0.5 | 0.5 | 0.5 | 0.5 |
| | | Titan white | 2.3 | 2.3 | 2.3 | 2.3 |
| | | Talc | 9 | 9 | 9 | 9 |
| | Anti-sagging agent | Benton 38 | 1 | 1 | 1 | 1 |
| | | Aerosil #200 | 1 | 1 | 1 | 1 |
| | Solvent | 1-Butanol | 3.5 | 3.5 | 3.5 | 3.5 |
| | | Propylene glycol monomethyl ether | 3.5 | 3.5 | 3.5 | 3.5 |
| | | Xylene | 8 | 8 | 8 | 8 |
| Properties | Paint specific gravity ($g/cm^3$) | | 1.263 | 1.262 | 1.26 | 1.259 |
| | Residue after heating (wt%) | | 68.7 | 68.5 | 68.4 | 68.6 |
| | Volatile organic compound weight (g/L) | | 395.3 | 397.5 | 398.5 | 395.3 |
| Evaluation results | Viscosity change (KU value) | after 0 hr | 86 | 84 | 83 | 81 |
| | | after 0.5 hr | 86 | 82 | 82 | 89 |
| | | after 1 hr | 85 | 82 | 84 | 92 |
| | | after 3 hr | 84 | 84 | 93 | 95 |
| | | after 6 hr | 82 | 93 | 95 | 98 |
| | | after 30 hr | 106 | 106 | 104 | 102 |
| | | after 192 hr | 128 | 124 | 122 | 116 |
| | Pot life (time required until KU reaches 95) | | 10 hr or more | 6 hr | 6 hr | 3 hr |

Note: The unit of amounts of ingredients is "part by weight".

(continue to next page)

Table 8 (continue from previous page)

| | | | Example 37 | 38 | 39 | 40 |
|---|---|---|---|---|---|---|
| First liquid | Copolymer (A) solution | Copolymer (S-1) solution | | | | |
| | | Copolymer (S-2) solution | | | | |
| | | Copolymer (S-3) solution | | | | |
| | | Copolymer (S-4) solution | | | | |
| | | Copolymer (S-5) solution | | | | |
| | | Copolymer (S-6) solution | | | | |
| | | Copolymer (S-7) solution | 25.1 | 17 | 17 | 17 |
| | Additive | Acethylacetone | | | | |
| | | Water | 1 | | | |
| | | Disparlon 630-20X | | 0.4 | 0.4 | 0.4 |
| | | Xylene | | 2.6 | 1.6 | 1.6 |
| | | Ethyl silicate 28 | | | 1 | 1 |
| Second liquid | Polyvalent metal compound (B) | Zinc oxide JIS 3 | 10 | 20 | 20 | 15 |
| | | Burnt Zinc White | | 20 | 20 | 20 |
| | | Activated Zinc White | | | | 5 |
| | Dispersant | PEA solution | 3.1 | 3 | 3 | 3 |
| | | Terpenephenol YP-90L | | 4 | 4 | 4 |
| | Plasticizer | Toyoparax 150 | 2 | 3 | 3 | 3 |
| | Antifouling agent (C) | Pyridine-triphenylborane | 7 | 6 | 6 | 6 |
| | | 4-Isopropylpyridine-diphenylmethylborane | | | | |
| | | 2-Pyridinethiol-1-oxide zinc salt | 2 | 2 | 2 | 2 |
| | | 2-Pyridinethiol-1-oxide copper salt | | | | |
| | | 4,5-Dichloro-2-n-octyl-4-iso thiazolin-3-one | | | | |
| | | Cuprous oxide | | | | |
| | Pigment | Organic red pigment | 3 | | | |
| | | Iron oxide red | 0.5 | 2 | 2 | 2 |
| | | Titan white | 2.3 | 2 | 2 | 2 |
| | | Talc | 9 | 5 | 5 | 5 |
| | Anti-sagging agent | Benton 38 | 1 | 2 | 2 | 2 |
| | | AEROSIL #200 | 1 | 0.2 | 0.2 | 0.2 |
| | Solvent | 1-Butanol | 3.5 | | | |
| | | Propylene glycol monomethyl ether | 3.5 | | | |
| | | Xylene | 8 | 10.8 | 10.8 | 10.8 |
| Properties | Paint specific gravity (g/cm$^3$) | | 1.264 | 1.66 | 1.66 | 1.66 |
| | Residue after heating (wt%) | | 68.8 | 78.7 | 79.7 | 79.65 |
| | Volatile organic compound weight (g/L) | | 394.4 | 353.6 | 337.0 | 337.8 |
| Evaluation results | Viscosity change (KU value) | after 0 hr | 84 | 87 | 85 | 87 |
| | | after 0.5 hr | 90 | 87 | 85 | 89 |
| | | after 1 hr | 95 | 87 | 84 | 89 |
| | | after 3 hr | 101 | 86 | 84 | 93 |
| | | after 6 hr | 102 | 86 | 84 | 107 |
| | | after 30 hr | 109 | 107 | 114 | 123 |
| | | after 192 hr | 125 | 122 | 128 | 137 |
| | Pot life (time required until KU reaches 95) | | 1 hr | 10 hr or more | 10 hr or more | 3 hr |

Table 9

| | | | Comparative Example 1 | 2 |
|---|---|---|---|---|
| First liquid | Copolymer (A) solution | Copolymer (H-1) solution | 31.4 | |
| | | Copolymer (H-2) solution | | 22.5 |

(continued)

| | | | | Comparative Example 1 | Comparative Example 2 |
|---|---|---|---|---|---|
| Second liquid | Polyvalent metal compound (B) | Zinc oxide JIS 3 | | 10 | 10 |
| | Dispersant | PEA solution | | 5.7 | 5.7 |
| | Plasticizer | Toyoparax 150 | | 2 | 2 |
| | Antifouling agent (C) | Cuprous oxide | | | |
| | | Pyridine-triphenylborane | | 7 | 7 |
| | | 4-Isopropylpyridine-diphenylmethylborane | | | |
| | | 2-Pyridinethiol-1-oxide zinc salt | | 2 | 2 |
| | | 2-Pyridinethiol-1-oxide copper salt | | | |
| | | 4,5-Dichloro-2-n-octyl-4-iso thiazolin-3-one | | | |
| | Pigment | Organic red pigment | | 3 | 3 |
| | | Iron oxide red | | 0.5 | 0.5 |
| | | Titan white | | 2.3 | 2.3 |
| | | Talc | | 9 | 9 |
| | Anti-sagging agent | Benton 38 | | 1 | 1 |
| | | Aerosil #200 | | 1 | 1 |
| | Solvent | 1-Butanol | | 3.5 | 3.5 |
| | | Propylene glycol monomethyl ether | | 3.5 | 3.5 |
| | | Xylene | | 7 | 7 |
| Properties | Paint specific gravity ($g/cm^3$) | | | 1.21 | 1.27 |
| | Residue after heating (wt%) | | | 63.0 | 69.8 |
| | Volatile organic compound weight (g/L) | | | 447.7 | 382.6 |
| Evaluation results | Viscosity change (KU value) | | after 0 hr | 80 | 104 |
| | | | after 0.5 hr | 80 | 109 |
| | | | after 1 hr | 80 | 114 |
| | | | after 3 hr | 80 | 117 |
| | | | after 6 hr | 82 | 123 |
| | | | after 26 hr | 84 | * |
| | | | after 54 hr | 104 | - |
| | Pot life (time required until KU reaches 95) | | | 26 hr or more | 0 |

* measurement was disabled
Note: The unit of amounts of ingredients is "part by weight".

Table 10

| | | | Example | | | | Comp. Ex. |
|---|---|---|---|---|---|---|---|
| | | | 38 | 39 | 40 | 41 | 4 |
| First liquid | Copolymer (A) solution | Copolymer (S-1) solution | | | | | |
| | | Copolymer (S-2) solution | | | | | |
| | | Copolymer (S-3) solution | | | | | |
| | | Copolymer (S-4) solution | | | | | |
| | | Copolymer (S-5) solution | | | | | |
| | | Copolymer (S-6) solution | | | | | |
| | | Copolymer (S-7) solution | 17 | 17 | 17 | 17 | |
| | | Copolymer (H-3) solution | | | | | 17 |
| | Additive | Disparlon 630-20X | 0.4 | 0.4 | 0.4 | 0.4 | 0.4 |
| | | Xylene | 2.6 | 1.6 | 1.6 | | 1.6 |
| | | Ethyl silicate 28 | | 1 | 1 | | 1 |
| | | Acethylacetone | | | | 1 | |
| | | Water | | | | 1 | |
| Second liquid | Polyvalent metal compound (B) | Zinc oxide JIS 3 | 20 | 20 | 15 | 20 | 15 |
| | | Burnt Zinc White | 20 | 20 | 20 | 20 | 20 |
| | | Activated Zinc White | | | 5 | | 5 |
| | Dispersant | PEA solution | 3 | 3 | 3 | 3 | 3 |
| | | Terpenephenol YP-90L | 4 | 4 | 4 | 4 | 4 |
| | Plasticizer | Toyoparax 150 | 3 | 3 | 3 | 3 | 3 |
| | Antifouling agent(C) | Pyridine-triphenylborane | 6 | 6 | 6 | 6 | 6 |
| | | 4-Isopropylpyridine-diphenylmethylborane | | | | | |
| | | 2-Pyridinethiol-1-oxide zinc salt | 2 | 2 | 2 | 2 | 2 |
| | | 2-Pyridinethiol-1-oxide copper salt | | | | | |
| | | 4,5-Dichloro-2-n-octyl-4-isothiazolin-3-one | | | | | |
| | | Cuprous oxide | | | | | |
| | Pigment | Organic red pigment | | | | | |
| | | Iron oxide red | 2 | 2 | 2 | 2 | 2 |
| | | Titan white | 2 | 2 | 2 | 2 | 2 |
| | | Talc | 5 | 5 | 5 | 5 | 5 |
| | Anti-sagging agent | Benton 38 | 2 | 2 | 2 | 2 | 2 |
| | | Aerosil #200 | 0.2 | 0.2 | 0.2 | 0.2 | 0.2 |
| | Solvent | 1-Butanol | | | | | |
| | | Propylene glycol monomethyl ether | | | | | |
| | | Xylene | 10.8 | 10.8 | 10.8 | 10.8 | 10.8 |

(continued)

| | | | Example | | | | Comp. Ex. |
|---|---|---|---|---|---|---|---|
| | | | 38 | 39 | 40 | 41 | 4 |
| Properties | Paint specific gravity (g/cm$^3$) | | 1.66 | 1.66 | 1.66 | 1.67 | 1.66 |
| | Residue after heating (wt%) | | 78.7 | 79.7 | 79.65 | 79.2 | 79.65 |
| | Volatile organic compound weight (g/L) | | 353.6 | 337.0 | 337.8 | 347.4 | 337.8 |
| Evaluation results | Wood block pressing test | after 1 day | 2 | 3 | 4 | 4 | 1 |
| | | after 3 days | 3 | 4 | 5 | 5 | 1 |
| | | after 5 days | 3 | 5 | 5 | 5 | 1 |
| | | after 7 days | 4 | 5 | 5 | 5 | 1 |
| Note: The unit of amounts of ingredients is "part by weight". | | | | | | | |

## Claims

**1.** A high-solid antifouling paint composition comprising:

(A) a carboxyl group-containing copolymer that has a structural unit derived from an unsaturated carboxylic acid monomer (a1) and a structural unit derived from an other unsaturated compound monomer (a2) copolymerizable with the unsaturated carboxylic acid monomer (a1) and has a weight average molecular weight of 1,000 to 6,000 as measured with GPC,
(B) a polyvalent metal compound capable of reacting with the carboxyl group of the carboxyl group-containing copolymer (A), and
(C) an antifouling agent.

**2.** The high-solid antifouling paint composition according to claim 1, which is a high-solid multi-package antifouling paint composition obtained by mixing a first liquid comprising the carboxyl group-containing copolymer (A) and a second liquid comprising the polyvalent metal compound (B).

**3.** The high-solid antifouling paint composition according to claim 1 or 2, which is a high-solid two-package antifouling paint composition obtained by mixing a first liquid and a second liquid, wherein
the first liquid comprises the carboxyl group-containing copolymer (A), and
the second liquid comprises the polyvalent metal compound (B).

**4.** The high-solid antifouling paint composition according to any one of claims 1 to 3, which is a high-solid two-package antifouling paint composition obtained by mixing a first liquid and a second liquid, wherein
the first liquid comprises the carboxyl group-containing copolymer (A),
the second liquid comprises the polyvalent metal compound (B), and
at least one of the first liquid and the second liquid contains the antifouling agent (C).

**5.** The high-solid antifouling paint composition according to any one of claims 1 to 4, which is a high-solid two-package antifouling paint composition obtained by mixing a first liquid and a second liquid, wherein
the first liquid comprises the carboxyl group-containing copolymer (A) and does not contain the polyvalent metal compound (B),
the second liquid comprises the carboxyl group-containing copolymer (A) and the polyvalent metal compound (B) and does not contain water in a substantial amount, and
at least one of the first liquid and the second liquid contains the antifouling agent (C).

**6.** The high-solid antifouling paint composition according to claim 5, wherein the second liquid comprises the carboxyl group-containing copolymer (A) in an amount of 1 to 30% by weight of the total amount of the carboxyl group-containing copolymer (A).

**7.** The high-solid antifouling paint composition according to claim 1 or 2, which is a high-solid three-package antifouling

paint composition obtained by mixing a first liquid, a second liquid, and a third liquid, wherein
the first liquid comprises the carboxyl group-containing copolymer (A),
the second liquid comprises the polyvalent metal compound (B),
the third liquid comprises at least one ingredient selected from a defoaming agent, a viscosity modifier, a coating film curing rate modifier, and a coating film hardness modifier, and
at least one of the first liquid, the second liquid, and the third liquid contains the antifouling agent (C).

**8.** The high-solid antifouling paint composition according to claim 1, 2, or 7, which is a high-solid three-package antifouling paint composition obtained by mixing a first liquid, a second liquid, and a third liquid, wherein
the first liquid comprises the carboxyl group-containing copolymer (A) and does not contain the polyvalent metal compound (B),
the second liquid comprises the carboxyl group-containing copolymer (A) and polyvalent metal compound (B), and does not contain water in a substantial amount,
the third liquid comprises at least one ingredient selected from a defoaming agent, a viscosity modifier, a coating film curing rate modifier, and a coating film hardness modifier, and
at least one of the first liquid, the second liquid, and the third liquid contains the antifouling agent (C).

**9.** The high-solid antifouling paint composition according to claim 8, wherein the second liquid comprises the carboxyl group-containing copolymer (A) in an amount of 1 to 30% by weight of the total amount of the carboxyl group-containing copolymer (A).

**10.** The high-solid antifouling paint composition according to any one of claims 1 to 9, wherein the volatile organic compound content (VOC) is 400 g/L or less.

**11.** The high-solid antifouling paint composition according to any one of claims 1 to 10, wherein the volatile organic compound content (VOC) is 100 g/L to 350 g/L.

**12.** The high-solid antifouling paint composition according to any one of claims 1 to 11, wherein the carboxyl group-containing copolymer (A) has a weight average molecular weight of 1,300 to 5,500 as measured with GPC.

**13.** The high-solid antifouling paint composition according to any one of claims 1 to 12, wherein the carboxyl group-containing copolymer (A) has a weight average molecular weight of 1,500 to 5,000 as measured with GPC.

**14.** The high-solid antifouling paint composition according to any one of claims 2 to 13, wherein
the first liquid comprises a solution of the carboxyl group-containing copolymer (A) whose viscosity at 25°C is 800 mPa·s or less when measured for a solution with a non-volatile content of 50 wt% and is 20,000 mPa·s or less when measured for a solution with a non-volatile content of 70 wt%, and optionally another ingredient(s), and
the carboxyl group-containing copolymer (A) contains the structural unit derived from the unsaturated carboxylic acid monomer (a1) in an amount of 5 to 50% by weight based on 100% by weight of the carboxyl group-containing copolymer (A).

**15.** The high-solid antifouling paint composition according to any one of claims 1 to 14, wherein the carboxyl group-containing copolymer (A) is a copolymer produced by radical solution polymerization in a solvent using a radical polymerization initiator in an amount of 10 parts by weight or more based on 100 parts by weight of the total amount of raw monomers.

**16.** The high-solid antifouling paint composition according to any one of claims 1 to 15, wherein the unsaturated carboxylic acid monomer (a1) is a monocarboxylic acid monomer.

**17.** The antifouling paint composition according to claim 16, wherein the monocarboxylic acid monomer is (meth) acrylic acid.

**18.** The high-solid antifouling paint composition according to any one of claims 1 to 17, wherein
the unsaturated carboxylic acid monomer (a1) is (meth)acrylic acid, and
the other unsaturated compound monomer (a2) is at least one kind of monomer selected from the group consisting of an alkyl (meth) acrylate and a derivative thereof, styrene and a derivative thereof, vinyl acetate, vinyl propionate, (meth)acrylamide and a derivative thereof, and (meth)acrylonitrile.

**19.** The high-solid antifouling paint composition according to any one of claims 1 to 18, wherein the polyvalent metal compound (B) is a compound of a divalent or trivalent metal.

**20.** The high-solid antifouling paint composition according to claim 19, wherein the polyvalent metal compound (B) is at least one kind of compound selected from the group consisting of oxides, hydroxides, halides, and carboxylates of divalent or trivalent metals.

**21.** The high-solid antifouling paint composition according to any one of claims 1 to 20, wherein the polyvalent metal is at least one kind of metal selected from the group consisting of zinc, copper, germanium, magnesium, calcium, cobalt, and aluminum.

**22.** The high-solid antifouling paint composition according to any one of claims 1 to 21, wherein the polyvalent metal compound (B) is an oxide of at least one kind of polyvalent metal selected from the group consisting of zinc, copper, germanium, magnesium, calcium, and cobalt.

**23.** The high-solid antifouling paint composition according to claim 22, wherein the polyvalent metal compound (B) is zinc oxide and/or cupric oxide.

**24.** The high-solid antifouling paint composition according to claim 23, wherein the polyvalent metal compound (B) is activated zinc white.

**25.** The high-solid antifouling paint composition according to any one of claims 1 to 24, containing 1 to 500 parts by weight of the polyvalent metal compound (B) based on 100 parts by weight of the carboxyl group-containing copolymer (A).

**26.** The high-solid antifouling paint composition according to any one of claims 1 to 25, containing the polyvalent metal compound (B) in a ratio of 0.1 to 500 moles per mole of carboxyl group of the carboxyl group-containing copolymer (A).

**27.** The high-solid antifouling paint composition according to any one of claims 1 to 26, containing a copper compound (c1) as the antifouling agent (C).

**28.** The high-solid antifouling paint composition according to claim 27, wherein the copper compound (c1) is cuprous oxide.

**29.** The high-solid antifouling paint composition according to any one of claims 1 to 26, containing zinc sulfide (c2) as the antifouling agent (C).

**30.** The high-solid antifouling paint composition according to any one of claims 1 to 26, containing an organic antifouling agent (c3) as the antifouling agent (C).

**31.** The high-solid antifouling paint composition according to claim 30, wherein the organic antifouling agent (c3) is at least one kind of compound selected from the group consisting of a pyrithione compound, an amine-organoborane complex, and 4,5-dichloro-2-n-octyl-4-isothiazolin-3-one.

**32.** The high-solid antifouling paint composition according to claim 30 or 31, containing zinc pyrithione, and pyridine-triphenylborane complex or 4-isopropylpyridine-diphenylmethylborane complex as the organic antifouling agent (c3).

**33.** The high-solid antifouling paint composition according to claim 30 or 31, containing zinc pyrithione and 4,5-dichloro-2-n-octyl-4-isothiazolin-3-one as the organic antifouling agent (c3).

**34.** The high-solid antifouling paint composition according to any one of claims 30 to 33, not containing cuprous oxide in a substantial amount as the antifouling agent (C).

**35.** The high-solid antifouling paint composition according to any one of claims 1 to 26, containing the copper compound (c1) and the organic antifouling agent (c3) as the antifouling agent (C).

**36.** The high-solid antifouling paint composition according to claim 35, wherein the organic antifouling agent (c3) is at least one kind of compound selected from the group consisting of a pyrithione compound, an amine-organoborane

complex, and 4,5-dichloro-2-n-octyl-4-isothiazolin-3-one.

**37.** The high-solid antifouling paint composition according to claim 35 or 36, wherein the organic antifouling agent (c3) is at least one kind of compound selected from the group consisting of copper pyrithione, zinc pyrithione, pyridine-triphenylborane complex, 4-isopropylpyridine-diphenylmethylborane complex, and 4,5-dichloro-2-n-octyl-4-isothiazolin-3-one.

**38.** The high-solid antifouling paint composition according to any one of claims 1 to 26, containing cuprous oxide, and copper pyrithione or zinc pyrithione as the antifouling agent (C).

**39.** The high-solid antifouling paint composition according to claim 38, containing cuprous oxide, copper pyrithione or zinc pyrithione, and
4,5-dichloro-2-n-octyl-4-isothiazolin-3-one as the antifouling agent (C).

**40.** The high-solid antifouling paint composition according to any one of claims 1 to 26, containing zinc sulfide (c2) and the organic antifouling agent (c3) as the antifouling agent (C).

**41.** The high-solid antifouling paint composition according to claim 40, wherein the organic antifouling agent (c3) is at least one kind of compound selected from the group consisting of a pyrithione compound, an amine-organoborane complex, and 4,5-dichloro-2-n-octyl-4-isothiazolin-3-one.

**42.** The high-solid antifouling paint composition according to claim 40 or 41, wherein the organic antifouling agent (c3) is at least one kind of compound selected from the group consisting of copper pyrithione, zinc pyrithione, pyridine-triphenylborane complex, 4-isopropylpyridine-diphenylmethylborane complex, and 4,5-dichloro-2-n-octyl-4-isothiazolin-3-one.

**43.** The high-solid antifouling paint composition according to any one of claims 40 to 42, not containing copper or any copper compound in a substantial amount as the antifouling agent (C).

**44.** The high-solid antifouling paint composition according to claim 43, containing zinc sulfide (c2) and zinc pyrithione as the antifouling agent (C).

**45.** The high-solid antifouling paint composition according to claim 43 or 44, containing zinc sulfide (c2), and pyridine-triphenylborane complex or 4-isopropylpyridine-diphenylmethylborane complex, and zinc pyrithione as the antifouling agent (C).

**46.** The high-solid antifouling paint composition according to any one of claims 43 to 45, containing zinc sulfide (c2), zinc pyrithione and 4,5-dichloro-2-n-octyl-4-isothiazolin-3-one as the antifouling agent (C).

**47.** The high-solid antifouling paint composition according to any one of claims 1 to 46, further comprising water (d1).

**48.** The high-solid antifouling paint composition according to any one of claims 1 to 47, further comprising an acetoacetyl group-containing compound (d2).

**49.** The high-solid antifouling paint composition according to any one of claims 1 to 48, further comprising an alkoxysilane compound or a derivative thereof (d3).

**50.** The high-solid antifouling paint composition according to any one of claims 1 to 49, further comprising a dispersant (d4).

**51.** The high-solid antifouling paint composition according to claim 50, wherein the dispersant (d4) is at least one kind of dispersant selected from the group consisting of a coal-based resin, a petroleum resin, a terpene resin, a vinyl ether (co)polymer, a (meth)acrylate ester (co)polymer, and a monocarboxylic acid compound having a molecular weight of 3,000 or less.

**52.** The high-solid antifouling paint composition according to any one of claims 1 to 51, further comprising an anti-sagging agent (d5).

**53.** The high-solid antifouling paint composition according to any one of claims 1 to 52, further comprising a plasticizer (d6).

**54.** The high-solid antifouling paint composition according to claim 53, wherein the plasticizer (d6) is a chlorinated paraffin and/or a phosphorous-based plasticizer.

**55.** The high-solid antifouling paint composition according to any one of claims 1 to 54, further comprising an extender pigment (d7).

**56.** The high-solid antifouling paint composition according to claim 55, wherein the extender pigment (d7) is talc.

**57.** The high-solid antifouling paint composition according to any one of claims 1 to 56, further comprising a color pigment (d8).

**58.** The high-solid antifouling paint composition according to claim 57, wherein the color pigment (d8) is at least one kind of color pigment selected from the group consisting of iron oxide red, titan white, yellow iron oxide, and an organic pigment.

**59.** The high-solid antifouling paint composition according to any one of claims 1 to 58, containing at least one kind of solvent (E) selected from the group consisting of toluene, xylene, trimethylbenzene, ethanol, propanol, butanol, ethylene glycol monobutyl ether, methyl isobutyl ketone, and propylene glycol monomethyl ether.

**60.** An antifouling coating film formed by curing the high-solid antifouling paint composition according to any one of claims 1 to 59.

**61.** A base material with a coating film, wherein a surface of the base material is coated with a coating film formed by curing the high solid antifouling paint composition according to any one of claims 1 to 59.

**62.** An antifouling base material, wherein the surface of the base material to be contacted with seawater or freshwater is coated with a coating film formed by curing the high-solid antifouling paint composition according to any one of claims 1 to 59.

**63.** The antifouling base material according to claim 62, wherein the base material is any one of submerged structures, outside boards of a ship, fishing nets and fishing implements.

**64.** A method for forming a coating film on a surface of a base material comprising:

coating or impregnating the surface of the base material with the high-solid antifouling paint composition according to any one of claims 1 to 59, followed by curing the high-solid antifouling paint composition to form a coating film.

**65.** An antifouling method for a base material comprising:

coating or impregnating the surface of the base material with the high-solid antifouling paint composition according to any one of claims 1 to 59, followed by curing the high-solid antifouling paint composition to form an antifouling coating film.

**66.** The antifouling method for a base material according to claim 65, wherein the base material is any one of an underwater structure, an outside board of a ship, a fishing net and a fishing gear.

**67.** A high-solid multi-package antifouling paint set comprising:

a first liquid comprising a carboxyl group-containing copolymer (A) that has a structural unit derived from an unsaturated carboxylic acid monomer (a1) and a structural unit derived from an other unsaturated compound monomer (a2) copolymerizable with the unsaturated carboxylic acid monomer (a1), and has a weight average molecular weight of 1,000 to 6,000 as measured with GPC,
a second liquid comprising a polyvalent metal compound (B) capable of reacting with the carboxyl group of the carboxyl group-containing copolymer (A), and

optionally an other component(s),
at least one of the said first liquid, the said second liquid, and the said other component(s) containing an antifouling agent (C).

**68.** A high-solid two-package antifouling paint set comprising:

a first liquid comprising a carboxyl group-containing copolymer (A) which has a structural unit derived from an unsaturated carboxylic acid monomer (a1) and a structural unit derived from an other unsaturated compound monomer (a2) copolymerizable with the unsaturated carboxylic acid monomer (a1), and has a weight average molecular weight of 1,000 to 6,000 as measured with GPC, and
a second liquid comprising a polyvalent metal compound (B) capable of reacting with the carboxyl group of the carboxyl group-containing copolymer (A),
the said first liquid and/or the said second liquid containing an antifouling agent (C).

**69.** The high-solid two-package antifouling paint set according to claim 68, wherein
the first liquid comprises the carboxyl group-containing copolymer (A) and does not contain the polyvalent metal compound (B), and
the second liquid comprises the carboxyl group-containing copolymer (A) and the polyvalent metal compound (B), and does not contain water in a substantial amount.

**70.** A high-solid three-package antifouling paint set comprising:

a first liquid comprising a carboxyl group-containing copolymer (A) that has a structural unit derived from an unsaturated carboxylic acid monomer (a1) and a structural unit derived from an other unsaturated compound monomer (a2) copolymerizable with the unsaturated carboxylic acid monomer (a1), and has a weight average molecular weight of 1,000 to 6,000 as measured with GPC,
a second liquid comprising a polyvalent metal compound (B) capable of reacting with the carboxyl group of the carboxyl group-containing copolymer (A),
a third liquid comprising at least one kind of ingredient selected from a defoaming agent, a viscosity modifier, a coating film curing rate modifier, and a coating film hardness modifier,
at least one of the said first liquid, the said second liquid, and the said third liquid containing an antifouling agent (C).

**71.** The high-solid three-package antifouling paint set according to claim 70, wherein
the first liquid comprises the carboxyl group-containing copolymer (A) and does not contain the polyvalent metal compound (B), and
the second liquid comprises the carboxyl group-containing copolymer (A) and the polyvalent metal compound (B), and does not contain water in a substantial amount.

Fig. 1

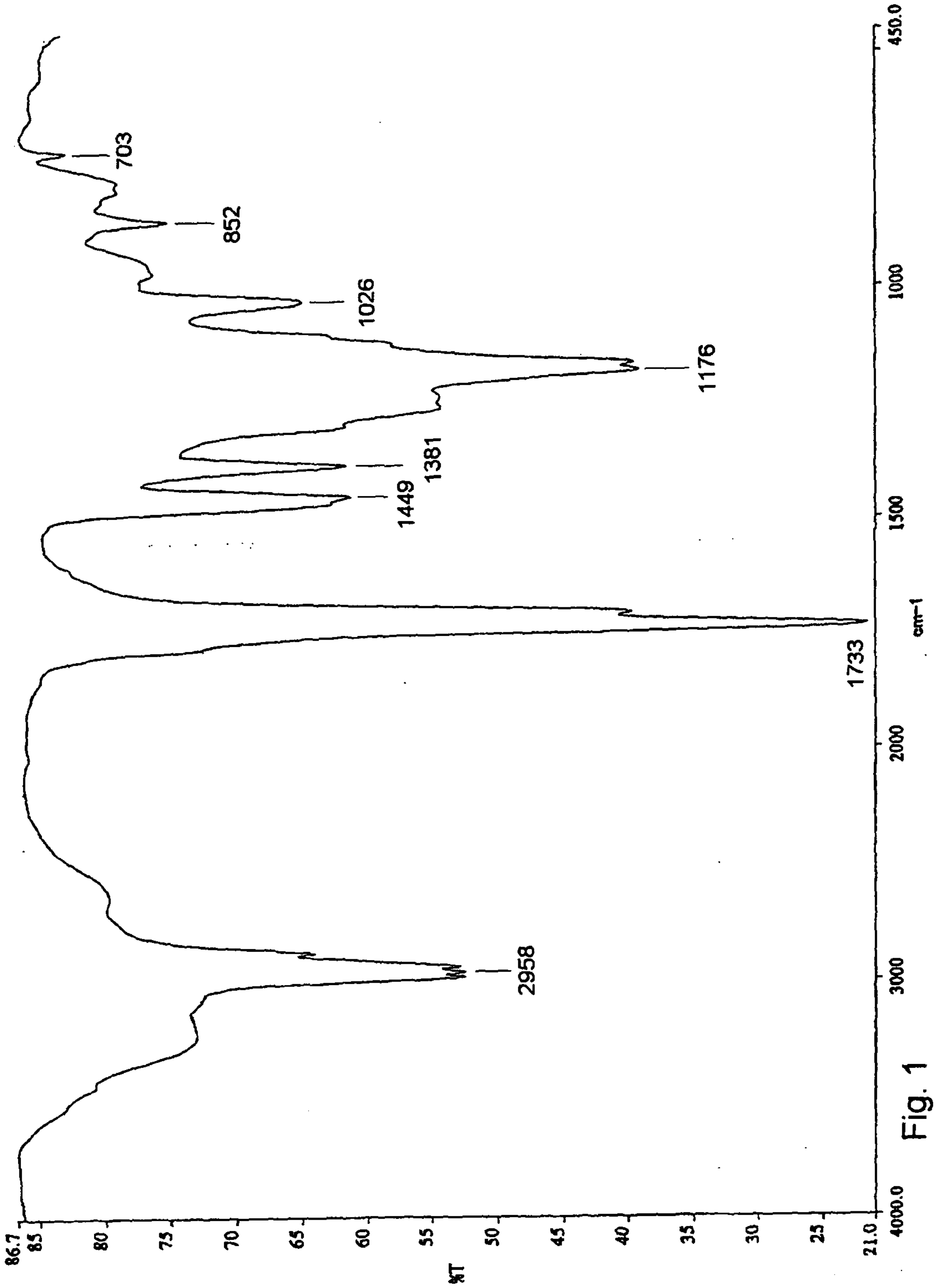
703
852
1026
1176
1381
1449
1733
2958
%T
86.7
85
80
75
70
65
60
55
50
45
40
35
30
25
21.0
4000.0
3000
2000
1500
1000
450.0
cm-1

Fig. 1

Fig. 2

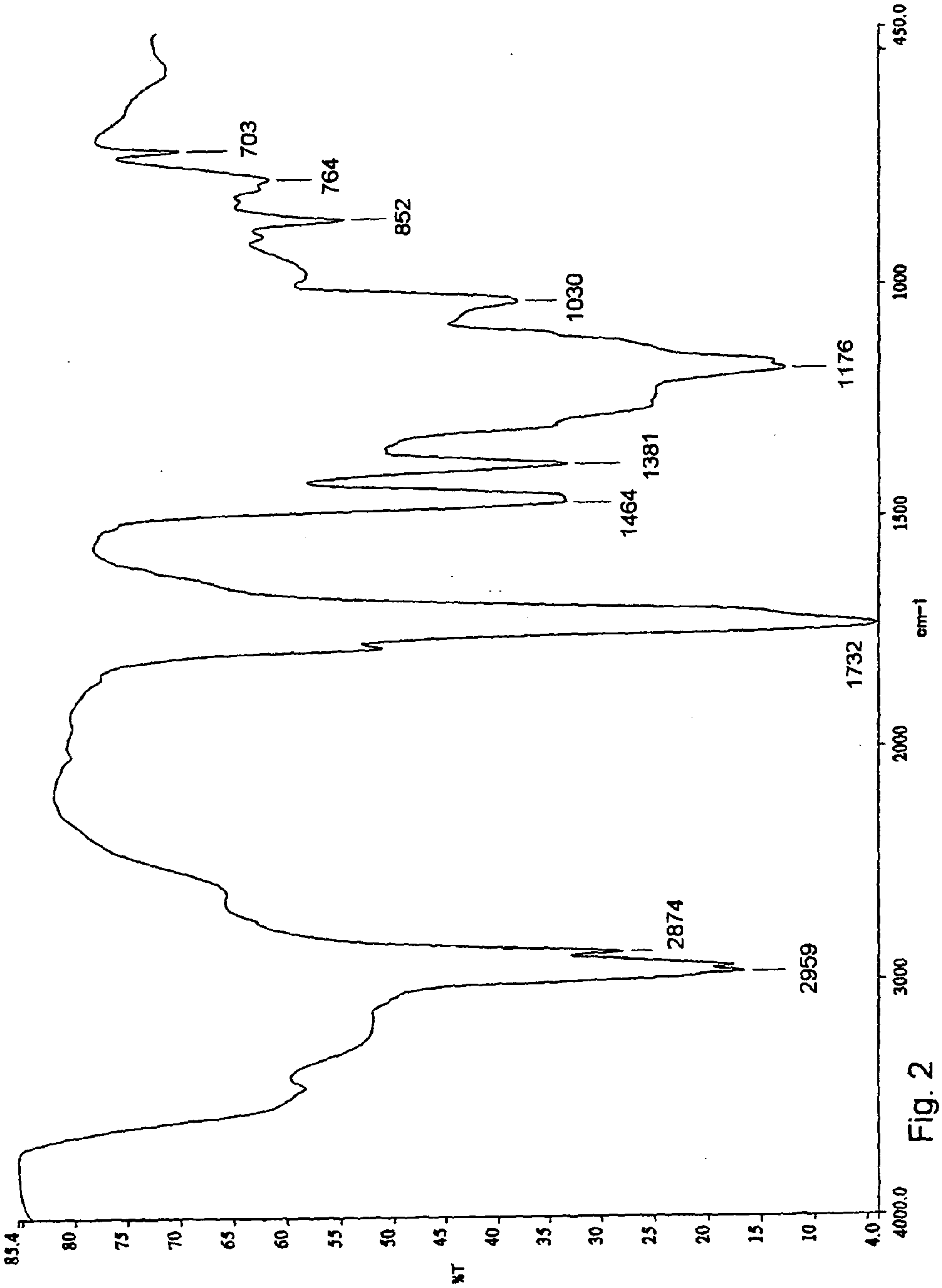

703
764
852
1030
1176
1381
1464
1732
2874
2959
%T
cm-1
85.4
80
75
70
65
60
55
50
45
40
35
30
25
20
15
10
4.0
4000.0
3000
2000
1500
1000
450.0


Fig. 2

Fig. 3

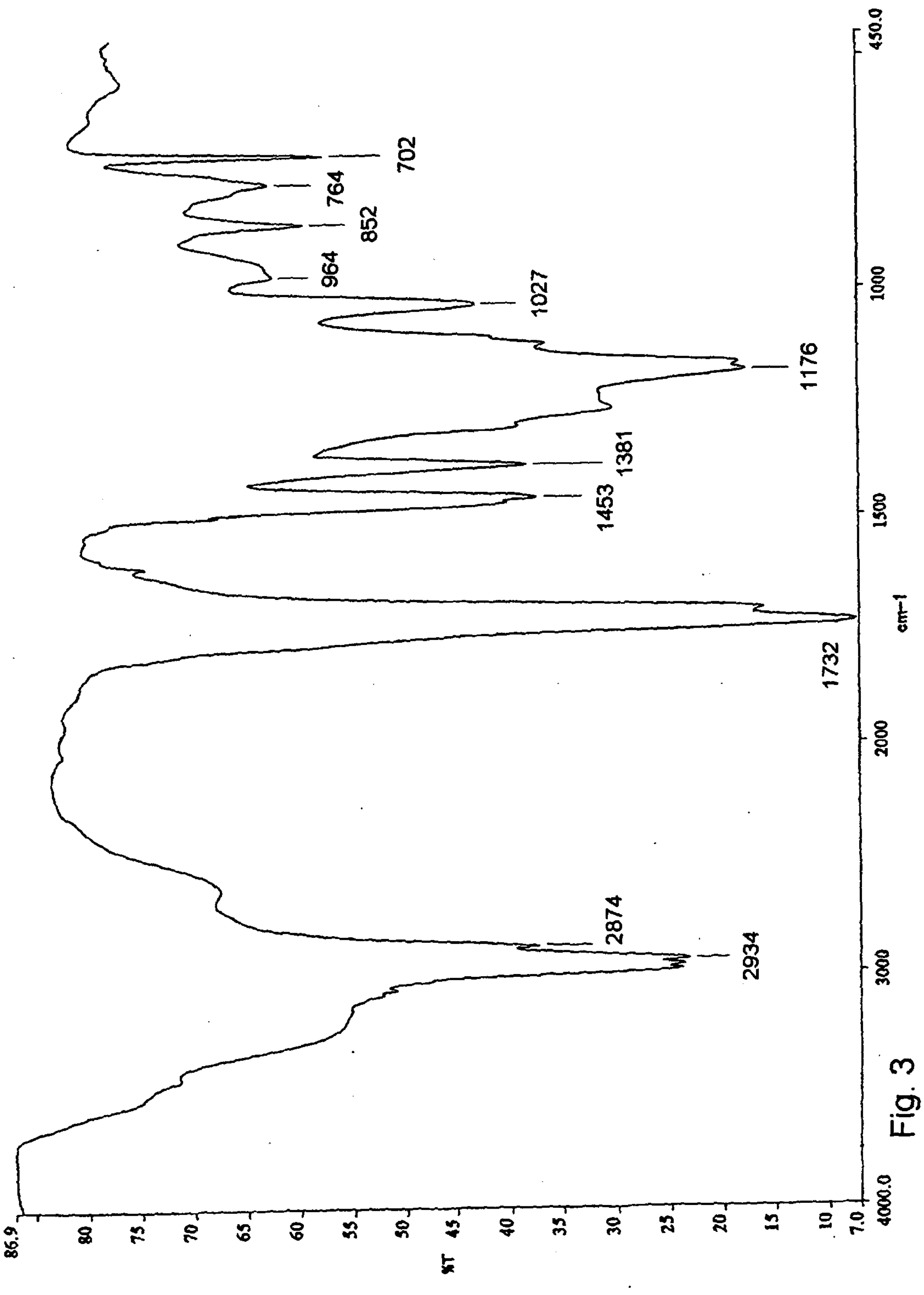
702
764
852
964
1027
1176
1381
1453
1732
2874
2934
Fig. 3
%T
cm-1
4000.0
3000
2000
1500
1000
450.0
86.9
80
75
70
65
60
55
50
45
40
35
30
25
20
15
10
7.0

Fig. 4

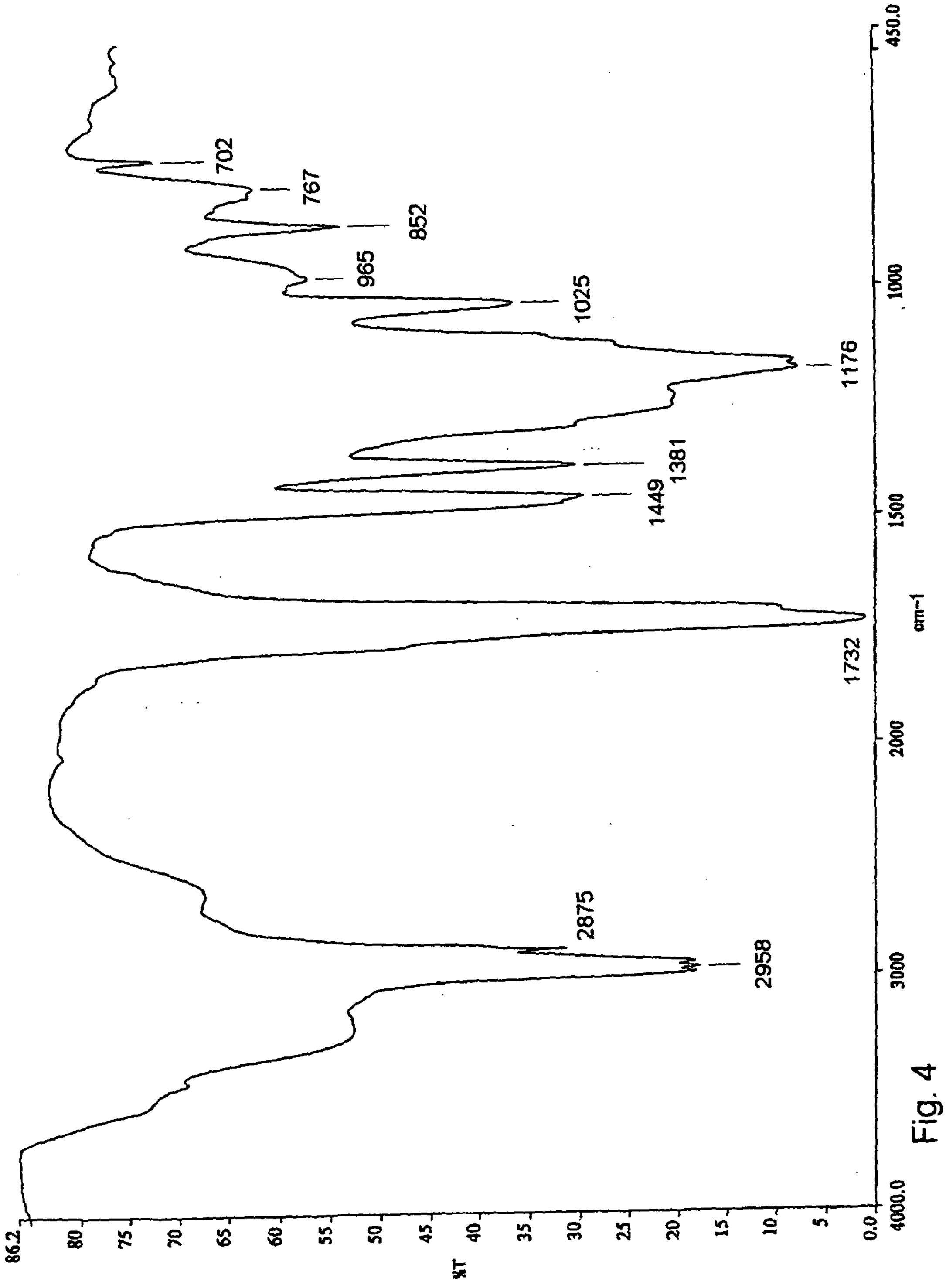
702
767
852
965
1025
1176
1381
1449
1732
2875
2958
Fig. 4
%T
cm-1
86.2
80
75
70
65
60
55
50
45
40
35
30
25
20
15
10
5
0.0
4000.0
3000
2000
1500
1000
450.0

Fig. 5

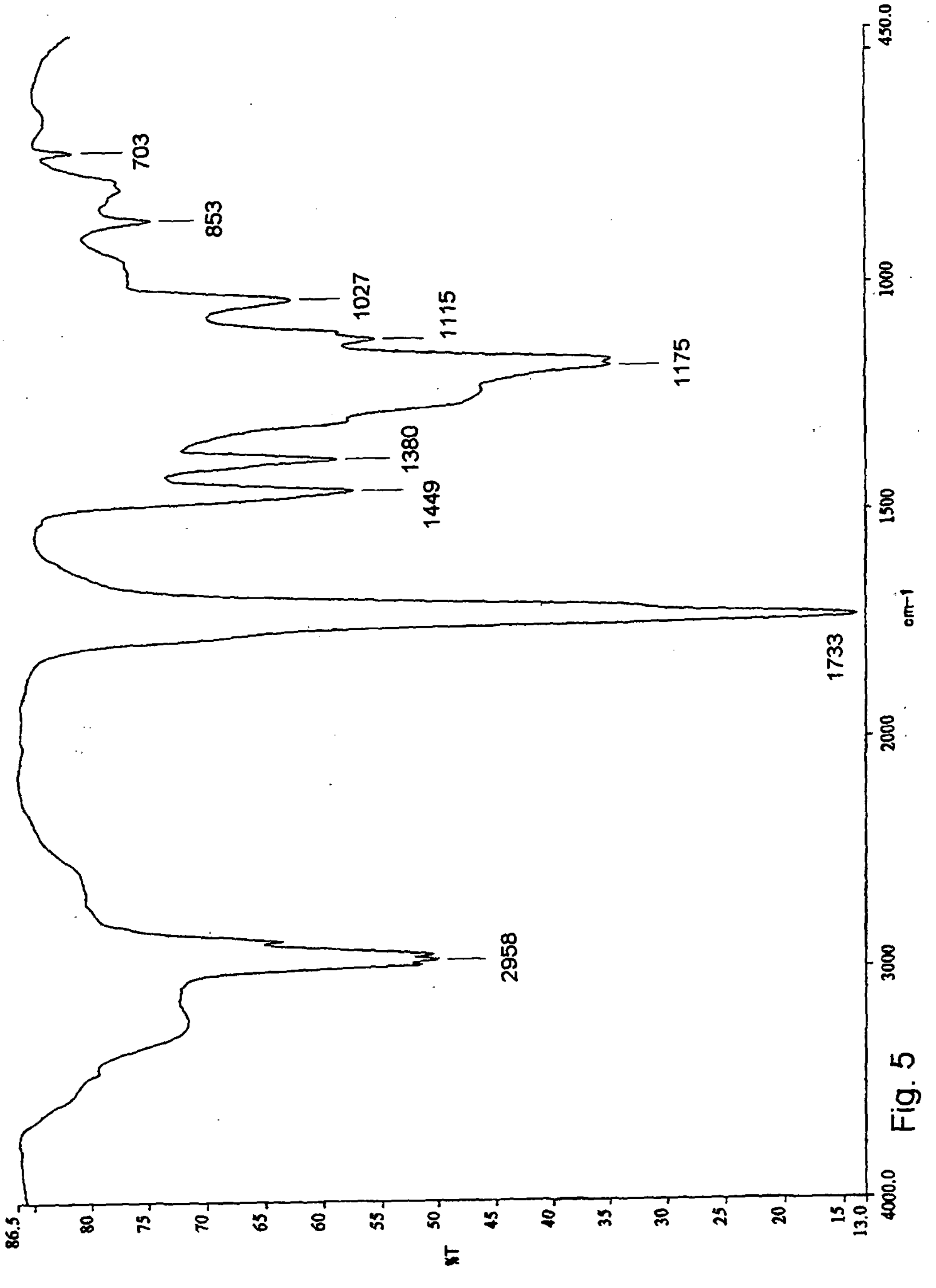
703
853
1027
1115
1175
1380
1449
1733
2958
%T
86.5
80
75
70
65
60
55
50
45
40
35
30
25
20
15
13.0
4000.0
3000
2000
1500
1000
450.0
cm-1
Fig. 5

Fig. 6

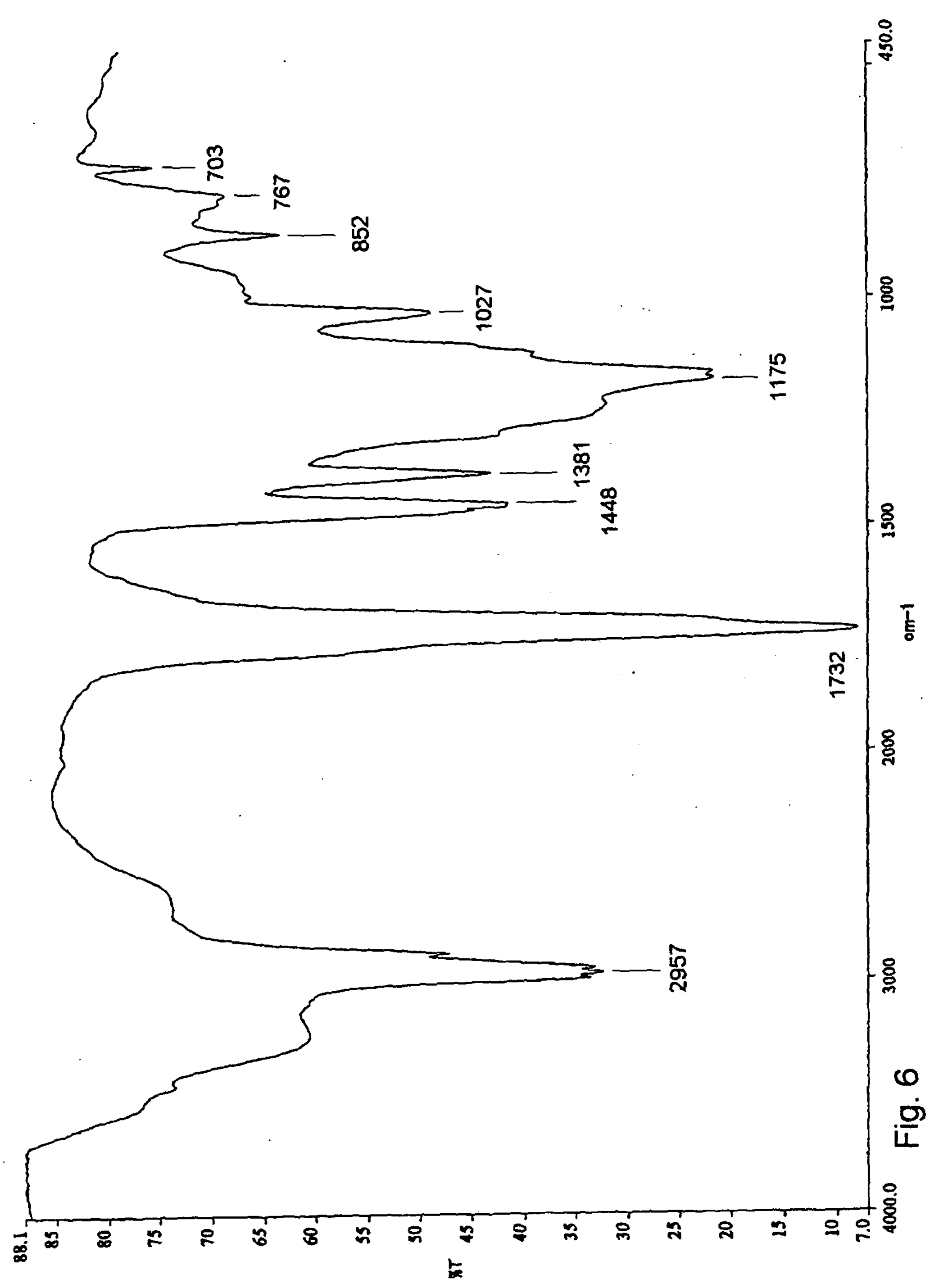
703
767
852
1027
1175
1381
1448
1732
2957
%T
88.1
85
80
75
70
65
60
55
50
45
40
35
30
25
20
15
10
7.0
4000.0
3000
2000
1500
1000
450.0
cm-1

Fig. 6

Fig. 7

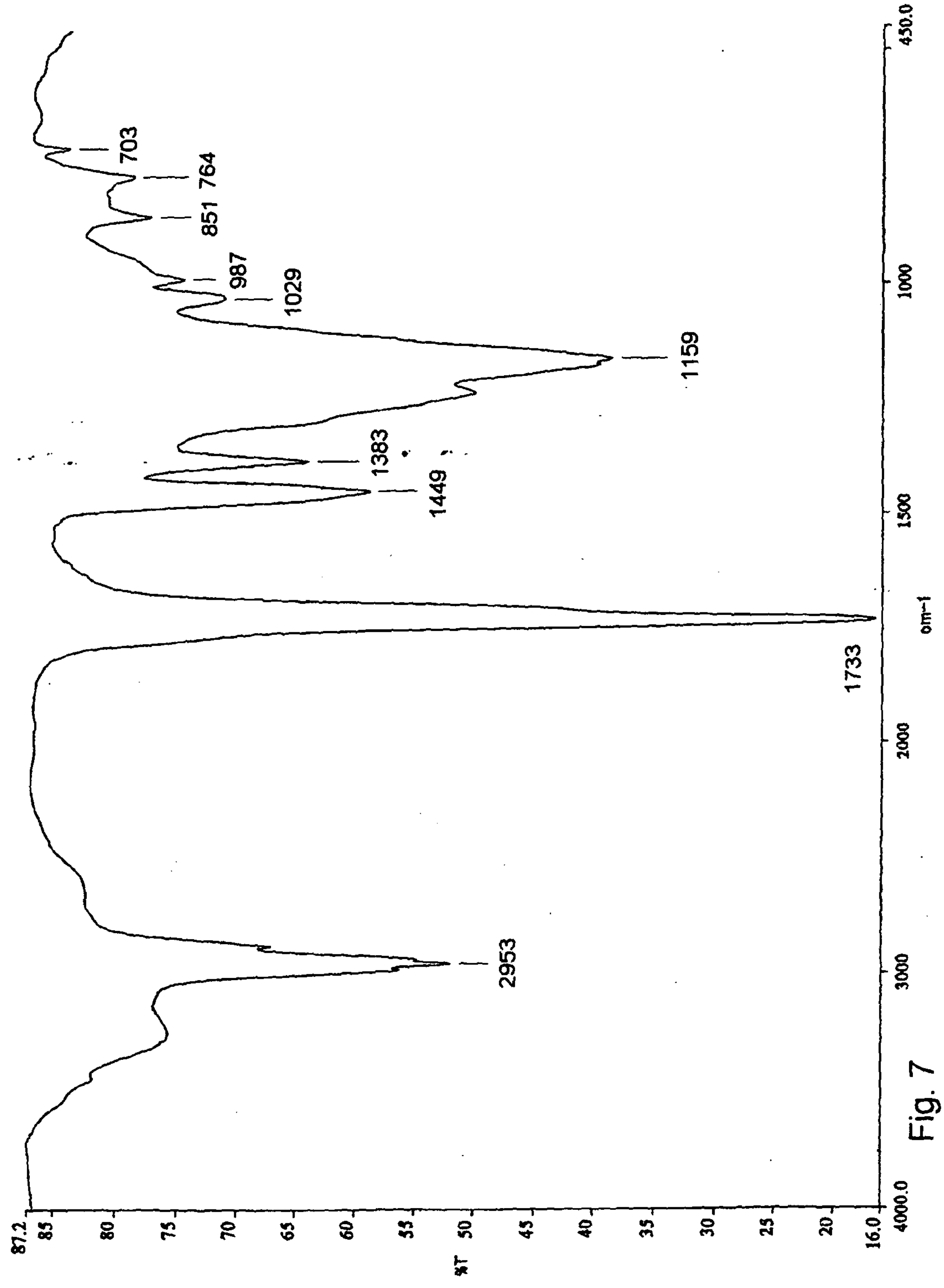
703
764
851
987
1029
1159
1383
1449
1733
2953
Fig. 7
%T
cm-1
87.2
85
80
75
70
65
60
55
50
45
40
35
30
25
20
16.0
4000.0
3000
2000
1500
1000
450.0

Fig. 8

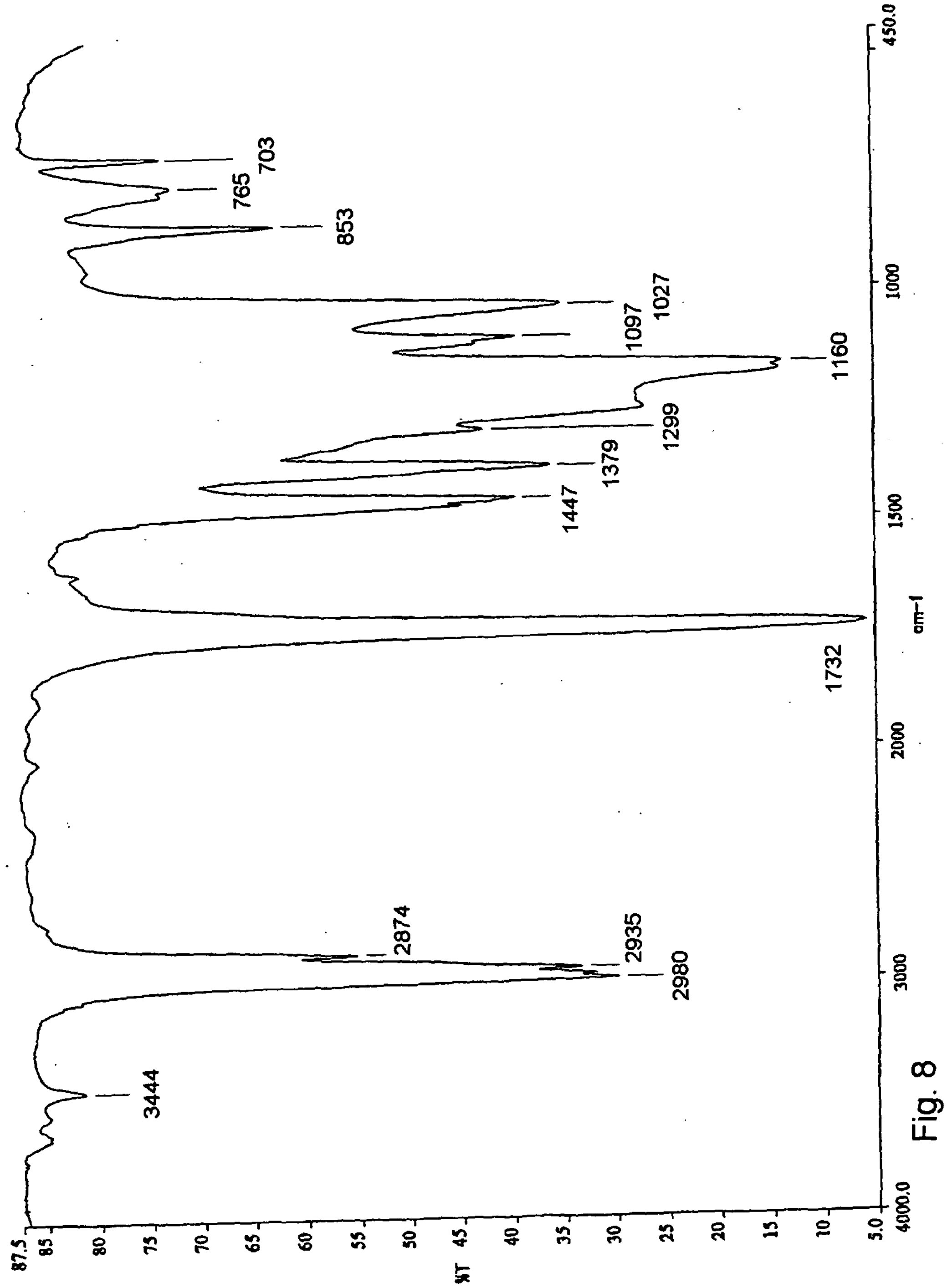

3444
2980
2935
2874
1732
1447
1379
1299
1160
1097
1027
853
765
703
%T
87.5
85
80
75
70
65
60
55
50
45
40
35
30
25
20
15
10
5.0
4000.0
3000
2000
1500
1000
450.0
cm-1


Fig. 8

Fig. 9

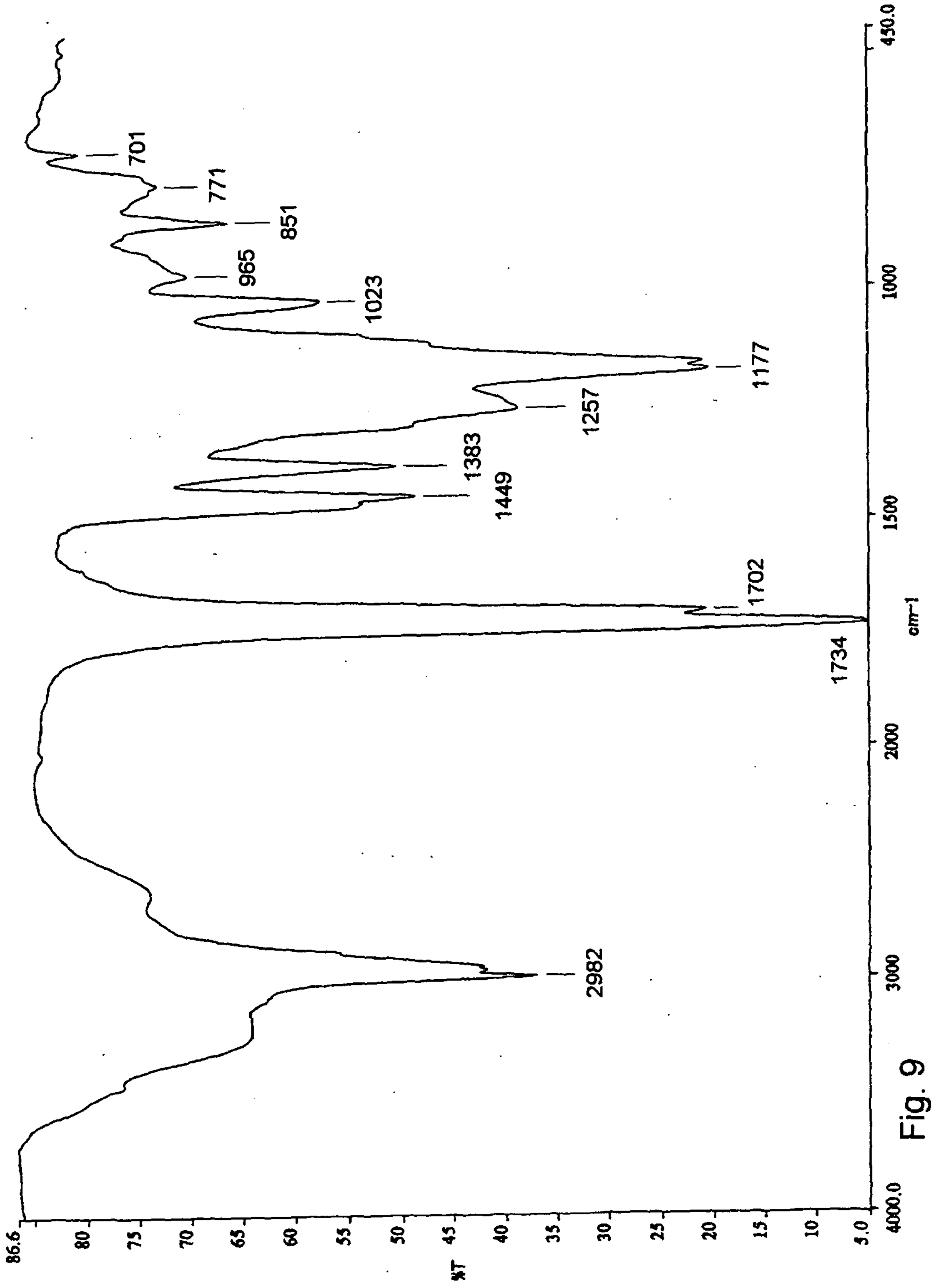
701
771
851
965
1023
1177
1257
1383
1449
1702
1734
2982
%T
86.6
80
75
70
65
60
55
50
45
40
35
30
25
20
15
10
5.0
4000.0
3000
2000
1500
1000
450.0
cm-1
Fig. 9

Fig. 10

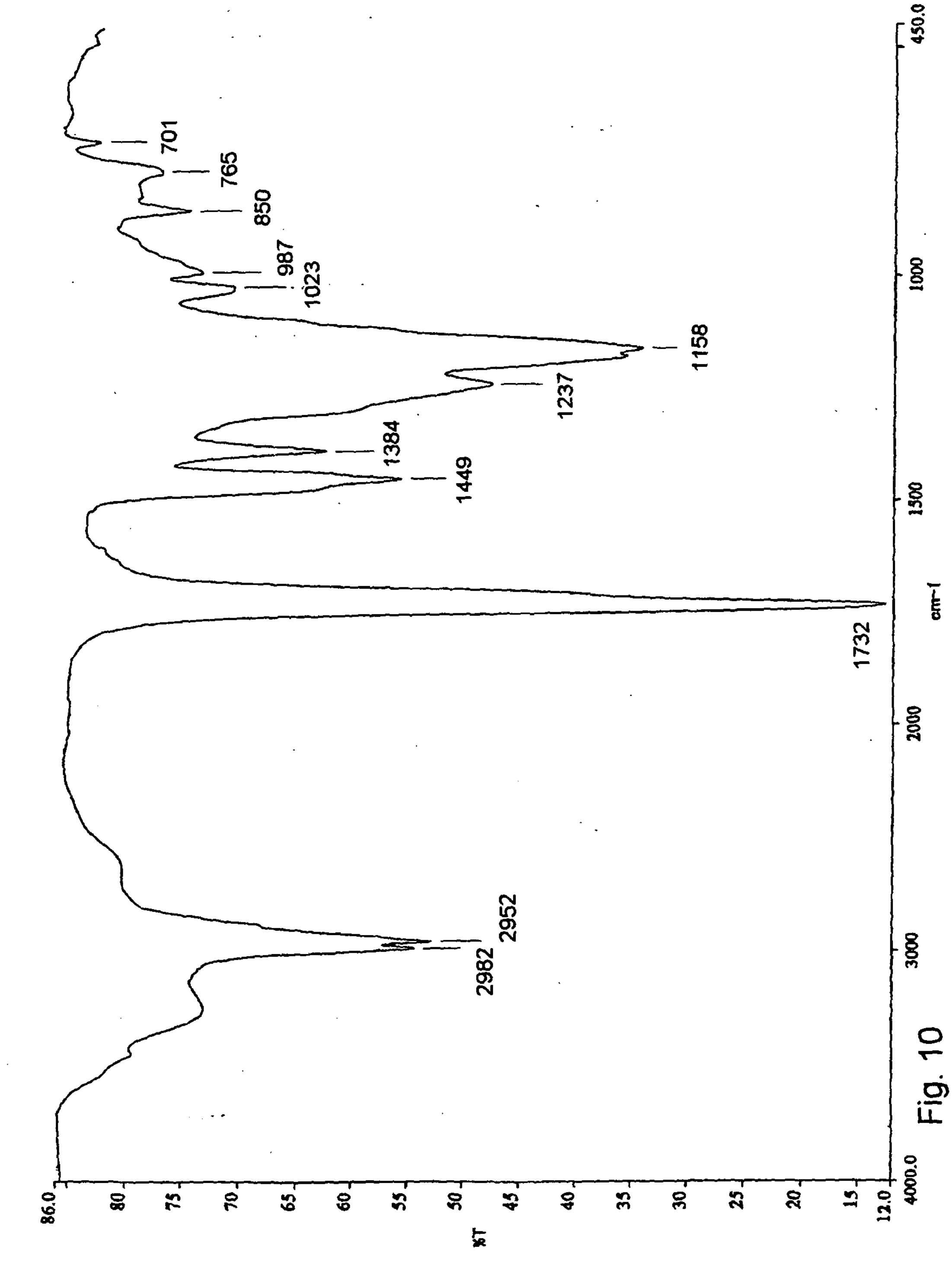

701
765
850
987
1023
1158
1237
1384
1449
1732
2952
2982
cm-1
%T
86.0
80
75
70
65
60
55
50
45
40
35
30
25
20
15
12.0
4000.0
3000
2000
1500
1000
450.0
Fig. 10

Fig. 11

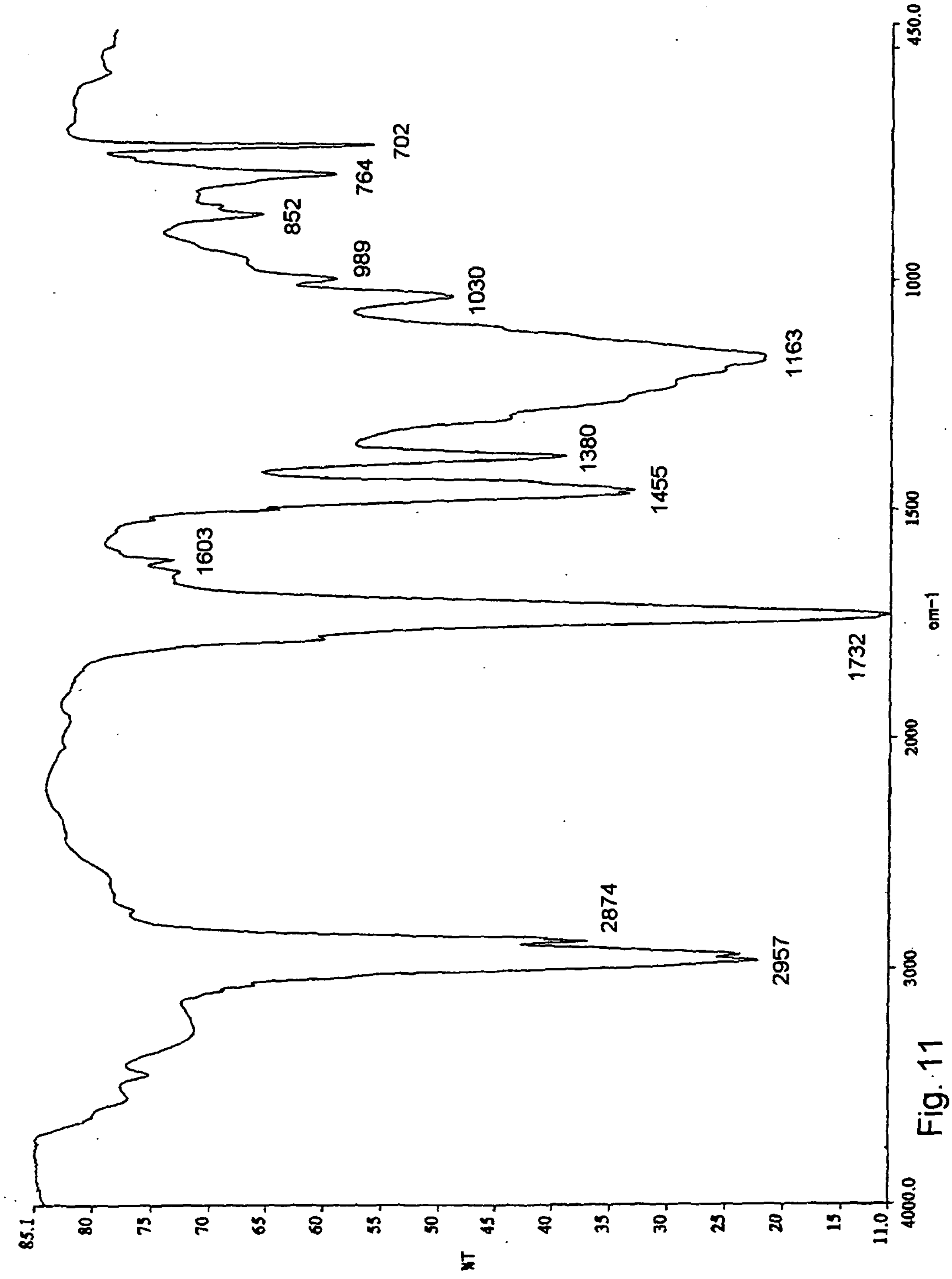

%T
85.1
80
75
70
65
60
55
50
45
40
35
30
25
20
15
11.0
4000.0
3000
2000
1500
1000
450.0
cm-1
2957
2874
1732
1603
1455
1380
1163
1030
989
852
764
702
Fig. 11

Fig. 12

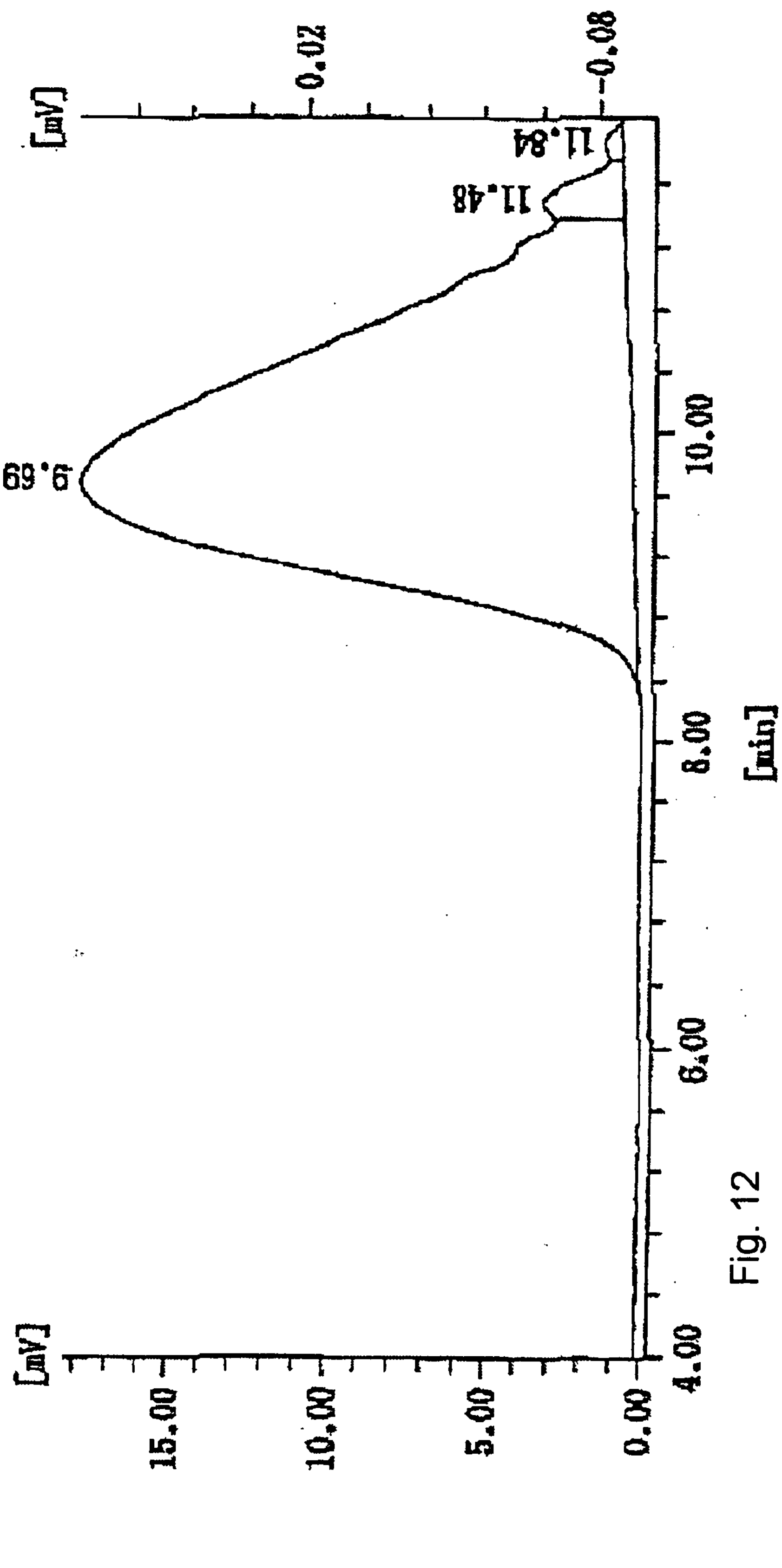
[mV]
15.00
10.00
5.00
0.00
[mV]
0.02
-0.08
4.00
6.00
8.00
10.00
[min]
9.69
11.48
11.84

Fig. 12

Fig. 13

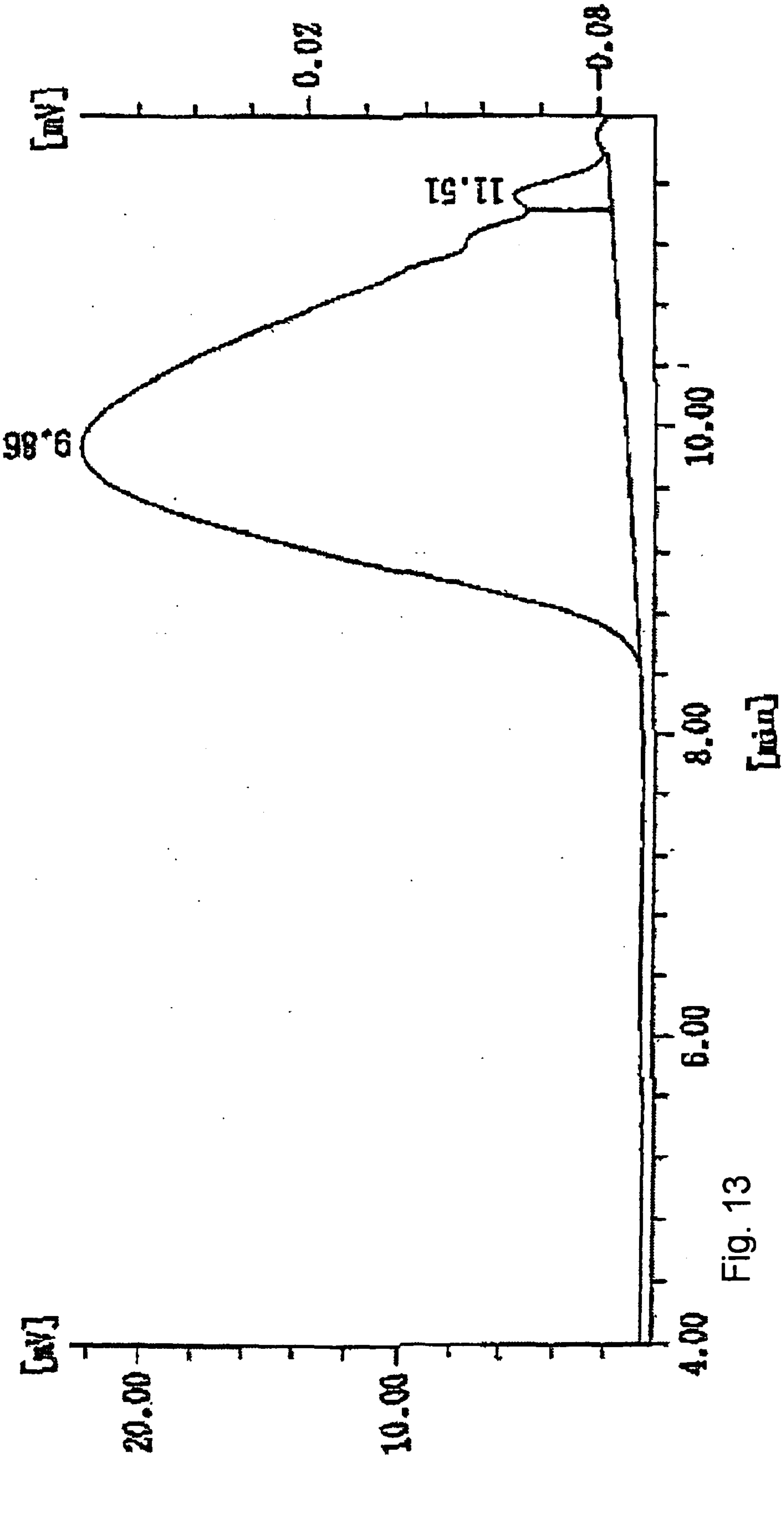


Fig. 13

Fig. 14

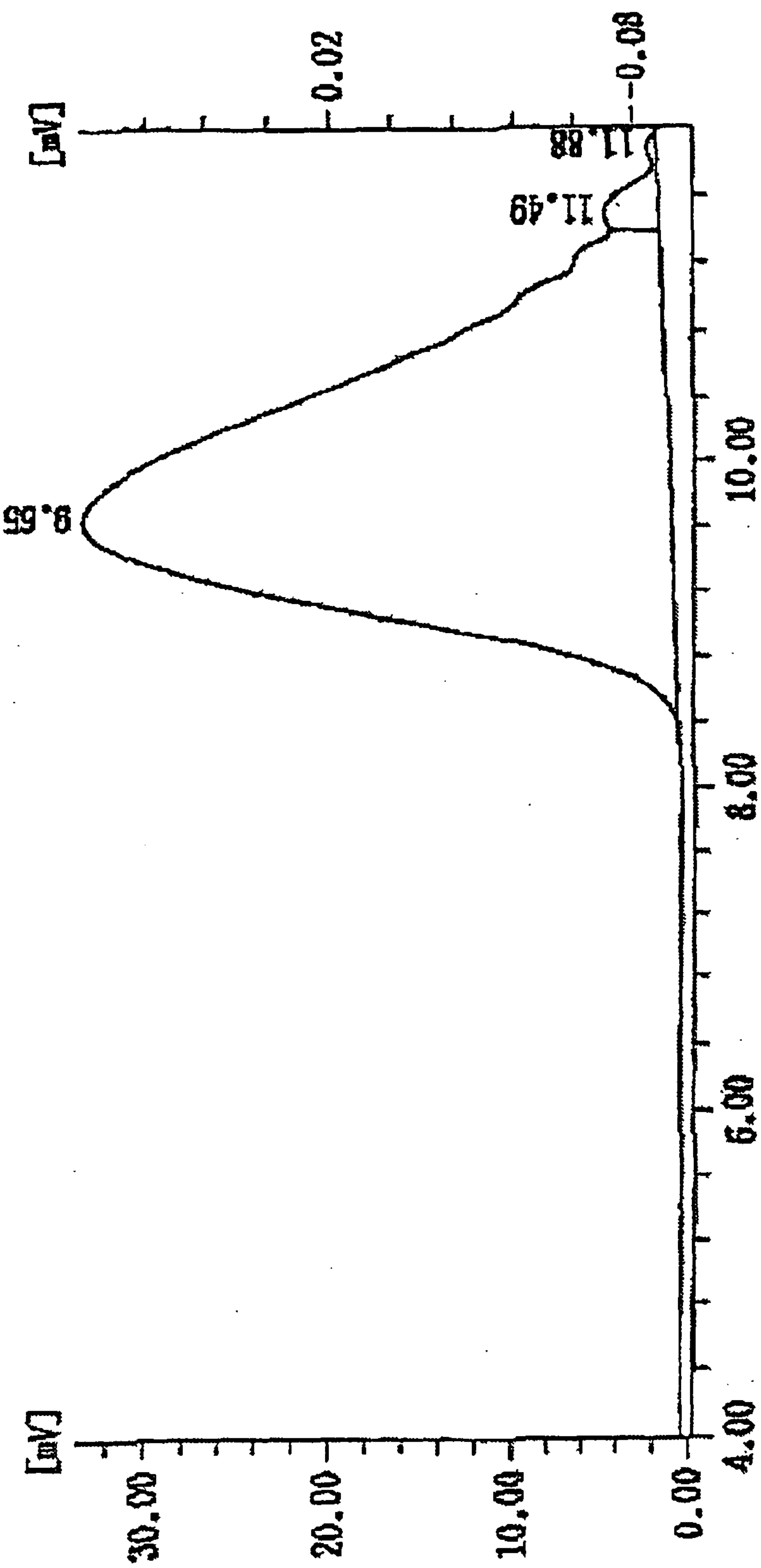
[mV]
30.00
20.00
10.00
0.00
4.00
6.00
8.00
10.00
[min]
9.65
11.49
11.88
[mV]
0.02
-0.08

Fig. 14

Fig. 15

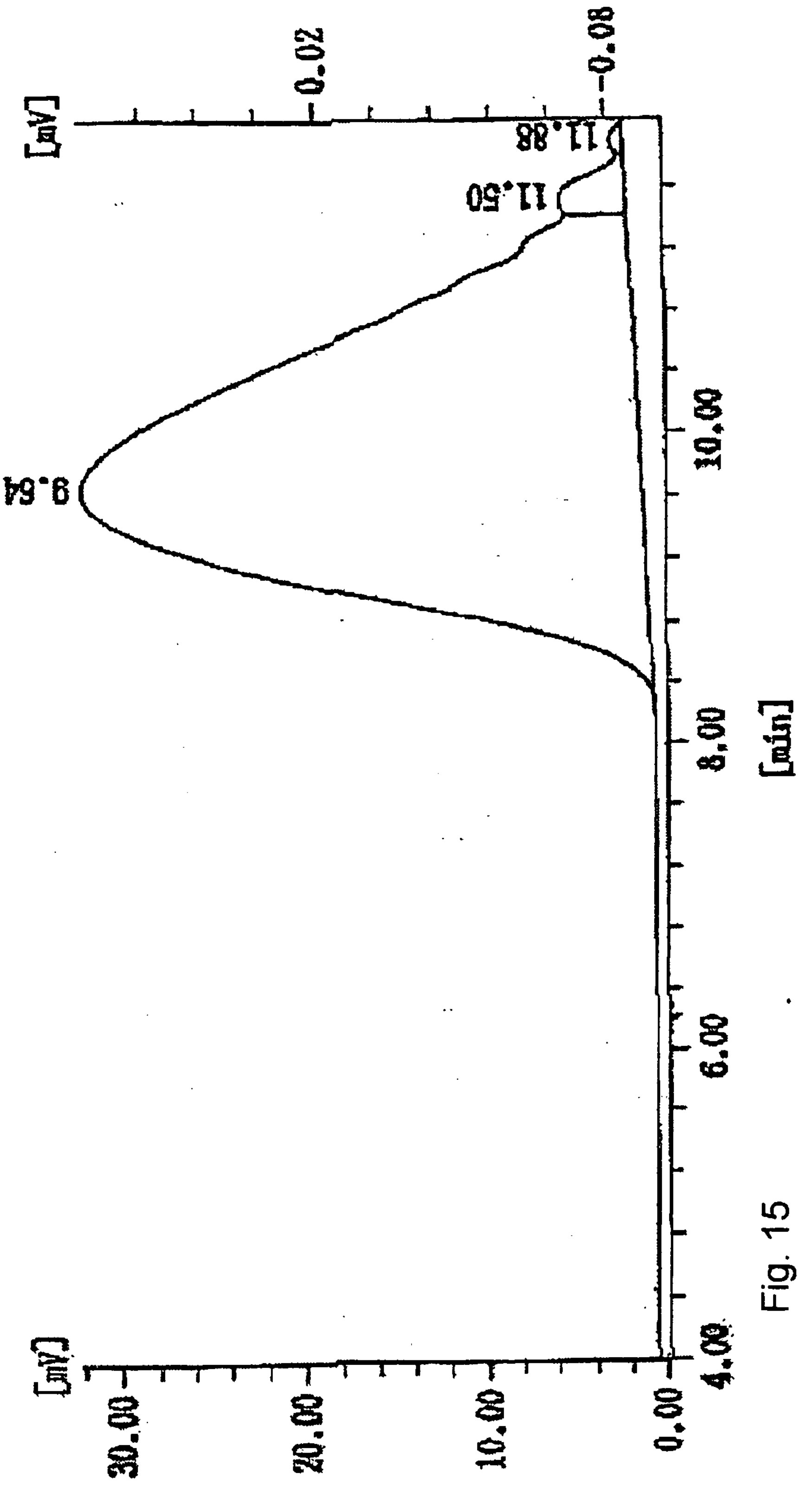
[mV]
30.00
20.00
10.00
0.00
4.00
6.00
8.00
10.00
[min]
9.64
11.50
11.88
0.02
0.08
[mV]

Fig. 15

Fig. 16

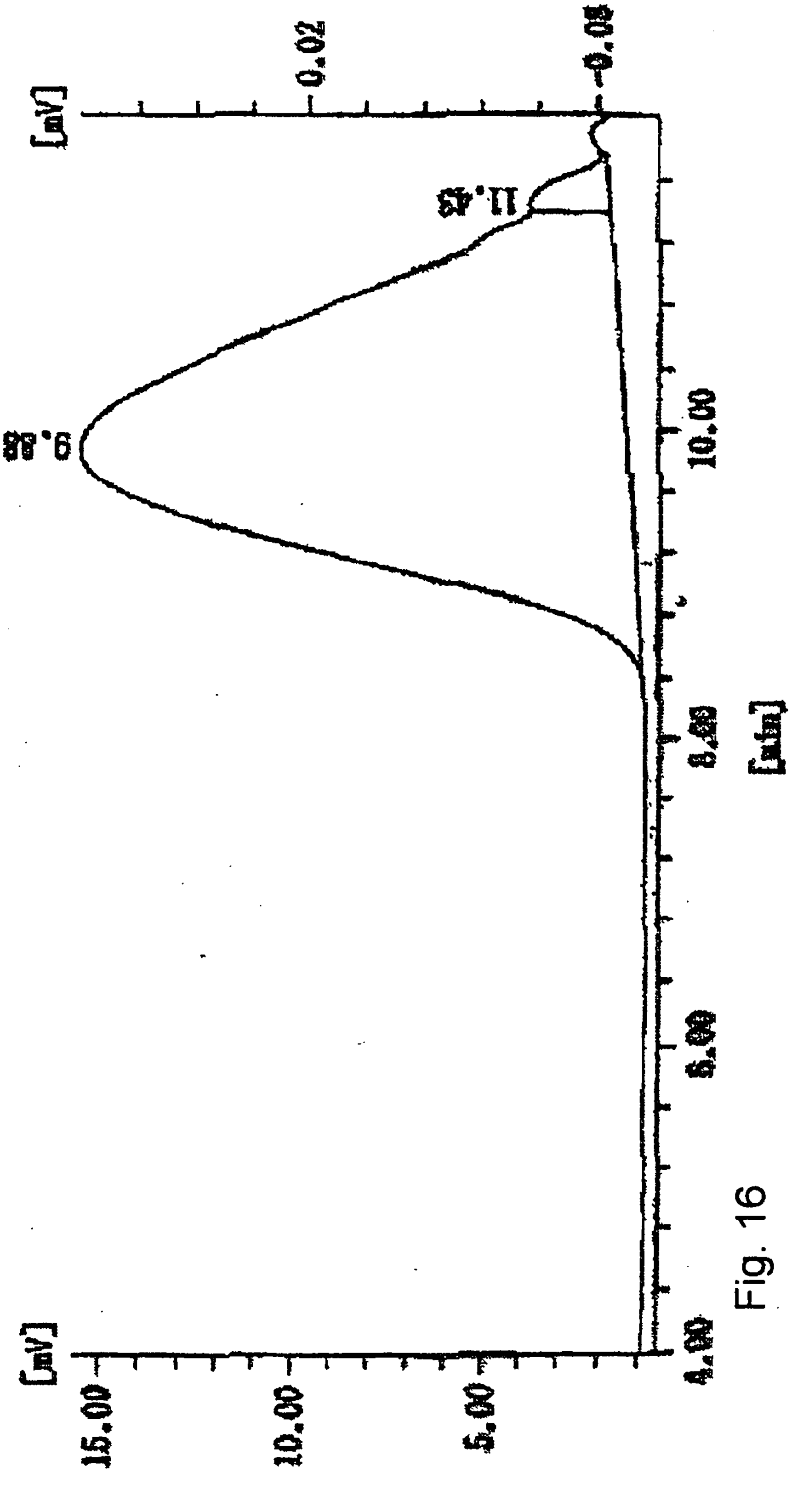


Fig. 16

Fig. 17

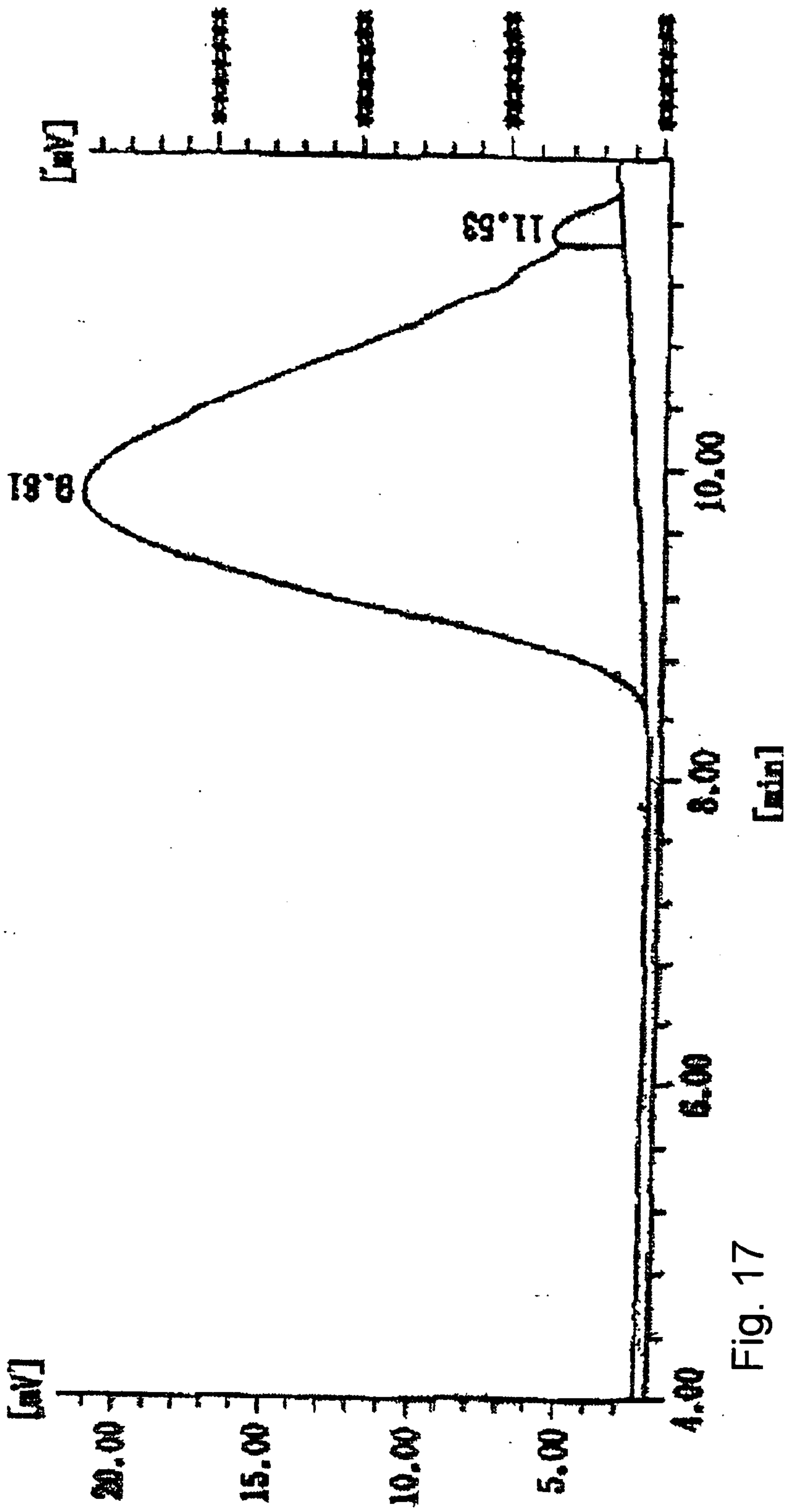


Fig. 17

Fig. 18

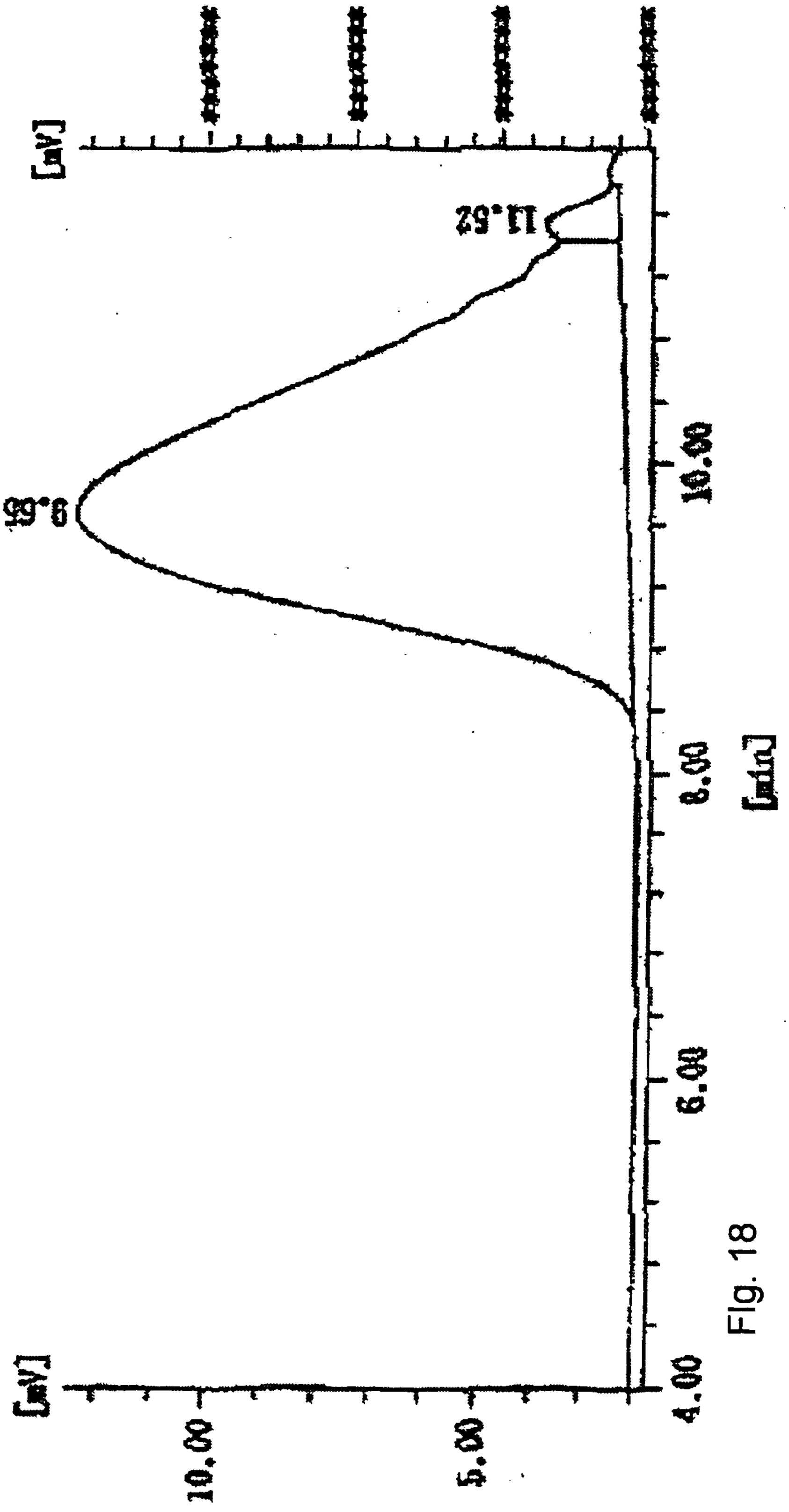


Fig. 18

Fig. 19

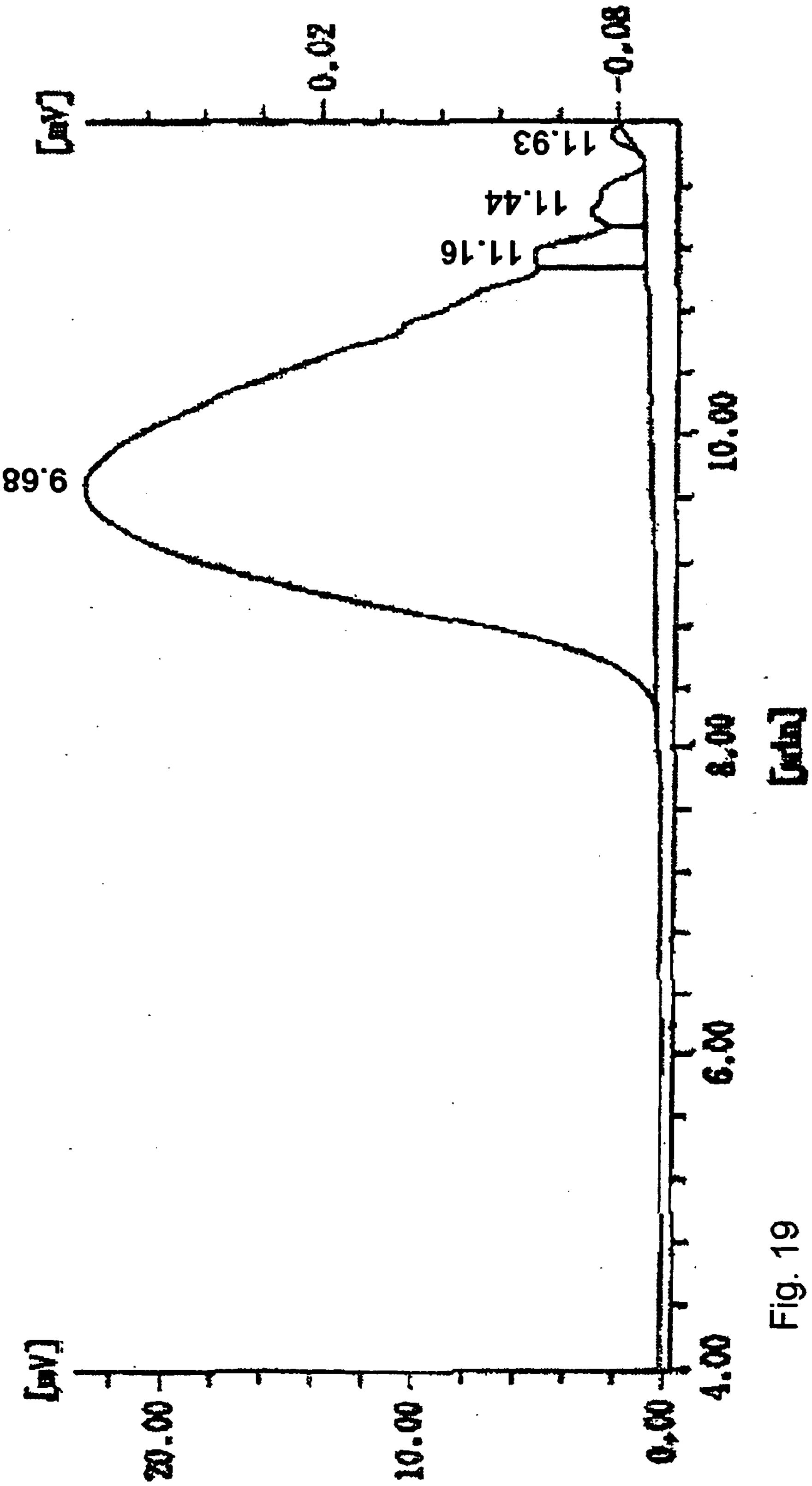
[mV]
20.00
10.00
0.00
4.00
6.00
8.00
10.00
[min]
0.02
-0.08
9.68
11.16
11.44
11.93

Fig. 19

Fig. 20

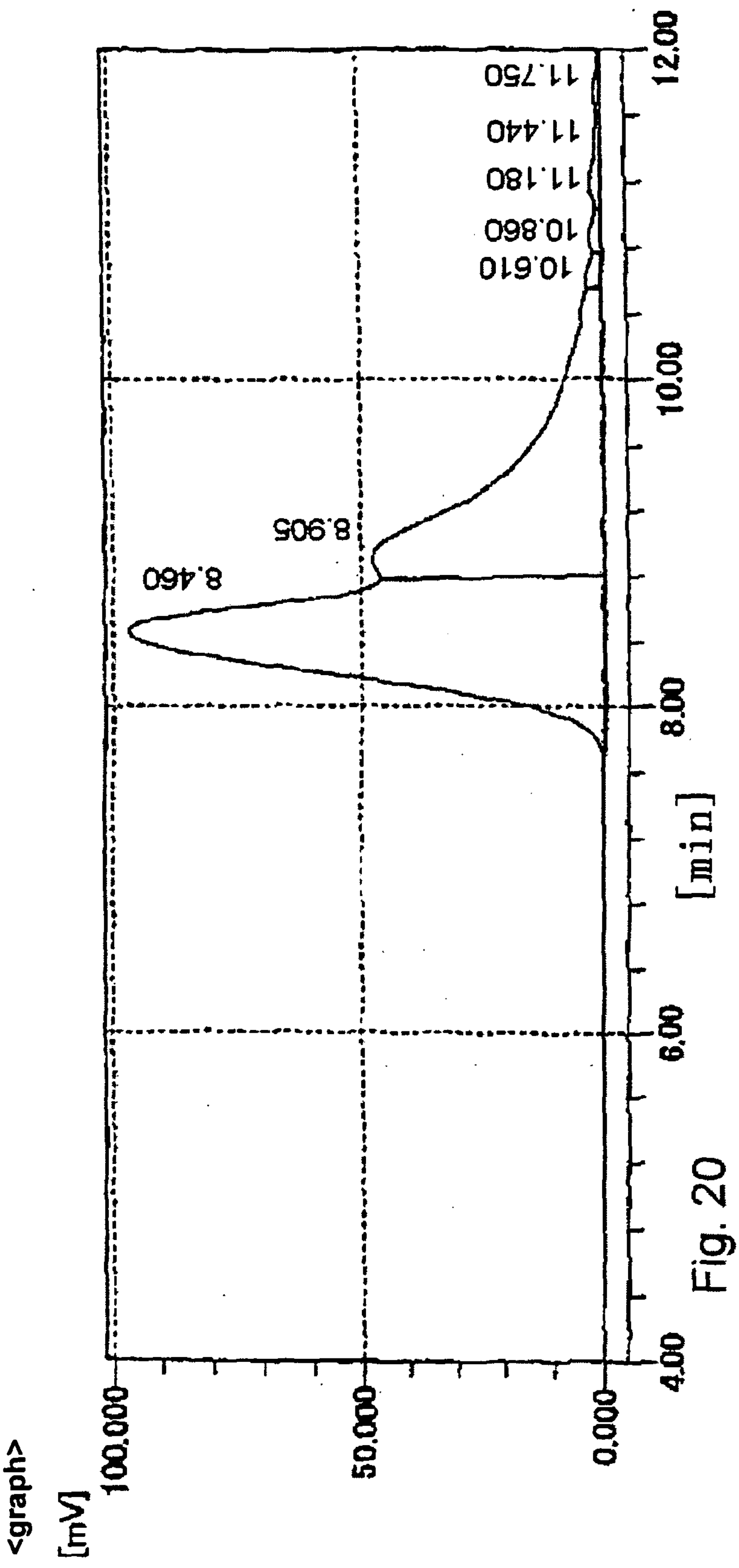
<graph>
[mV]
100.000
50.000
0.000
4.00
6.00
8.00
10.00
12.00
[min]
8.460
8.905
10.610
10.860
11.180
11.440
11.750

Fig. 20

Fig. 21

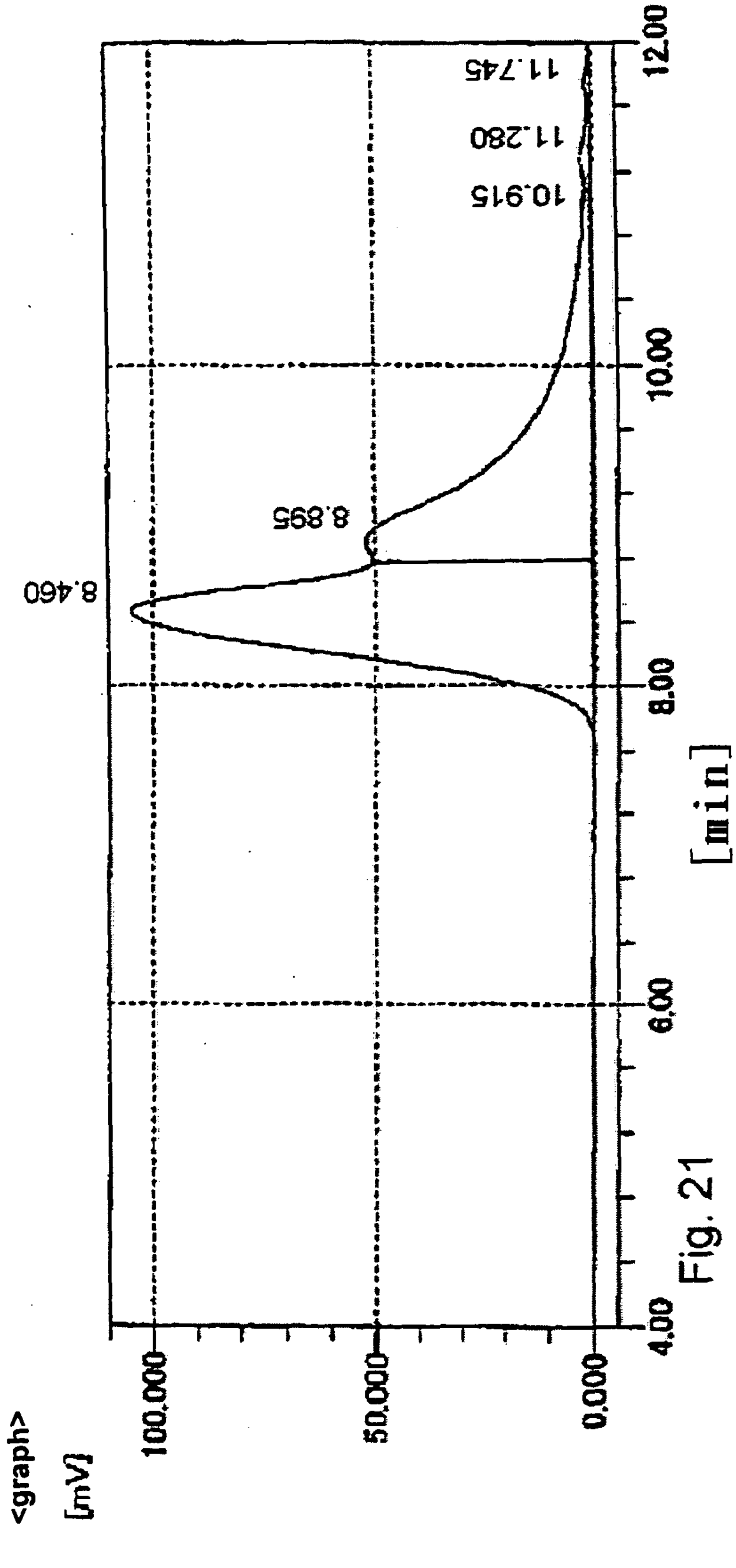
<graph>
[mV]
100.000
50.000
0.000
4.00
6.00
8.00
10.00
12.00
[min]
8.460
8.895
10.915
11.280
11.745
Fig. 21

Fig. 22

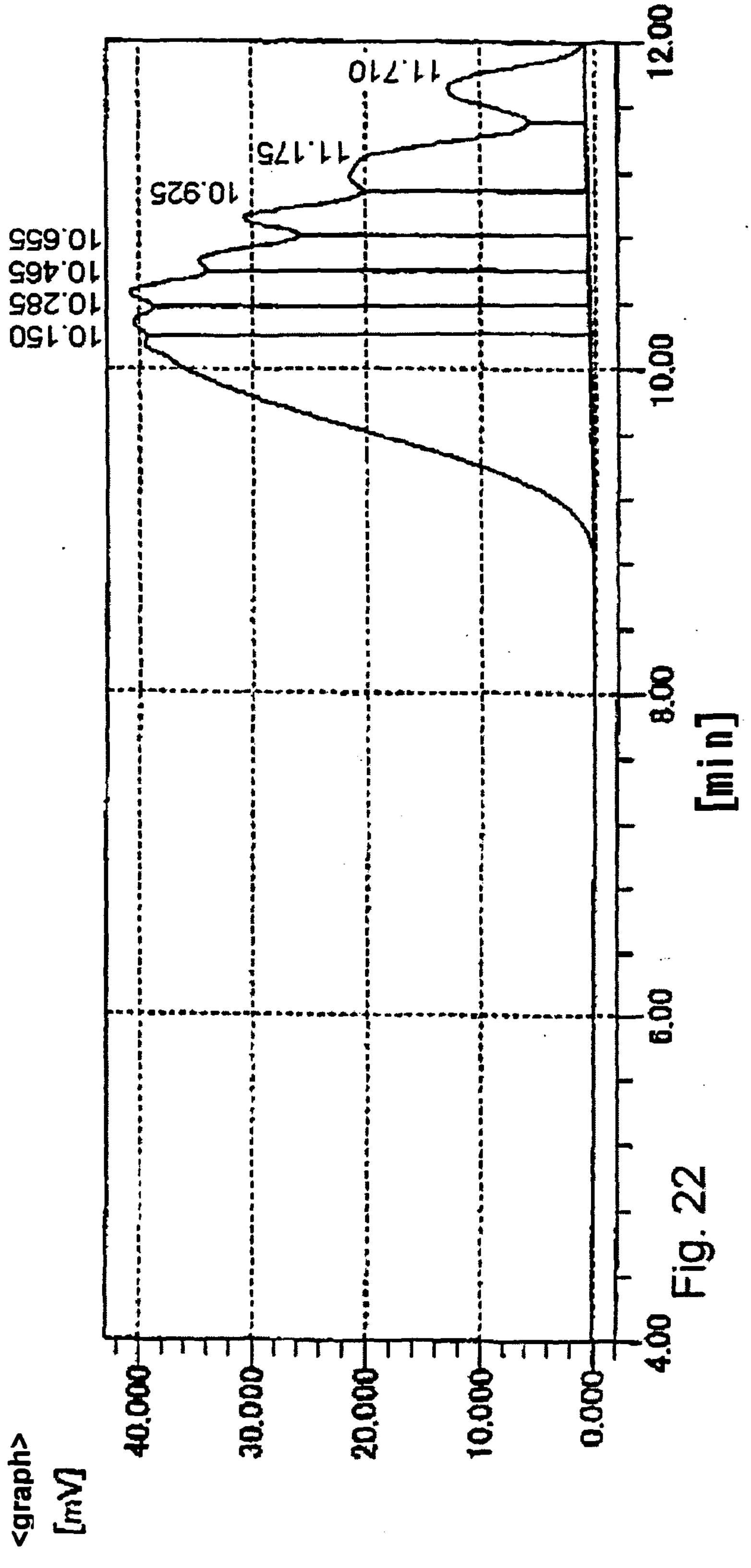
<graph>
[mV]
40.000
30.000
20.000
10.000
0.000
4.00
6.00
8.00
10.00
12.00
[min]
10.150
10.285
10.465
10.655
10.925
11.175
11.710

**INTERNATIONAL SEARCH REPORT**

International application No.
PCT/JP2006/325018

A. CLASSIFICATION OF SUBJECT MATTER
*C09D133/02*(2006.01)i, *B32B27/30*(2006.01)i, *C09D5/16*(2006.01)i, *C09D7/12*(2006.01)i, *C09D135/00*(2006.01)i

According to International Patent Classification (IPC) or to both national classification and IPC

B. FIELDS SEARCHED

Minimum documentation searched (classification system followed by classification symbols)
C09D5/00-201/10, B32B27/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-12630 A (Mitsubishi Rayon Co., Ltd.), 15 January, 2002 (15.01.02), Claims; Par. Nos. [0019], [0031], [0037], [0041]; examples & EP 1167398 B1 & CN 1511909 A & US 6727304 B2 | 1-71 |
| A | JP 2001-11364 A (Kansai Paint Co., Ltd.), 16 January, 2001 (16.01.01), Par. No. [0002] (Family: none) | 1-71 |
| A | JP 7-11173 A (Hitachi Chemical Co., Ltd.), 13 January, 1995 (13.01.95), Claims; Par. No. [0019]; examples (Family: none) | 1-71 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 March, 2007 (13.03.07) | 20 March, 2007 (20.03.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/325018

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-109729 A (Kansai Paint Co., Ltd.), 18 April, 2000 (18.04.00), Claims; Par. No. [0039]; examples (Family: none) | 1-71 |
| A | JP 2002-241676 A (Nippon Paint Co., Ltd.), 28 August, 2002 (28.08.02), Claims; Par. No. [0001]; examples & EP 1138725 A1 & US 2004/105837 A1 & CN 1318602 A | 1-71 |
| A | JP 11-323207 A (Chugoku Marine Paints, Ltd.), 26 November, 1999 (26.11.99), Claims; examples (Family: none) | 1-71 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5232928 B
- JP H2196869 B
- JP 3040094 B
- JP S62501293 B
- JP 2002241676 A
- JP 2005179345 A